(19) **Europäisches Patentamt**
**European Patent Office**
**Office européen des brevets**

(11) **EP 2 144 314 B1**

(12) **EUROPEAN PATENT SPECIFICATION**

(45) Date of publication and mention
of the grant of the patent:
**28.01.2015 Bulletin 2015/05**

(51) Int Cl.:
*H01M 4/58* (2010.01)     *H01M 4/02* (2006.01)
*C01G 53/00* (2006.01)     *H01M 10/05* (2010.01)

(21) Application number: **09168524.8**

(22) Date of filing: **18.04.2002**

(54) **Positive active materials and process for producing the same, positive electrode for non-aqueous electrolyte secondary battery, and non-aqueous electrolyte secondary battery**

Positive aktive Materialien und Herstellungsverfahren dafür, positive Elektrode für eine Sekundärbatterie mit nichtwässrigem Elektrolyten und Sekundärbatterie mit nichtwässrigem Elektrolyten damit

Matériaux actifs positifs et leur procédé de production, électrode positive pour batterie secondaire électrolyte non aqueuse, et batterie secondaire électrolyte non aqueuse

(84) Designated Contracting States:
**DE FR GB**

(30) Priority: **20.04.2001 JP 2001121901**
**23.04.2001 JP 2001124842**
**03.08.2001 JP 2001237084**
**20.08.2001 JP 2001249578**
**21.09.2001 JP 2001288831**
**03.10.2001 JP 2001307173**
**20.11.2001 JP 2001354436**

(43) Date of publication of application:
**13.01.2010 Bulletin 2010/02**

(62) Document number(s) of the earlier application(s) in accordance with Art. 76 EPC:
**02722703.2 / 1 391 950**

(73) Proprietor: **GS Yuasa International Ltd.**
**Kisshoin**
**Minami-ku**
**Kyoto (JP)**

(72) Inventors:
• **Shiozaki, Ryuji**
**Kyoto (JP)**
• **Okabe, Kazuya**
**Kyoto (JP)**
• **Nukuda, Toshiyuki**
**Kyoto (JP)**
• **Fujii, Akihiro**
**Kyoto (JP)**
• **Inamasu, Tokuo**
**Kyoto (JP)**
• **Iguchi, Takaaki**
**Kyoto (JP)**
• **Kojima, Toshiaki**
**Kyoto (JP)**
• **Watari, Takashi**
**Kyoto (JP)**
• **Yufu, Hiroshi**
**Kyoto (JP)**

(74) Representative: **Turner, Matthew Lawrence**
**Miller Sturt Kenyon**
**9 John Street**
**London WC1N 2ES (GB)**

(56) References cited:
**EP-A- 0 885 845     EP-A- 1 372 202**
**EP-A1- 0 872 450**

Remarks:
The file contains technical information submitted after the application was filed and not included in this specification

**Description**

<Technical Field>

The present invention relates to positive active materials and a process for producing the same, a positive electrode for non-aqueous electrolyte secondary batteries, and a non-aqueous electrolyte secondary battery.

<Background Art>

Non-aqueous electrolyte secondary batteries such as lithium secondary batteries are extensively used as power sources for small portable terminals, mobile communication apparatus, and the like because these batteries show a high energy density and have a high voltage. The positive active materials for lithium secondary batteries are required to stably retain their crystal structure even when subjected to repetitions of lithium insertion/extraction and to have a large electrochemical operating capacity.

Presently, a Li-Co composite oxide (hereinafter referred to as $LiCoO_2$) having an $\alpha$-$NaFeO_2$ structure is mainly used as a positive active material for lithium secondary batteries. This is because $LiCoO_2$ is capable of stably doping/undoping lithium ions at an operating potential as high as 4 V and stably retains its crystal structure even in repetitions of lithium ion dope/undope. $LiCoO_2$ hence shows a high energy density and simultaneously attains high charge/discharge cycle performance.

However, since cobalt, which is a constituent element for $LiCoO_2$, is a scare metal and expensive, many investigations have been made on use of a Li-Ni composite oxide (hereinafter referred to as $LiNiO_2$) as a substitute for $LiCoO_2$. $LiNiO_2$ has an $\alpha$-$NaFeO_2$ structure like $LiCoO_2$ and has an operating potential width close to that of $LiCoO_2$. $LiNiO_2$ is hence expected to attain high electrochemical performance. An investigation on the relationship between lithium extraction amount and crystal lattice as determined by X-ray powder diffractometry is reported in Ohzuku, O., Ueda, A., and Nagayama, M., Electrochemistry and Structural Chemistry of LiNiO2 (R3/m) for 4 Volt Secondary Lithium Batteries, J. Electrochem. Soc., Vol.140, No.7, 1993, pp.1862-1870. It has been reported therein that even when lithium is extracted from the positive electrode, the layer-to-layer spacing is stably maintained in a charge capacity range of up to 200 mAh/g. Practically, however, there has been a problem that repetitions of charge/discharge at such a depth result in an abrupt decrease in discharge capacity.

A technique for eliminating that problem is being extensively investigated which comprises displacing part of the nickel sites in a $LiNiO_2$ structure by an element of a different kind in a solid solution state. For example, JP-A-9-231973 discloses a technique in which part of the nickel sites are displaced by cobalt, aluminum, or another element in a solid solution state to thereby improve charge/discharge characteristics and thermal stability. However, the composite oxide obtained by this technique has still not been always sufficient in charge/discharge cycle performance as compared with $LiCoO_2$, although the effect of improving charge/discharge cycle performance and thermal stability is observed.

Furthermore, many investigations have been made on techniques concerning a Li-Mn-Ni composite oxide obtained by displacing part of the nickel sites by manganese in a solid solution state and a Li-Mn-Ni-Co composite oxide obtained by displacing part of the nickel sites by manganese and cobalt in a solid solution state.

The techniques concerning the Li-Mn-Ni composite oxide are reported, for example, in U.S. Patent 5,626,635 and Japanese Patents 3,008,793, 3,047,693, and 3,064,655. However, investigations made by the present inventors revealed that even with any of these techniques, there has been a problem that not only the initial capacity at around 4 V is considerably lower than that attained with $LiNiO_2$ but also charge/discharge cycle performance also is insufficient.

With respect to the techniques concerning the Li-Mn-Ni-Co composite oxide, there is a report in, e.g., JP-A-2000-58068, JP-A-2000-277151, and JP-A-10-255846 that due to the presence of cobalt, the composite oxide shows a higher energy density than the Li-Mn-Ni composite oxide. However, investigations made by the present inventors revealed that there has been a problem that any of the active materials produced by the methods described in these reports is still insufficient in cycle performance.

The inventors made intensive investigations on Li-Mn-Ni composite oxides (especially Li-Mn-Ni-Co composite oxides) as positive active materials for lithium secondary batteries. In these investigations, the proportions of manganese element, nickel element, and cobalt element, which all are located at 3 b sites in $Li_aMn_bNi_cCo_dO_2$ structures, in the composition (hereinafter, these proportions are often referred to simply as "Mn, Ni, and Co proportions") and influences thereof on electrochemical characteristics were investigated in detail.

First, an increase in Ni proportion (Ni/(Mn+Ni+Co); provided that Mn+Ni+Co=1) can be expected to bring about an increased discharge capacity. Documents in which the same effect is expected in a range where the Ni proportion is 0.5 or higher include, for example, U.S. Patent 60,040,090, JP-A-2000-260480, JP-A-2000-260479, JP-A-2000-268878, JP-A-2000-353525, JP-A-10-255846, and JP-A-8-37007. However, as a result of investigations made by the inventors, the active materials having compositions within the range shown therein still had poor thermal stability during charge and poor charge/discharge cycle performance, although they attained an undoubtedly high initial discharge capacity.

On the other hand, with respect to compositions in which the Mn proportion (Mn/(Mn+Ni+Co); provided that Mn+Ni+Co=1) exceeds 0.5, Li-Mn-Ni systems are reported in JP-A-2000-223157 and JP-A-2000-294242 and Li-Mn-Ni-Co systems are reported in JP-A-2000-149942. These reports each relate to application of $LiMnO_2$ (monoclinic or rhombic) to a positive active material. However, these composite oxides have an operating potential range shifted to the lower-potential side unlike $LiCoO_2$ and the like and cannot be expected to attain a capacity at around 4 V, as pointed out in, e.g., Croguennec L; Deniard P; Brec R; Biensan P; and Broussely M. Electrochemical behavior of orthorhombic LiMnO2 : influence of the grain size and cationic disorder, Solid State Ionics. Vol.89, No.1/2, 1996, pp.127-137. In addition, there also is a problem that transition to a spinel oxide occurs during charge/discharge cycles to cause capacity deterioration, as pointed out in that document. As described above, there has been a problem that in regions where the Mn proportion exceeds 0.5, the $\alpha$-NaFeO$_2$ crystal structure is unstable and the crystal phase yielded is electrochemically inactive.

Lithium secondary batteries having an operating voltage on the order of 4 V presently employ as the positive active material a lithium-transition metal composite oxide capable of releasing/occluding lithium ions according to charge/discharge, such as those described above, and further employ as the negative-electrode material a carbonaceous material capable of doping/undoping lithium ions according to charge/discharge.

However, such positive active materials and negative-electrode materials fluctuate in crystal lattice spacing and in a-axis, c-axis, and other lattice constants depending on the dope or undope of lithium ions. There is hence a problem that as the crystal lattice volume repeatedly changes with charge/discharge, the crystal structure becomes apt to be broken due to the crystal lattice distortions.

The carbonaceous materials in use as negative-electrode materials are known to undergo an increase in crystal lattice volume upon charge. On the other hand, the rhombohedral $LiCoO_2$, which is presently in frequent use as a positive active material, also is known to undergo an increase in crystal lattice volume upon charge. Because of this, in a battery employing these materials in combination, both electrodes expand during charge. In this case, when a metallic battery can or the like is used as the battery case, the battery case expands due to the electrode expansion during charge and does not recover from the expanded state even upon electrode shrinkage during discharge. Consequently, the pressure which has been applied to the electrodes decreases to cause a decrease in adhesion between each current collector and the active material, decrease in electron-conducting properties, active-material peeling, etc. These have been causative of a decrease in battery performance.

The invention has been achieved in view of the problems described above. An object thereof is to provide positive active materials with which a non-aqueous electrolyte secondary battery having a high energy density and excellent charge/discharge cycle performance can be produced. Another object is to provide a process for producing the active materials. A still other object is to provide a positive electrode for non-aqueous electrolyte secondary batteries. A further object is to provide a non-aqueous electrolyte secondary battery having a high energy density and excellent charge/discharge cycle performance.

<Disclosure of the Invention>

As described above, in regions in which the Mn, Ni, and Co proportions respectively are 0.5 or higher, satisfactory battery performance has not been attained even in the case of forms having a layer crystal structure as in $IsiNiO_2$ and $LiCoO_2$. Under these circumstances, the present inventors made detailed investigations while directing attention to $LiMn_{0.5}Ni_{0.5}O_2$, which has a relatively excellent energy density per unit weight, and to active materials having compositions in a region in which the Mn, Ni, and Co proportions each are below 0.5. As a result, they have succeeded in obtaining a non-aqueous electrolyte secondary battery combining a high energy density and excellent charge/discharge cycle performance by using a positive active material comprising a composite oxide having a specific composition.

Li-Mn-Ni composite oxides heretofore in use have a problem that their energy density per unit volume is low because these composite oxides have a large crystal lattice volume as compared with other layer oxides such as $LiCoO_2$. A technique which may be usable for improving energy density is to heighten the electrode density by applying an external force with a pressing machine or the like. However, investigations made by the inventors have revealed that Li-Mn-Ni composite oxides have high mechanical strength and it is generally difficult to improve the electrode density. On the other hand, since Li-Mn-Ni composite oxides have such a property that the rate of discharge, i.e., lithium incorporation, is limited as compared with the rate of charge, i.e., lithium extraction, there has been a problem that when the electrode density is considerably high, high-rate discharge performance considerably decreases due to insufficient permeation of a liquid electrolyte. The inventors hence regarded improvements of properties of the Li-Mn-Ni composite oxides as an important subject, and made investigations in order to attain a high energy density without impairing battery performance.

Furthermore, the technique of producing $LiMn_{0.5}Ni_{0.5}O_2$ from raw materials by the neutralization method which has been known as stated above is apt to yield a coprecipitated composite which is lowly crystalline (has a large total pore volume) and has a low density probably because many grain boundaries and many microcracks have been developed in the coprecipitated composite. Even when a lithium source, e.g., LiOH, is added to this coprecipitated composite and the resultant mixture is calcined, a lithium-manganese-nickel composite oxide having a high density is less apt to be obtained.

The inventors hence added an alkali compound, a reducing agent, and a complexing agent to an aqueous solution prepared by dissolving a manganese compound and a nickel compound in water and regulated the pH of the resultant mixture to a given value, as known in processes for producing high-density nickel hydroxide for use in nickel/metal-hydride batteries. As a result, a coprecipitated composite inhibited from having voids in inner parts of the particles could be produced. It was further found that adding a lithium source to this coprecipitated composite and calcining the resultant mixture give high-density $LiMn_{0.5}Ni_{0.5}O_2$ having high crystallinity (having a small total pore volume).

Furthermore, the inventors directed attention to $LiMn_{0.45}Ni_{0.45}Co_{0.10}O_2$ and made intensive investigations on conditions for synthesizing powders to be calcined, conditions for calcining, and the kinds and proportions of metallic elements of different kinds to be added besides lithium, manganese, nickel, and cobalt. As a result, it was found that even when composite oxides have the same composition, they can differ considerably in the crystal structure of the crystal powder obtained, depending on the conditions for synthesizing the powders to be calcined and on the calcining conditions. Some crystal forms were found to be effective in greatly improving discharge capacity and charge/discharge cycle performance.

It was further found that when a composite oxide with a specific composition and specific properties produced by a specific process developed based on those findings is used as a positive active material, then a non-aqueous electrolyte secondary battery having even better battery performance can be obtained. The invention has been thus achieved.

The inventors have still further found that when the specific composite oxide described above is used in combination with a lithium-cobalt oxide, high-rate discharge performance can be enhanced.

Moreover, the inventors have found that when the specific composite oxide described above is used in combination with a lithium-manganese compound having a spinel structure and a specific composition, then a battery can be obtained which combines low-temperature high-rate discharge performance and storage performance on a high level.

Namely, the technical constitutions of the invention and the effects and advantages thereof are as hollows. It is, however, noted that the explanations on the mechanisms of the effects include presumptions and whether these explanations on the mechanisms of the effects are correct or not does not limit the scope of the invention.

According to an aspect of the present invention, there is provided a positive active material as defined in claim 1.

More specifically, the composite oxide in the constitution described above is one obtained by displacing about a half of the nickel sites in $LiNiO_2$ by manganese in a solid solution state. It is thought that in this constitution, resonance stabilization occurs between nickel and manganese through oxygen ions serving as a ligand and this stabilizes the layer structure.

Furthermore, by forming a solid solution of $LiCoO_2$ in that composite oxide, the effect of kneeping the crystal lattice in a compacted state during charge and thereby stably maintaining a small lattice volume is produced. Actually, the inventors ascertained that although the unit crystal lattice of $LiNi_{0.5}Mn_{0.5}O_2$, which is a hexagonal lattice, has a lattice constant a of 2.894, lattice constant c of 14.32, and crystal lattice volume V of 0.1039 $nm^3$, displacement of nickel and manganese by cobalt in a solid solution state results in a decrease in a-axis lattice constant and a decrease in c-axis lattice constant according to the cobalt amount. In $LiNi_{0.333}Mn_{0.333}Co_{0.333}O_2$, the lattice constant a, lattice constant c, and crystal lattice volume V were ascertained to have decreased to 2.865, 14.25, and 0.1013 $nm^3$, respectively.

On the other hand, when z'=0 in the composite formula $Li_wMn_{x'}Ni_{y'}Co_{z'}O_2$, the crystal lattice volume of this composite oxide in a charge termination state is considerably smaller than that in a discharge termination state. However, when z'>0, the range over which the crystal lattice volume changes with charge/discharge can be narrowed although this composite oxide has smaller values of crystal lattice volume. As a result, since the changes in crystal structure with charge/discharge are small, charge/discharge cycle performance can be improved.

The effect described above is thought to be produced on the same principle as in the case in which when part of the nickel in $LiNiO_2$ is displaced by cobalt in a solid solution state, the region in which nickel undergoes a change from hexagonal to monoclinic upon charge is narrowed and this composite oxide can retain the hexagonal state in most of charge/discharge. Consequently, the cobalt displacement amount desirably is moderately large, preferably $0.15 \leqq z' \leqq 0.4$.

In particular, by regulating a Li-Ni-Mn-Co composite oxide so as to have a composition represented by a ternary phase diagram in which (x', y', z') is present inside the quadrilateral ABCD (provided that all points on the straight line connecting point A to point B are excluded), this composite oxide can be made to have a stabler crystal structure. In case where (x', y', z') is present in the region in which the Mn proportion is higher than on the straight line connecting point A to point D, the composite oxide has reduced crystal symmetry. In case where (x', y', z') is present in the region in which the Ni proportion is higher than on the straight line connecting point B to point C, an eutectic mixture of $LiMnO_2$ and $Li_2MnO_3$ generates. In either case, charge/discharge cycle performance tends to decrease.

Furthermore, since $0 \leqq w/(x'+y'+z') \leqq 1.30$, this positive active material can retain satisfactory charge/discharge cycle performance.

According to the constitution as described above, the positive active material can be one with which a non-aqueous electrolyte secondary battery having a high energy density and excellent charge/discharge cycle performance can be produced. In the case where the composite oxide is regulated so that z'>0, i.e., so as to contain cobalt, this composite oxide can be one with which a non-aqueous electrolyte secondary battery having highly excellent high-rate discharge performance in addition to the charge/discharge cycle performance can be produced.

Preferably, the diffraction peak at a 2θ of 18.6±1° has a half width of from 0.05° to 0.20° and the diffraction peak at a 2θ of 44.1+1° has a half width of from 0.10° to 0.20°. Due to this constitution, the positive active material can be one with which a non-aqueous electrolyte secondary battery which especially has a high energy density (high discharge capacity) and excellent charge/discharge cycle performance can be produced.

Preferably, the composite oxide has an $\alpha$-NaFeO$_2$ type layer structure and a hexagonal unit crystal lattice and has been constituted so that when the composite oxide has a potential of from 3.2 V to 3.3 V versus the potential of metallic lithium, then the lattice constant a, lattice constant c, and crystal lattice volume V of the hexagonal lattice satisfy the following relationships:

$$2.860 \leq a \leq 2.890$$

$$14.20 \leq c \leq 14.33$$

$$0.1007 \text{ nm}^3 \leq V \leq 0.1034 \text{ nm}^3$$

wherein a and c are lattice constants and are respectively equal to the a-axis-direction length and c-axis-direction length of the unit crystal lattice as expressed in angstrom (Å) unit.

Preferably, the composite oxide is one obtained through calcining conducted at a temperature of from 900°C to 1,100°C for 3 hours or more. In case where the calcining temperature is lower than 900°C, solid-phase reactions are less apt to proceed and this may cause a local disorder in crystal structure, resulting especially in a reduced discharge capacity and reduced high-rate discharge performance. In particular, use of a calcining temperature lower than 850°C results also in poor charge/discharge cycle performance. In case where the calcining temperature exceeds 1,100°C, it is difficult to regulate the amount of lithium volatilizing during the calcining. Consequently, the calcining temperature is preferably from 900°C to 1,100°C, and is more preferably 950°C or higher so as to completely conduct element displacement.

Accordingly, the positive active material can be one with which a non-aqueous electrolyte secondary battery which especially has a high energy density (high discharge capacity) and is excellent in high-rate discharge performance and charge/discharge cycle performance can be produced.

The inventors further made close investigations on positive active materials comprising the composite oxides described above. As a result, they have found that by regulating any of the composite oxides so as to have a specific particle size distribution, a high discharge capacity can be attained and the decrease in capacity caused by repeated charge/discharge cycles can be minimised.

Preferably, the composit e oxide has a particle size distribution in which the 50% particle diameter is larger than 0.8 μm and not large than 10 μm and the 10% particle diameter is larger than 0.4 μm and not larger than 7 μm.

By regulating the 50% particle diameter of the composite oxide to 10 μm or smaller, the active material particles can be made to come into satisfactory contact with a liquid electrolyte, whereby lithium movement around the surface of the active material can be made sufficient. By regulating the 50% particle diameter thereof to a value larger than 0.8 μm, the area in which the active material particles come to be in contact with a liquid electrolyte is moderately reduced and, hence, side reactions between the two ingredients are diminished. As a result, satisfactory battery performance especially at high temperatures can be obtained. The more preferred upper limit of the 50% particle diameter is 7 μm or smaller and the more preferred lower limit thereof is 2 μm or larger.

Furthermore, by regulating the 10% particle diameter of the composite oxide to 7 μm or smaller, the active material particles can be made to come into satisfactory contact with a liquid electrolyte, whereby lithium movement around the surface of the active material can be made sufficient. By regulating the 10% particle diameter thereof to a value larger than 0.4 μm, the area in which the active material particles come to be in contact with a liquid electrolyte is moderately reduced and, hence, side reactions between the two ingredients are diminished. As a result, satisfactory battery performance especially at high temperatures can be obtained. The more preferred upper limit of the 10% particle diameter is 3.4 μm or smaller and the more preferred lower limit thereof is 1.3 μm or larger.

Preferably, the positive active material further contains a lithium-cobalt oxide. Due to this constitution, the positive active material can be one which can enhance, in particular, the high-rate discharge performance of a battery.

Suitably, the positive active material further contains a lithium-manganese compound which has a spinel structure and in represented by $Li_{1+s}Mn_{2-a-b}M'''_tO_4$ (wherein $0 \leqq s \leqq 0.3$; $0 \leqq t \leqq 0.2$; and M''' is at least one element selected from Mg, Al, Ti, V, Cr, Fe, Co, and Ni). Due to this constitution, the positive active material can be one with which a battery combining, in particular, low-temperature high-rate discharge performance and storage performance on a high level can be obtained.

According to a further aspect of the present invention, there is provided a process as defined in claim 8.

Due to this constitution, the process can be one which yields a positive active material with which a non-aqueous electrolyte secondary battery especially having excellent high-rate discharge performance, excellent charge/discharge cycle performance, and a high energy density (high discharge capacity) can be produced.

Furthermore, the inventors have found that when hydrazine is used as the reducing agent, the process can yield a positive active material with which a non-aqueous electrolyte secondary battery especially having excellent high-rate discharge performance, excellent charge/discharge cycle performance, and a high energy density can be produced with higher certainty.

The inventors have further found that when a compound able to release an ammonium ion in aqueous solutions, more specifically one or more compounds selected from the group consisting of ammonium nitrate, ammonium sulfate, ammonium hydrochloride, and ammonia water, is used as the complexing agent, then the process can yield a positive active material with which a non-aqueous electrolyte secondary battery especially having excellent high-rate discharge performance, excellent charge/discharge cycle performance, and a high energy density can be produced with higher certainty.

Preferably, in a non-aqueous electrolyte secondary battery according to the invention, the positive active material is one which undergoes a decrease in crystal lattice volume with the lithium ion release accompanying the charge of the non-aqueous electrolyte secondary battery, the degree of the decrease in crystal lattice volume being up to 4% based on the crystal lattice volume of the positive active material as measured when the non-aqueous electrolyte secondary battery is in a discharge termination state, that the negative-electrode material is one which undergoes an increase in crystal lattice volume with the lithium ion dope accompanying the charge of the non-aqueous electrolyte secondary battery, the degree of the increase in crystal lattice volume being up to 6% based on the crystal lattice volume of the negative-electrode material as measured when the non-aqueous electrolyte secondary battery is in a discharge termination state, that the value of the volume increase for the negative-electrode material is equal to or larger than the value of the volume decrease for the positive active material in an ordinary charge/discharge range for the non-aqueous electrolyte secondary battery, and that the difference between the value of the volume increase for the negative-electrode material and the value of the volume decrease for the positive active material in an ordinary charge/discharge range for the non-aqueous electrolyte secondary battery is from 0% to less than 3%.

In this constitution, a positive active material which undergoes a decrease in crystal lattice volume upon charge is used in combination with a negative-electrode material which undergoes an increase in crystal lattice volume upon charge, and the difference between the degree of volume change of the positive active material and the degree of volume change of the negative-electrode material is as small as below 3%. Consequently, the crystal lattice volume changes with charge of the positive electrode and those of the negative electrode effectively offset each other. As a result, the volume increase of the power generating element (a combination of the positive electrode and the negative electrode and a separator as an optional component) during charge can be considerably reduced as compared with that in batteries employing a lithium-cobalt oxide or the like. Likewise, the positive active material expands upon discharge, while the negative-electrode material contracts upon discharge. Because of these, the volume changes of the power generating element are small even in repetitions of charge/discharge cycling. Consequently, even when a metallic battery can or the like is used, the pressure which has been applied to the electrodes is prevented from decreasing, whereby adhesion between each current collector and the active material is retained to maintain electron-conducting properties and active-material peeling and other troubles are prevented from arising. Thus, battery performance can be maintained over long.

The term "ordinary charge/discharge range" as used herein means the rated range of use for the battery wherein the battery is neither overcharged nor over-discharged.

Furthermore, since the volume change of the positive active material and the volume change of the negative-electrode material have been reduced to 4% or less and 6% or less, respectively, the changes in crystal lattice spacing and in crystal grain diameter, e.g., a-axis and c-axis diameters, with charge/discharge are small. Consequently, even in repetitions of charge/discharge, the crystal structure can be effectively inhibited from being destroyed due to crystal lattice distortions.

<Brief Description of the Drawings>

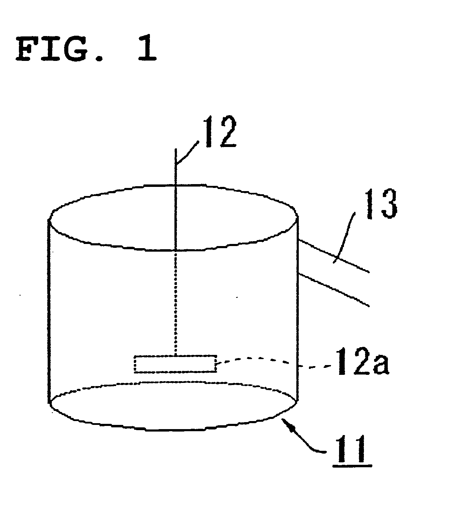

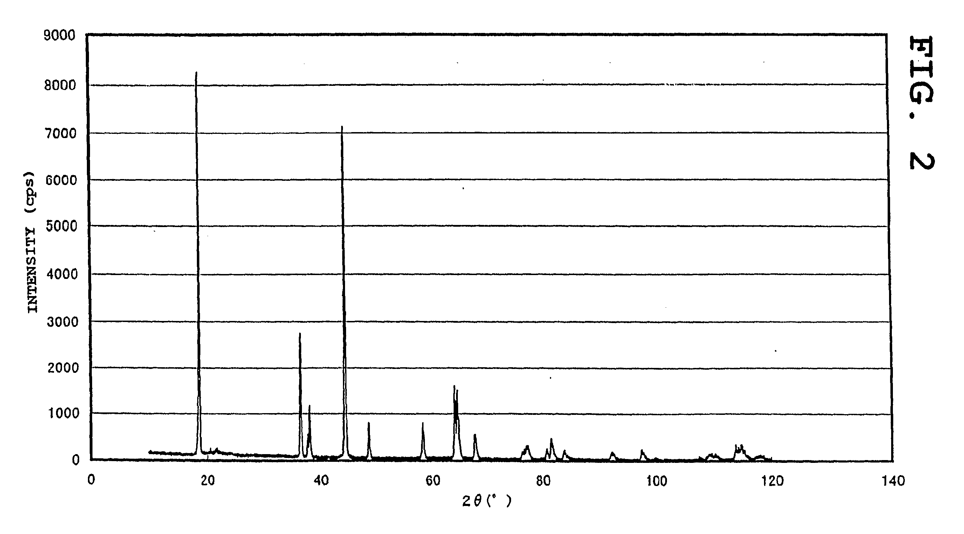

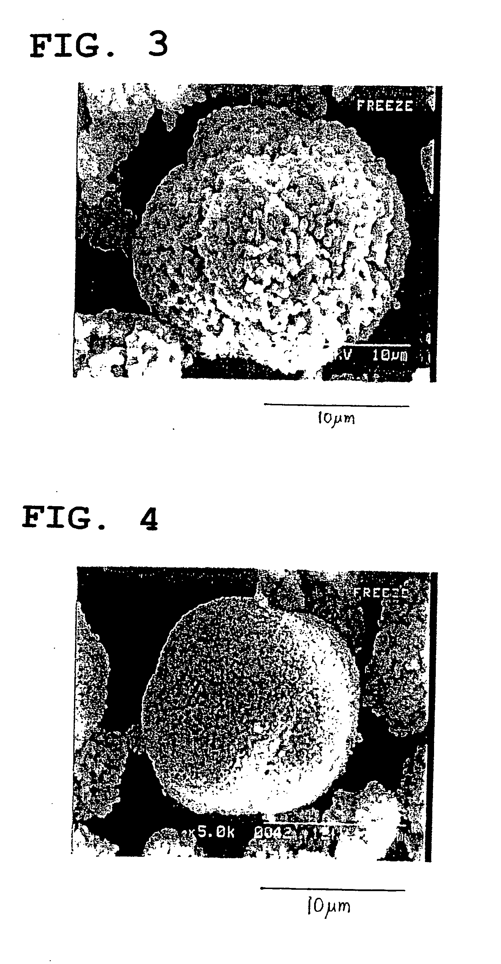

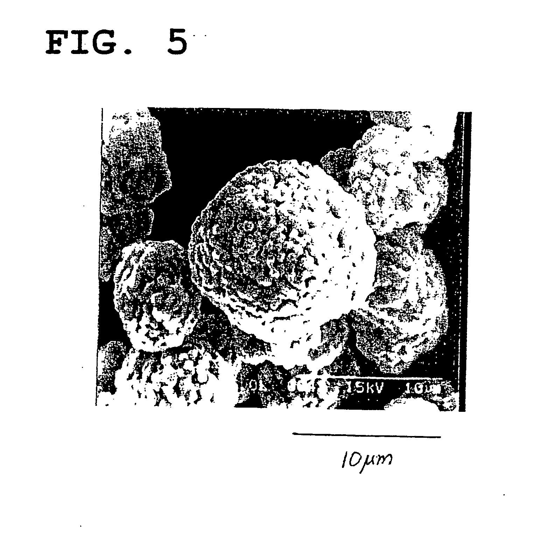

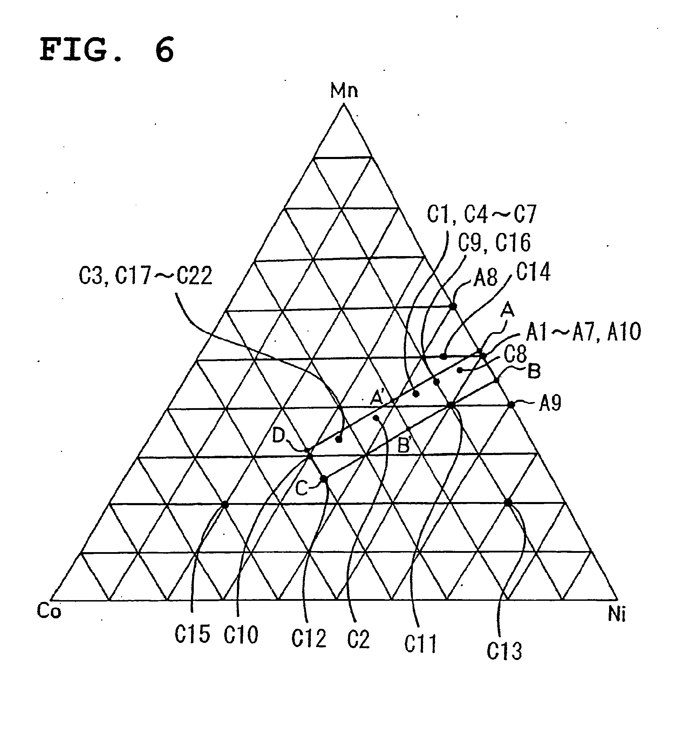

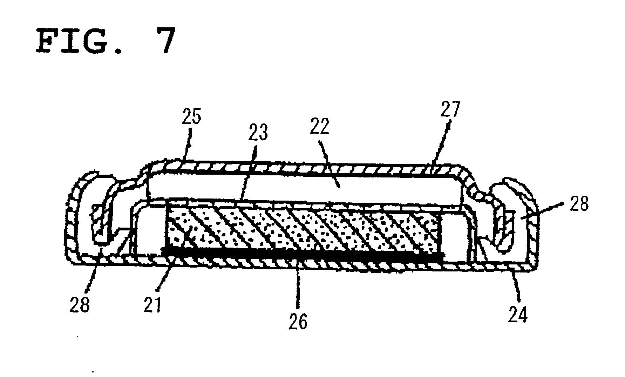

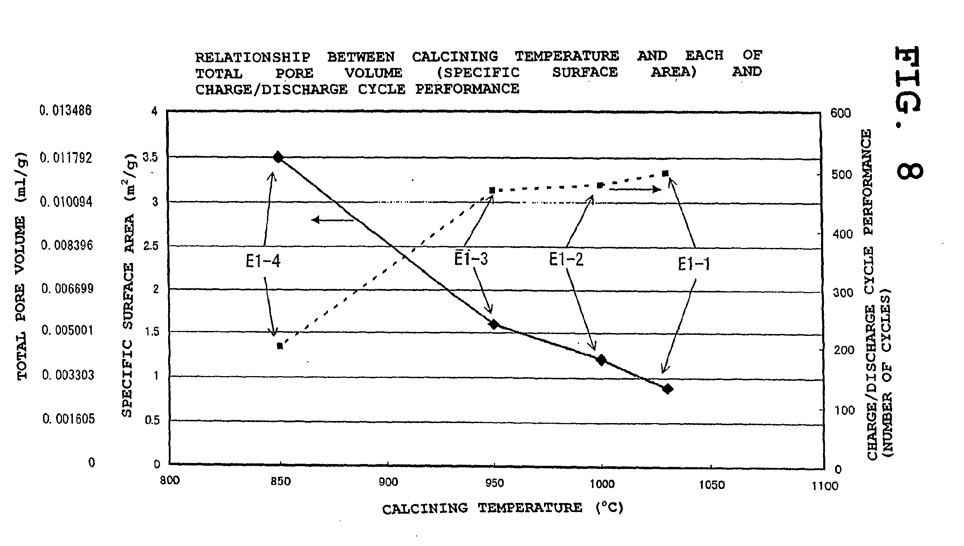

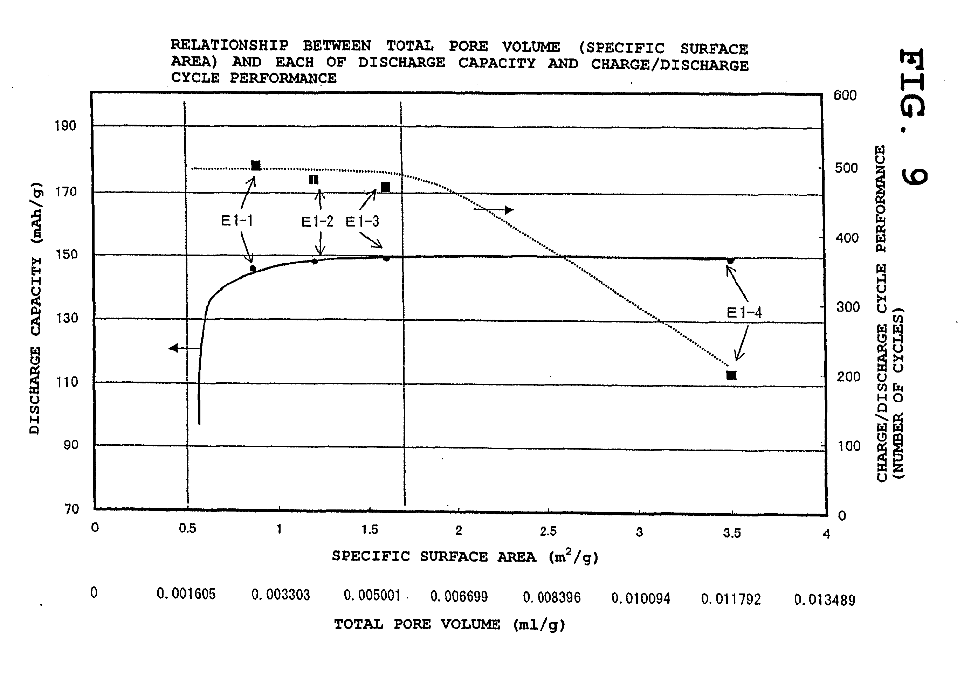

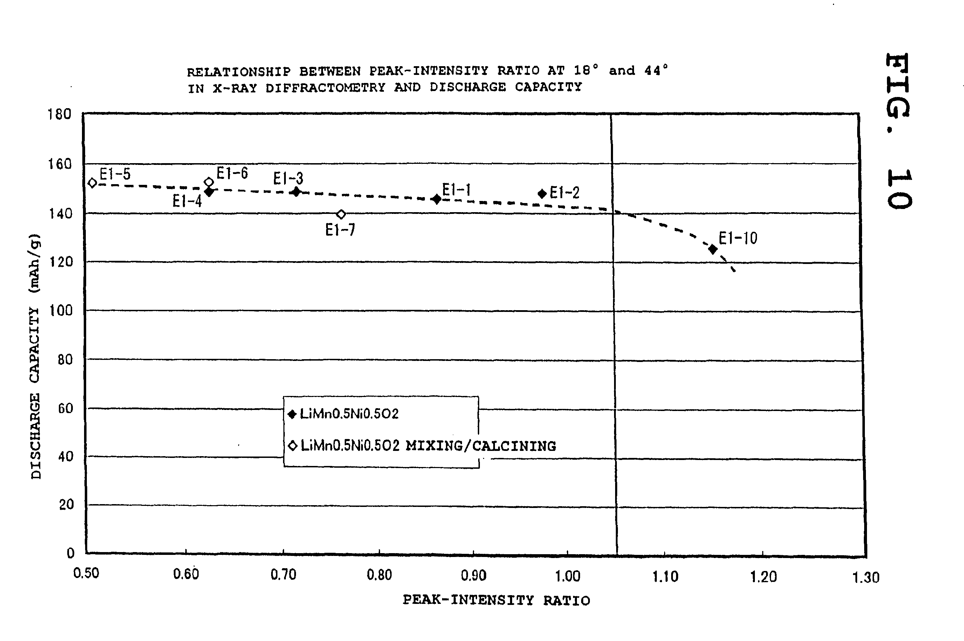

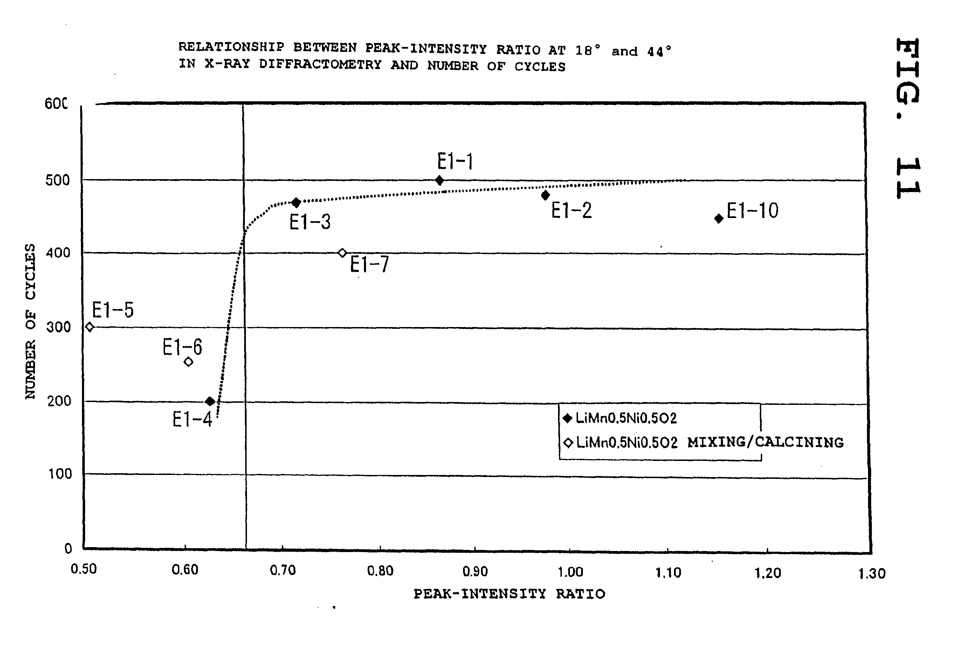

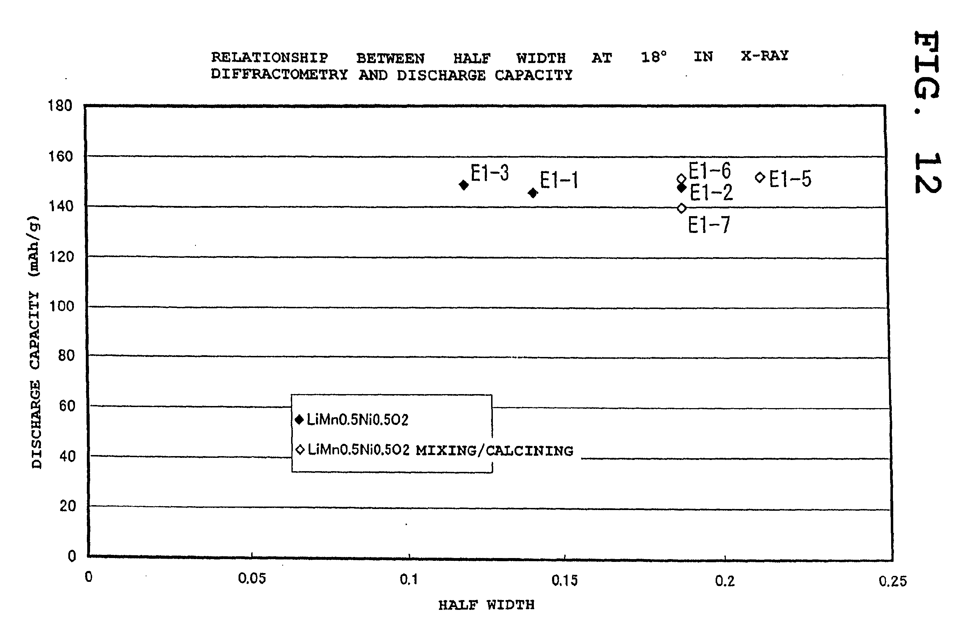

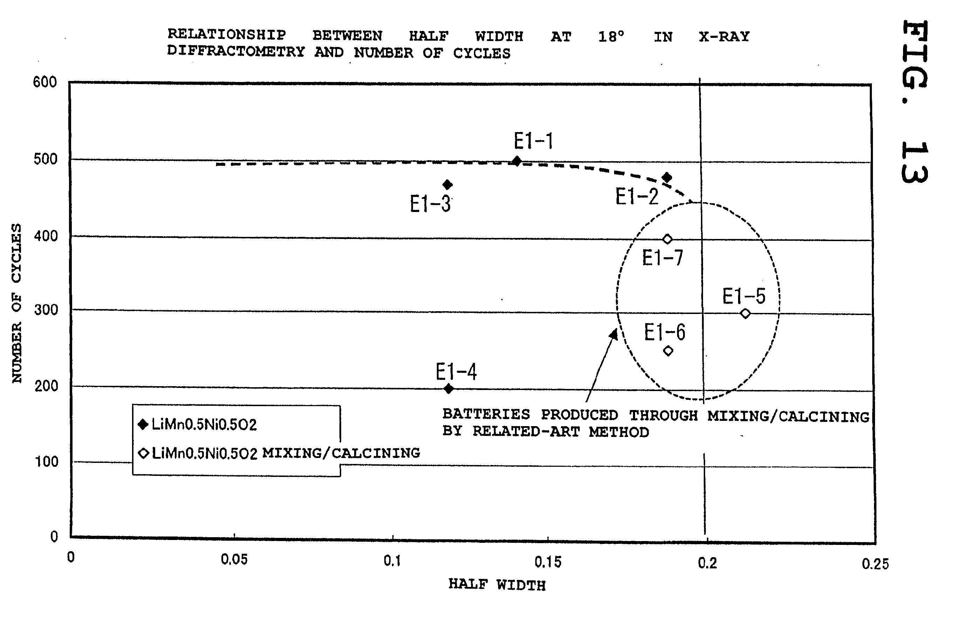

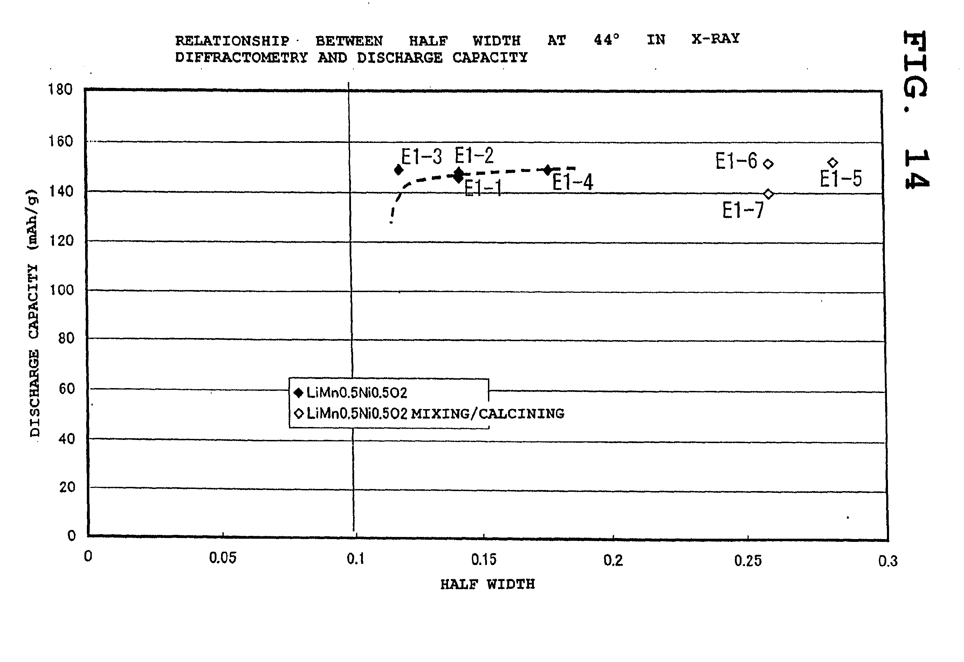

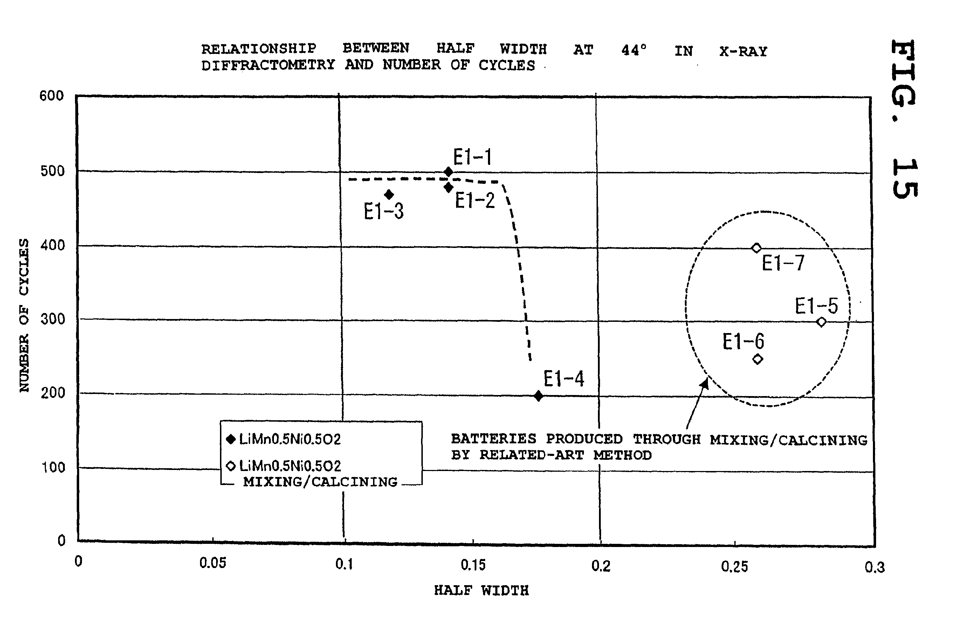

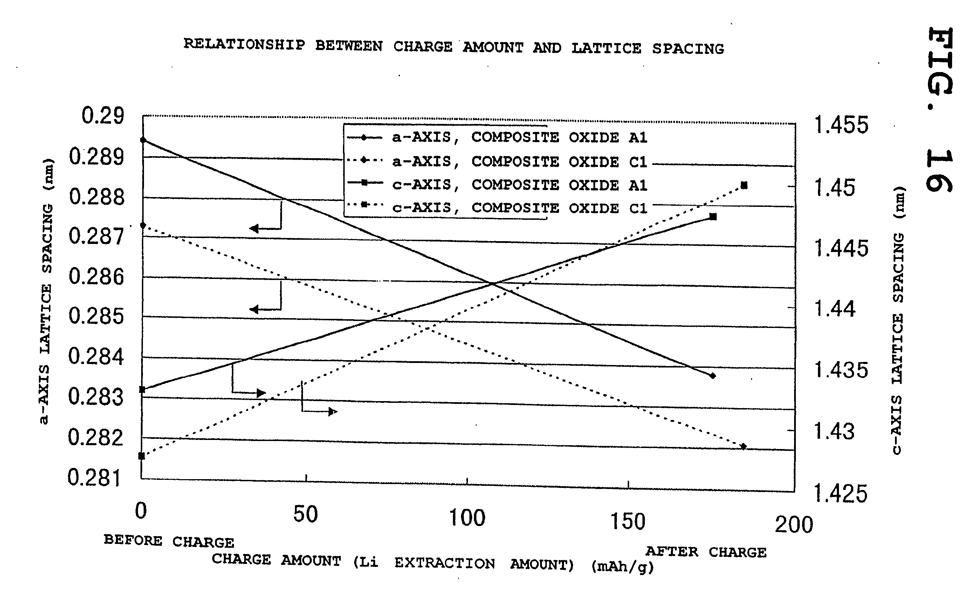

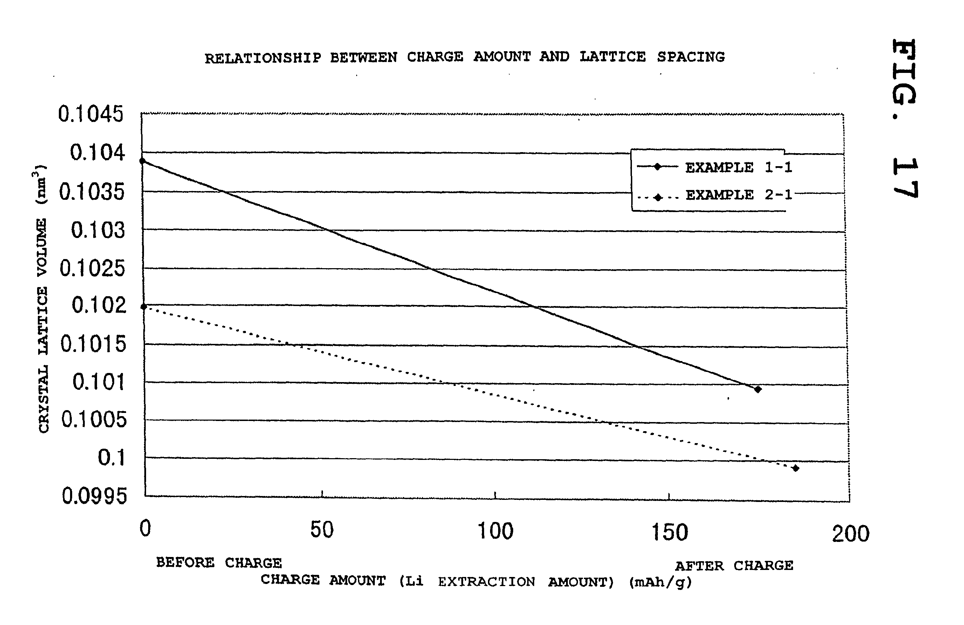

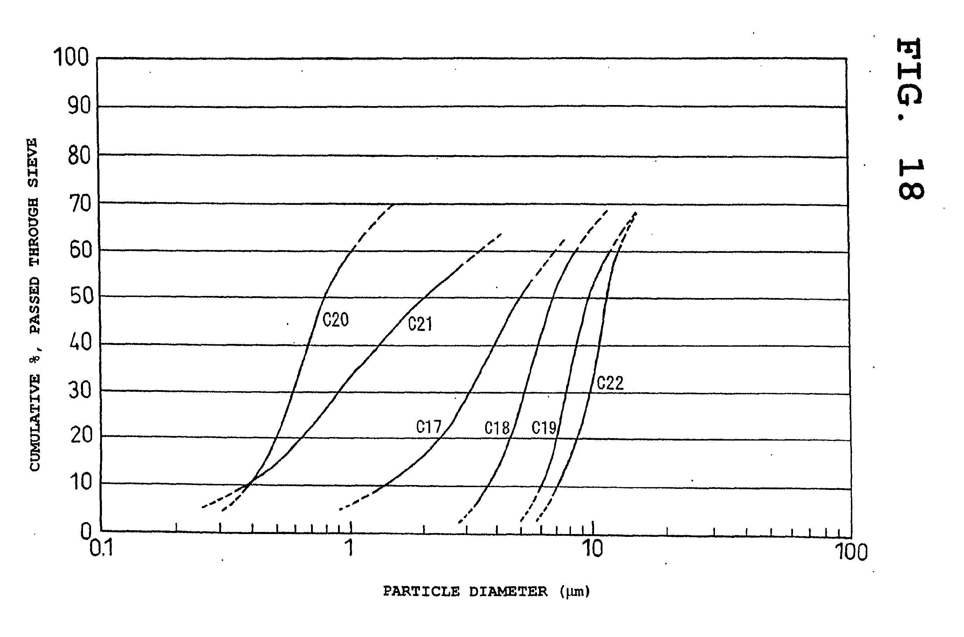

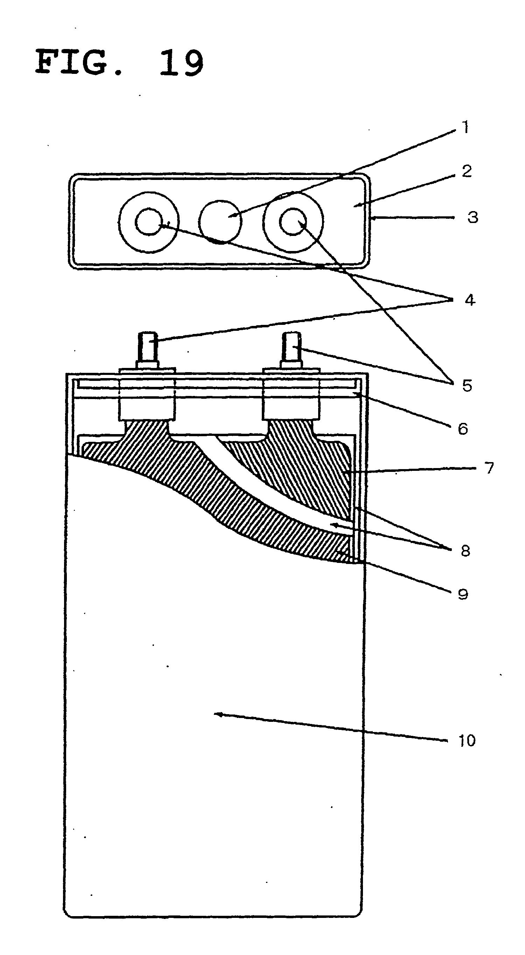

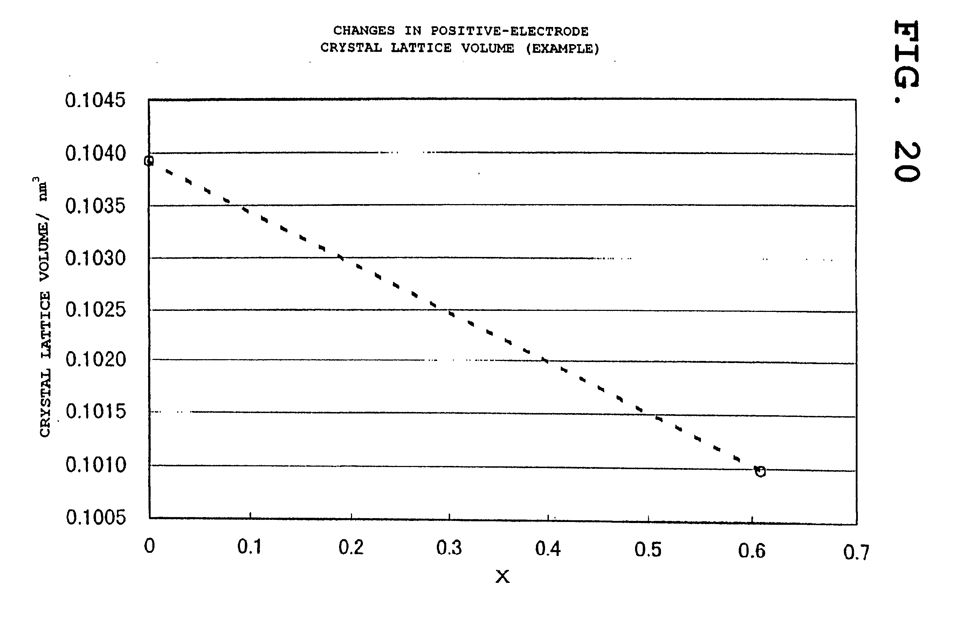

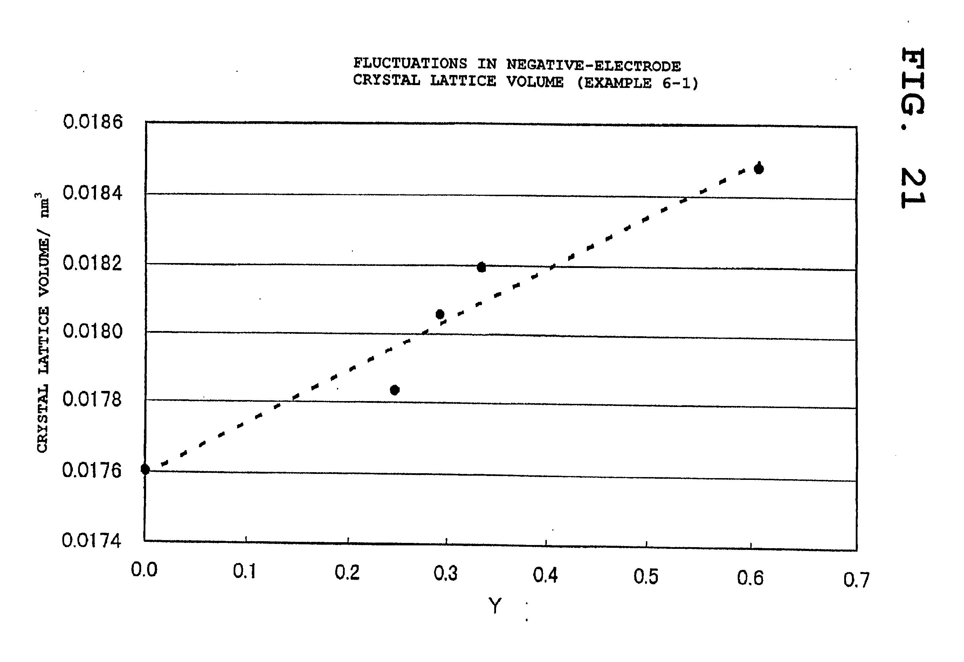

Fig. 1 is a diagrammatic view illustrating the reaction vessel used in the Examples. Fig. 2 is an X-ray diffraction pattern of composite oxide Al. Fig. 3 is an electron photomicrograph of composite oxide Al. Fig. 4 is an electron photomicrograph of composite oxide A4. Fig. 5 is an electron photomicrograph of composite oxide C1. Fig. 6 is a ternary phase diagram showing the compositions of composite oxides. Fig. 7 is a diagrammatic view illustrating the coin battery produced in an Example. Fig.8 is a presentation showing the relationship between calcining temperature in $LiMn_{0.5}Ni_{0.5}O_2$ production and each of total pore volume (specific surface area) and charge/discharge cycle performance. Fig. 9 is a presentation showing the relationship between total pore volume (specific surface area) and each of discharge capacity and charge/discharge cycle performance. Fig. 10 is a presentation showing the relationship between discharge capacity and the relative-intensity ratio of the diffraction peak at a $2\theta$ of $44.1\pm1°$ to the diffraction peak at a $2\theta$ of $18.6\pm1°$ in a diffraction pattern for $LiMn_{0.5}Ni_{0.5}O_2$ in X-ray powder diffractometry with $GuK_\alpha$ ray. Fig. 11 is a presentation showing the relationship between charge/discharge cycle performance and the relative-intensity ratio of the diffraction peak at a $2\theta$ of $44.1\pm1°$ to the diffraction peak at a $2\theta$ of $18.6\pm1°$ in a diffraction pattern for $LiMn_{0.5}Ni_{0.5}O_2$ in X-ray powder diffractometry with $CuK_\alpha$ ray. Fig. 12 is a presentation showing the relationship between discharge capacity and the half width at a $2\theta$ of $28.6\pm1°$ in a diffraction pattern for $LiMn_{0.5}Ni_{0.5}O_2$ in X-ray powder diffractometry with $CuK_\alpha$ ray. Fig. 13 is a presentation showing the relationship between charge/discharge cycle performance and the half width at a $2\theta$ of $18.6\pm1°$ in a diffraction pattern for $LiMn_{0.5}Ni_{0.5}O_2$ in X-ray powder diffractometry with $CuK_\alpha$ ray. Fig. 14 is a presentation showing the relationship between discharge capacity and the half width at a $2\theta$ of $44.1+1°$ in a diffraction pattern for $LiMn_{0.5}Ni_{0.5}O_2$ in X-ray powder diffractometry with $CuK_\alpha$ ray. Fig. 15 is a presentation showing the relationship between charge/discharge cycle performance and the half width at a $2\theta$ of $44.1+1°$ in a diffraction pattern for $LiMn_{0.5}Ni_{0.5}O_2$ in X-ray powder diffractometry with $CuK_\alpha$ ray. Fig. 16 is a presentation showing the relationship between charge amount and lattice spacing in Examples. Fig. 17 is a presentation showing the relationship between charge amount and crystal lattice volume in Examples. Fig. 18 is a presentation showing the particle size distributions of composite oxides. Fig. 19 is a diagrammatic view illustrating the prismatic battery produced in an Example. Fig. 20 is a presentation showing crystal lattice volume changes of a positive active material. Fig. 21 is a presentation showing crystal lattice volume changes of a negative-electrode material.

Fig. 22 is a presentation showing crystal lattice volume changes of another negative-electrode material.

Fig. 23 is a presentation showing crystal lattice volume changes of another negative-electrode material.

Fig. 24 is a presentation showing crystal lattice volume changes of a positive active material. Fig. 25 is a presentation showing changes in capacity retention with the number of cycles. Fig. 26 is a presentation showing changes in internal resistance with the number of cycles. Fig. 27 is a diagrammatic view illustrating the battery produced in an Example.

In the drawings, numeral 1 denotes a safety vent, 2 a cap, 3 a laser-welded part. 4 and 33 a negative terminal, 5 and 32 a positive terminal, 6 a gasket, 7 a positive electrode plate, 8 and 23 a separator, 9 a negative electrode plate, 10 a prismatic battery case, 11 a reaction vessel, 12 a stirrer, 13 an overflow pipe, 21a positive electrode, 22 a negative electrode, 24 a coin battery case, 25 a coin battery cap, 26 a positive-electrode current collector, 27 a negative-electrode current collector, 28 a resin packing, 31 an electrode group, 35 a sheathing material, and 36 a fusion-bonding area.

<Best Mode for Carrying Out the Invention>

Modes for carrying out the invention will be shown below as examples, but the invention should not be construed as being limited to the following modes.

Examples 1-1 to 1-8, 2-6, 2-12 to 2-14, 3-1, 3-2, 4-1, 4-2, 5-4, 5-5 and 7-3 do not form pan of the claimed invention and are provided as background art only.

[Positive Active Material According to First Embodiment]

The positive active material according to the first embodiment of the invention comprises a composite oxide as defined in claim 1.

Due to this constitution, a battery having a high energy density and excellent charge/discharge cycle performance can be produced. Since z'>0, i.e., the composite oxide contains cobalt, a battery highly excellent in high-rate discharge performance and charge/discharge cycle performance can be produced.

In the composite formula $Li_w Mn_x.Ni_y.Co_z.O_2$, x', y', and z' preferably are values within such a range that in a ternary phase diagram, (x', y', z') is present on the perimeter of or inside the quadrilateral A'B'CD defined by point A' (0.41, 0.39, 0.2), point B' (0.35, 0.45, 0.2), point C (0.25, 0.35, 0.4), and point D (0.31, 0.29, 0.4) as vertexes. Espacially preferably, x', y', and z' are values within such a range that (x', y', z') is present on the perimeter of or inside the quadrilateral A"B"CD definied by point A" (0.375, 0.375, 0.25), point B" (0.33, 0.42, 0.25), point C (0.25, 0.35, 0.4), and point D (0.32, 0.29, 0.4) as vertexes. Due to this constitution, the positive active material can be one with which a battery combining high-rate discharge performance and charge/discharge cycle performance on a high level can be obtained.

Incidentally, the values of w, x', y', and z' in the composite formula shown above can be determined at will by regulating the proportions of transition metal compounds contained in a mixture to be subjected to the heat treatment (calcining) which will be described latex.

Preferred ranges in the composite formula can be determined based on the relationship between mangenese amount and nickel amount. Namely, too large manganese amounts as compared with the amount of nickel are undesirable because lithium-manganese oxides including $Li_2MnO_3$ generate as impurities to reduce discharge performance. On the other hand, in case where the amount of nickel is too large as compared with the manganese amount, cycle performance tends to decrease although a stable layer crystal structure belonging to the space group R3/m is formed.

In the positive active material according to the first embodiment, w/(x'+y'+z') is in the range of from 0 to 1.3. Because of this, the positive active material can have a high energy density and excellent charge/discharge cycle performance. Values of w/(x'+y'+z') larger than 1.3 are undesirable because lithium compound accumulation on the surface of the positive active material occurs and this not only reduces the discharge capacity but also causes liquid electrolyte decomposition reactions to proceed to thereby reduce the storage performance of the battery.

from the standpoint of producing the positive active material, w/(x'+y'+z') as preferably from 0.9 to 1.3, more preferably from 0.95 to 1.11. even more preferably from 0.95 to 1.04. In case where w/(x'+y'-z') is smaller than 0.90, a structural change occurs, for example, because of oxygen deficiency resulting from compensation for charge deficiency. In this case, lithium movement is hence inhibited and battery performance tends to decease.

[Properties of Positive Active Materials According to the Embodiments of the Invention]

The positive active materials according to the first embodiment (hereinafter referred to also as the positive active material according to embodiments of the invention) preferably have an $\alpha$-NaFeO$_2$ crystaal structure. More specifically, the preferred crystal structure of the positive active materials accordling to embodiments of the invention is a crystal structure which, in X-ray powder diffractometry with CuK$_\alpha$ ray, has peaks at 2θ's of 18.62±1°, 36.44±1°, 37.72±1°, 38.08±1°, 44.14±1°, 48.3±1°, 58.26±1°, 64.14±1°, 64.44±1°, and 64.64±1°.

with respect to expressions of space groups, the expression "R3m" should originally bear a bar (lateral line) affixed over the numeral "3". In this description, however, the expression "R3/m" is used for convenience so as to show the same morning.

The terms "$\alpha$-N$\alpha$FeO$_2$ crystal structure," and "layer structure belonging to the space group R3/m" have the same meaning, and the space lattice thereof is hexagonal.

In the positive active materials the composite oxides each have a total pore volume of from 0.001 ml/g to 0.006 ml/g and, in X-ray powder diffractometry with CuK$_\alpha$ ray, give a diffraction pattern in which the ratio of the relative intensity of the diffraction peak at a 2θ of 44.1±1° to the relative intensity of the diffraction peak at a 2θ of 18.6±1° is from 0.65 to 1.05.

In other words, the positive active materials are ones in which the composite oxide has a specific surface area of from 0.3 m$^2$/g to 1.6 m$^2$/g and, in X-ray powder diffractometry with CuK$_\alpha$ ray, gives a diffraction pattern in which the ratio of the relative intensity of the diffraction peak at a 2θ of 44.1±1° to the relative intensity of the diffraction peak at a 2θ of 18.6±1° is from 0.65 to 1.05.

In case where the composite oxides have a total pore volume smaller than 0.001 ml/g (i.e., when the BET specific space areas thereof are smaller than 0.3 m$^2$/g), a high discharge capacity is difficult to obtain at low temperatures probably because such composite oxides in a solid phase state have poor ionic conductivity. Furthermore, particles of such composite oxides tend to be densified to give positive active material particles which are less apt to come into contact with a liquid electrolyte. As a result, charge/discharge cycle performance tends to decrease.

On the other hand, in case where the composite oxides have a total pore volume exceeding 0.006 ml/g (i.e., a specific surface area exceeding 1.6 m$^2$/g), the secondary particles constituting the composite oxides tend to be porous. Namely, such lithium-manganese-nickel composite oxides have a reduced density. In this case, high-rate discharge performance tends to become better. However, not only constituent elements dissolve away to cause a resistance increase on the negative electrode, but also the liquid electrolyte tends to suffer oxidative decomposition to reduce storage performance and reduce thermal stability during charge.

By regulating the composite oxides so as to have a total pore volume in the range of from 0.001 ml/g to 0.006 ml/g (specific surface area: 0.3 m$^2$/g to 1.6 m$^2$/g) as described above, a battery combining, in particular, excellent high-rate discharge performance and high charge/discharge cycle performance can be obtained.

In the case where high-rate discharge performance represented by low-temtperature high-rate discharge performance is required of a battery, it is necessary to employ a composite oxide having an increased total pore volume (specific surface area) even when use of this composite oxide results in a slight decrease in the energy density of the battery, as stated above. However, batteries in which the total pore volume (specific surface area) has been increased excessively have a problem that they have reduced charge/discharge cycle performance. In this connection, materials having a large total pore volume (specified surface area) generally have many grain boundaries or many microcracks.

As stated above, the positive active materials are ones in which the composite oxide, in X-ray powder diffractometry with $CuK_\alpha$ ray, given a diffraction pattern in which the ratio of the relative intensity of the diffraction peak at a $2\theta$ of $44.1\pm1°$ to the relative intensity of the diffraction peak at a $2\theta$ of $18.6\pm1°$ is from 0.65 to 1.05. Due to this constitution, the crystal structure is stabilized and a battery having excellent charge/discharge cycle performance can be obtained.

Although this effect has not been fully elucidated, the relative-intensity ratio of the diffraction peak at a $2\theta$ of $44.1\pm1°$ to the diffraction peak at a $2\theta$ of $18.6\pm1°$ in a diffraction pattern obtained by X-ray powder diffractometry with $CuK_\alpha$ ray is thought to be an index to crystallinity. Higher calcining temperatures, longer calcining periods, or smaller total pore volumes tend to result in higher relative-intensity ratio. Consequently, when the value of the relative-intensity ratio of the diffraction peak at a $2\theta$ of $44.1\pm1°$ to the diffraction peak at a $2\theta$ of $18.6\pm1°$ is 0.65 or higher, the total pore volume is not too large and a battery having excellent charge/discharge cycle performance can be obtained. On the other hand, when the value of the relative-intensity ratio is 1.05 or lower, the total pore volume is not too small and high-rate discharge performance represented by low-temperature high-rate discharge performance can be made excellent.

The composite oxides preferably are ones in which the diffraction peak at a $2\theta$ of $18.6\pm1°$ has a half width of from $0.05°$ to $0.20°$ and the diffraction peak at a $2\theta$ of $44.1\pm1°$ has a half width of from $0.10°$ to $0.20°$. Due to this constitution, a battery excellent especially in discharge capacity and charge/discharge cycle performance can be obtained.

This effect also has not been fully elucidated. However, half width is thought to be an index to crystallinity. Namely, composite oxide particles having high crystallinity and high homogeneity tend to have reduced half widths. For example, inhomogeneous $LiMn_{0.5}N_{0.5}O_2$ produced by the powder mixing method has large half widths at $2\theta$'s of $18.6\pm1°$ and $44.1\pm1°$, and tends to reduce charge/discharge cycle performance. Consequently, the half width at a $2\theta$ of $18.6\pm1°$ is preferably $0.20°$ or less, and the half width at a $2\theta$ of $44.1\pm1°$ is preferably $0.20°$ or less, especially preferably $0.17°$ or less. It is therefore preferred that the element M of a different kind should displace in a solid solution state so as to result in a half width of $0.20°$ or less at a $2\theta$ of $44.1\pm1°$.

Half width generally correlates with the crystallinity or degree of crystallization of the composite oxide particles. Discharge capacity is thought to fluctuate depending on the crystallinity of the composite oxide particles (denseness of the particles). In case where the value thereof is small, i.e., when the crystallinity is high, then the particles are in an excessively densified state and this makes contact with a liquid electrolyte insufficient and thereby reduces discharge capacity. On the other hand, in case where element mixing is uneven, solid-phase reactions do not sufficiently proceed and this is thought to be apt to result in increased half widths and hence in a reduced discharge capacity. Consequently, the half width at a $2\theta$ of $18.6\pm1°$ is preferably $0.05°$ or more, and the half width at a $2\theta$ of $44.1\pm1°$ is preferably $0.10°$ or more. Thus, the composite oxide can have a preferred form in which the elements have been evenly mixed and moderate contact with a liquid electrolyte is maintained.

Furthermore, the positive active materials according to embodiments of the invention each preferably are one in which the composite oxide has an $\alpha$-$NaFeO_2$ type layer structure and a hexagonal unit crystal lattice and has been constituted so that when the composite oxide has a potential of from 3.2 V to 3.3 V versus the potential of metallic lithium, then the lattice constant a, lattice constant c, and crystal lattice volume V of the hexagonal lattice satisfy the following relationships:

$$2.860 \leqq a \leqq 2.890$$

$$14.20 \leqq c \leqq 14.33$$

$$0.1007 \; nm^3 \leqq V \leqq 0.1034 \; nm^3$$

wherein a and c are lattice constants and are respectively equal to the a-axis-direction length and c-axis-direction length of the unit crystal lattice as expressed in angstrom (Å) unit. Incidentally, since the unit crystal lattice is hexagonal, the length b in the b-axis direction is equal to the lattice constant a.

In case where the lattice constant a exceeds 2.890, this composite oxide has an increased manganese amount and reduced crystal symmetry and this tends to adversely influence charge/discharge cycle performance. The same applies to the case in which the lattice constant c exceeds 14.30 and the case in which the crystal lattice volume V exceeds $0.1034 \; nm^3$.

In case where the lattice constant a, the lattice constant c, or the crystal lattice volume V is smaller than 2.860, 14.20, or $0.1007 \; nm^3$, respectively, then charge/discharge cycle performance and thermal stability during charge tend to become poor.

More preferably, $c \leqq 14.30$. With this positive active material, a battery especially having excellent high-rate discharge performance can be obtained.

[Processes for Producing Positive Active Materials According to Embodiments of the Invention]

Processes for producing the positive active materials of the invention are not particularly limited. However, preferred processes will be described below in detail.

For obtaining a battery having a high energy density and high charge/discharge cycle performance, the positive active materials according to the invention are obtained by calcining a Li-Mn-Ni-Co composite oxide precursor comprising at least a lithium ingredient, manganese ingredient, nickel ingredient, and Co ingredient at a temperature of 900°C or higher. The calcining temperature is preferably from 900°C to 1,100°C, more preferably from 900°C to 1,050°C, especially preferably from 950°C to 1,025°C.

The calcining of the Li-Mn-Ni-Co composite oxide precursor is intended to cause a chemical change to an α-NaFeO$_2$ crystal structure. Although this phase transition is sufficiently completed even at 700°C, heat-treating the precursor at a higher temperature (especially 900°C or above) as stated above is effective in greatly improving battery performance.

Calcining temperatures lower than 800°C are apt to pose a problem that charge/discharge cycle performance decreases.

Calcining temperatures lower than 900°C are apt to pose a problem that energy density (discharge capacity) and high-rate discharge performance decrease. At temperatures lower than that, there is the possibility that the resultant composite oxide might have a structural factor which inhibits lithium movement.

On the other hand, calcining temperatures higher than 1,100°C are apt to pose problems, such as a problem concerning production that lithium volatilization occurs to make it difficult to obtain a composite oxide having a target composition and a problem that particle densification occurs to reduce battery performance. These problems are attributable to the fact that temperatures higher than 1,100°C increase the rate of growth of primary particles to give composite oxide crystals having too large a particle size. It is further thought that the amount of lithium-deficient sites increases locally and the resultant structural instability also is causative of those problems. Moreover, the higher the temperature, the more the element displacement occurs between the sites occupied by lithium element and the sites occupied by manganese, nickel, and cobalt elements. As a result, lithium-conducting passages are obstructed, resulting in a reduced discharge capacity.

By regulating the calcining temperature so as to be in the range of from 950°C to 1,025°C, a battery having an especially high energy density (discharge capacity) and excellent charge/discharge cycle performance can be produced.

The calcining period is preferably from 3 hours to 50 hours. Calcining periods exceeding 50 hours tend to result in practically insufficient battery performance rieenuse of lithium volatilization. Calcining periods shorter than 3 hours tend to result in impaired battery performance due to insufficient crystal growth.

The Li-Mn-Ni-Co composite oxide precursor comprising at least a lithium ingredient, manganese ingredient, nickel ingredient, and Co ingredient preferably comprises compounds in which manganese, nickel, and cobalt have been evenly mixed. Methods for producing these precursors are not particularly limited as long as the precursors satisfy these requirements. However, since high crystal structure stability to lithium dope/undope is required in the elemental constitution range according to the invention, a positive active material attaining especially high battery performance can be produced through the coprecipitation process in which an acidic solution of manganese nickel, and cobalt is subjected to precipitation with an aqueous alkali solution, e.g., an aqueous sodium hydroxide solution. In this method, when particles are yielded under such condition that ammonium ions coexist in the reaction system in an excess amount relative to the metal amount, as described in JP-A-10-125319, then precursor particles which are highly homogeneous and have a spherical particle shape can be produced. In this case, since the manganese is readily oxidized by the oxygen contained in air to form a cause of phase reparation, it is known to use a technique in which a reducing agent is added to the reaction solution or the atmosphere in the crystallization reaction vessel is replaced with a reducing atmosphere by, e.g., filling the inner atmosphere of the vessel or the solution with an insert gas. The technique in which a reducing agent is added for the purpose of reducing manganese is described in JP-A-11-317224 and JP-A-2000-3706. The technique in which an inert gas is passed to form a reducing atmosphere in the reaction vessel or solution is described in JP-A-11-312519 and JP-A-11-307093.

Examples of the L-Mn-Ni-Co composite oxide precursor include a mixture of: a mixture obtained by subjecting a manganese compound, a nickel compounds, and a Co compound to pulverization/mixing, thermal decomposition and mixing, or coprecipitation; and a lithium compound.

The mixing of the mixture obtained by subjecting a manganese compound, a nickel compound, and a Co compound to pulverization/mixing, thermal decomposition and mixing, or coprecipitation with a lithium compound can be accomplished by mechanically mixing various powders. The resultant mixture is preferably heat-treated in an oxygen atmosphere to thereby obtain a composite oxide.

Examples of the lithium compound include lithium hydroxide and lithium carbonate. Examples of the manganese compound include manganese oxide, manganese carbonate, manganese sulfate, and manganese nitrate. Examples of the nickel compound include nickel hydroxide, nickel carbonate, nickel sulfate, and nickel nitrate.

Examples of the cobalt compound include cobalt hydroxide, cobalt carbonate, cobalt oxide, cobalt sulphate, and cobalt nitrate.

An explanation will be given below on the manganese-nickel-Co coprecipitation product (coprecipitated Mn-Ni-Co composite) serving as a component of the Li-Mn-Ni-Co composite oxide precursor.

The coprccipitated Mn-Ni-Co composite to be produced preferably is a coprecipitation product in which manganese, nickel, and cobalt have been evenly mixed.

The production of a coprecipitated Mn-Ni-Co composite can be advantageously accomplished by subjecting an aqueous solution containing nickel element, manganese element, and cobalt to precipitation with sodium hydroxide. In this operation, precursor particles having a uniform shape and a high density can be produced by causing ammonium ions to coexist in the reaction system in an excess amount relative to the metal amount.

Although the production of a coprecipitated Mn-Ni-Co composite may be conducted by a batch method or a continuous precipitation method, it is preferred to use a continuous precipitation method so as to obtain high-density particles which are uniform and spherical.

The positive active materials are preferably obtained by the process of the invention for producing a positive active material, which includes a specific coprocipitation step. By this process, a composite oxide which has a total pore volume of from 0.001 ml/g to 0.006 ml/g (specific surface area of from 0.3 m$^2$ to 1.6 m$^2$/g) and, in X-ray powder diffractometry with CuK$_\alpha$ ray, gives a diffraction pattern in which the ratio of the relative intensity of the diffraction peak at a 2$\theta$ of 44.1$\pm$1° to the relative intensity of the diffraction peak at a 2$\theta$ of 18.6$\pm$1° is from 0.65 to 1.05 can be advantegeously obtained.

Namely, the process according to the invention for producing a positive active material is a process for producing a positive active material as set out in claim 1, and is characterized in that the composite oxide is produced through a coprecipitation step which comprises adding an alkali compound, a reducing agent, and a complexing agent to an aqueous solution prepared by dissolving a Ni compound, a Mn compound, and a Co compound in water to thereby adjust the pH of the aqueous solution to 10 to 13 and yield a coprecipitated Ni-Mn-Co composite in the aqueous solution.

The coprecipitated Ni-Mn-Co composite (in this description, these composites are often collectively referred to simply as "coprecipitated composite") obtained by the coprecipitation step is used to produce a composite oxide to be used for constituting a positive active material. With this composite oxide, a battery having a high discharge capacity and excellent charge/discharge cycle performance can be produced. In particular, a battery having a discharge capacity as high as 160 mAh/g can be produced.

Furthermore, a LiMn$_\alpha$Ni$_\beta$Co$_\gamma$O$_2$ type composite oxide may be obtained by calcining a manganese compound together with a nickel compound and a cobalt compound. However, it is difficult to sufficiently obtain the composite oxide because the displacement of manganese, nickel, and cobalt elements in a solid solution state is slow. In case where the calcining period is prolonged so as to sufficiently obtain the composite oxide, crystals of the composite oxide grow excessively, resulting in a reduced specific surface area. Consequently, the battery tends to have a reduced discharge capacity.

In contrast, according to the coprecipitation step included in the process of the invention for producing a positive active material, since a nickel compound, manganese compound, and Co compound are dissolved in water, the nickel element, manganese element, and cobalt can be evenly mixed and, hence, a coprecipitated composite in which the elements are in an evenly mixed state can be obtained through the subsequent addition of an alkali compound. It is therefore thought that in the positive active material obtained by this process, at least the nickel element and manganese element arc in a more evenly mixed state than in ones according to related-art techniques. This is presumed to enable a battery having excellent discharge capacity to be produced. When the coprecipitated composite is a coprecipitated Ni-Mn-Co composite, this composite is thought to be in the form of a Ni-Mn-Co composite hydroxide or Ni-Mn-Co composite oxide.

Examples of the nickel compound and manganese compound arc the same as those enumerated hereinabove. Examples of the Co compound arc the same as the examples of the Co compound enumerated hereinabove. Examples of the reducing agent include hydrazine. As the alkali compound can be used sodium hydroxide, potassium hydroxide, lithium hydroxide, and the like either alone or in combination. As the complexing agent can be advantageously used one or more compounds able to release an ammonium ion in aqueous solutions. Specifically, ammonium salt compounds such as ammonium nitrate, ammonium sulfate, and ammonium hydrochloride and ammonia water may be used alone or in combination.

In the coprecipitation step, it is preferred that the pH of the aqueous solution during neutralization be kept constant.

In case where a reducing agent, e.g., hydrazine, is not added to the aqueous solution in precipitating a coprecipitated composite based on a pH charge in the coprecipitation step, then manganese in an oxidized state is incorporated into a coprecipitated Mn-Ni-Co composite to form layers comprising manganese and nickel bonded to each other through oxygen. Anionic molecule such as water and carbonic acid molecules are incorporated between these layers to form an $\alpha$-Ni(OH)$_2$ structure. When the resultant coprecipitated composite in this state is mixed with a lithium compound and calcined, then the highly oxidized manganese reacts preferentially with lithium to yield impurities including Li$_2$MnO$_3$ which do not have a lithium operating voltage around 4 V, resulting in a reduced discharge capacity.

It is therefore preferred that the atmosphere in the reaction vessel in the coprecipitation step be a reducing atmosphere so as to prevent manganese oxidation as stated above. The use of a reducing atmosphere prevents formation of manganese oxides, e.g., Mn$_3$O$_4$, and of an $\alpha$-Ni(OH)$_2$ structure, whereby a coprecipitated composite comprising crystal particles in which the elements have been evenly mixed can be obtained with higher certainty. When this coprecipitated composite is used to produce a composite oxide, which will be described later, and a positive active material comprising this composite oxide is used, then a non-aqueous electrolyte secondary battery excellent in high-rate discharge performance and charge/discharge cycle performance and having a high energy density (high discharge capacity) can be produced.

In the coprecipitation step, use may be made of a method in which an aqueous nickel (Ni) compound solution, an aqueous manganese (Mn) compound solution, an aqueous Co compound solution, an aqueous complexing agent solution, and an aqueous reducing agent solution are continuously fed to a reaction vessel, each solution being fed independently or as a mixture of at least two of the aqueous solutions, while continuously supplying an aqueous alkali compound solution to the reaction vessel, and the coprecipitated Ni-Mn-Co composite yielded is continuously taken out. By this method, a coprecipitated composite can he obtained with improved productivity. In addition, when the nickel compound, manganese compound, and Co compound are used in a ratio of A:B:C (by mole), then a coprecipitated Ni-Mn-Co composite in which the Ni:Mn:Co ratio is substantially A:B:C can be obtained without fail.

Besides being produced by the coprecipitation step, as composite oxide may be produced thresh a coating coprecipitation step which comprises adding an alkali compound and a complexing agent to an aqueous solution/dispersion combining dispersed therein the coprecipitated Ni-Mn composite obtained in the coprecipitation step and further containing dissolved therein a Co compound to thereby adjust the pH of the aqueous solution/dispersion to 10 to 13 and deposit a coprecipitated composite of the element Co on the surface of the coprecipitated Ni-Mn composite obtained in the coprecipitation step. By this method, the amount of cobalt to be added can be regulated with higher certainty without disturbing the evenly mixed state of Ni-Mn. Examples of the alkali compound and complexing agent include the same ones as enumerated hereinabove.

In the case where the aqueous solution in the coprecipitation step contains compounds having elements other than nickel and manganese, some of these elements of different kinds are less apt to be incorporated into the coprecipitated composite. However, when a coprecipitated composite whose surface has been coated with such an element of a different kind is produced by the coating coprecipitation step described above and this composite is subsequently calcined together with a lithium compound, then elements contained in the coprecipitated composite can be displaced by part or ail of the element of a different kind in a solid solution state, whereby a composite oxide containing the element of a different kind incorporated therein with higher certainty can be obtained. Consequently, a battery having a high discharge capacity and excellent charge/discharge cycle performance can be produced. Namely, according to the coating coprecipitation step, there is a wider choice of elements of different kinds which can be incorporated into coprecipitated composites.

No difference in the discharge capacity of the battery finally obtained was observed between the case in which a coprecipitated composite was obtained by the coprecipitation step and the case in which a coprecipitated composite was obtained by a combination of the coprecipitation step and the coating coprecipitation step.

The coprecipitated composite obtained through the coprecipitation step explained above or through the coprecipitation step and the coating coprecipitation step is calcined together with a lithium compound, whereby a Li-Ni-Mn-Co composite oxide suitable for use as the composite oxide to be contained in the positive active materials according to the invention can be produced.

Examples of the lithium compound include lithium hydroxide and lithium carbonate. However, lithium hydroxide is preferred because solid-phase reactions thereof with the coprecipitated composite can be conducted at lower temperatures.

The calcining is preferably conducted at a temperature of from 900°C to 1.100°C for 3 hours or more. According to this constitution, a battery especially having a high energy density (high discharge capacity) and excellent in high-rate discharge performance and charge/discharge cycle performance can be produced.

In the case where the calcining temperature is lower than 900°C, solid-phase reactions do not proceed and this not only results in poor cycle life performance but also makes it difficult to secure initial capacity. In this case, considerable unevenness of capacity is apt to results and high-rate discharge capacity also tends to become poor. Furthermore, granulation is less apt to proceed in the calcining for producing a Li-Ni-Mn-Co composite oxide and, hence, pores derived from the coprecipitated composite are apt to remain, resuming in a large specific surface area. Consequently, a high-density active material is difficult to obtain and, hence, a battery excellent in charge/discharge cycle performance is difficult to produce.

In the case where a coprecipitated composite to which cobalt has been added can be used, sintering/granulation is apt to proceed during calcining because cobalt has the effect of facilitating granulation. Although the resultant composite oxide hence tends to have an increased density, diffusion in the solid phase of nickel and manganese is still insufficient and satisfactory performance cannot be exhibited. Consequently, the calcining temperature is desirably 900°C or higher as stated above.

On the other hand, calcining temperatures higher than 1,100°C are thought to be undesirable because volatilization of the lithium source such as LiOH proceeds and, hence, it is difficult to regulate the composition of the composite oxide.

Although processes for obtaining the positive active materials according to the invention have been explained, the composite oxide preferably has a particle size distribution in which the 50% particle diameter ($D_{50}$) is larger than 0.8 $\mu$m and not larger than 10 $\mu$m and the 10% particle diameter ($D_{10}$) is larger than 0.4 $\mu$m and not larger than 7 $\mu$m. Not only a high discharge voltage and a high discharge capacity but also a high level of capacity retention in charge/discharge cycling can be maintained.

For obtaining a powder having such a particle size distribution, it is important to produce particles while properly regulating the particle size distribution in the stage of the precipitation step (coprecipitation step). This enables production efficiency and a high discharge capacity to be obtained. In case where the precipitation step yields particles having too large a secondary-particle diameter and an increased density, then the secondary particles tend to be densified in the step of mixing with a lithium compound and calcining, resulting in a reduced discharge capacity due to the decrease in the amount of voids in the particles. This kind of composite oxide has such a property that during discharge reactions, the incorporation of lithium ions from the electrolyte bulk side into the composite oxide particles is the rate-determining step. It is hence thought that the point shown above is an important point to be attained for obtaining a battery exhibiting high battery performance.

A technique which may be used for improving the properties of such an active material which has been densified is mechanical pulverization. However, use of an apparatus such as, e.g., a ball mill preferentially yields fine particles smaller than 1 $\mu$m. The resultant active material comes into contact with an electrolyte in a large area to cause side reactions including oxidative decomposition of the electrolyte. Thus, there is a possibility that such mechanical pulverization might impair rather than improve battery performance. There also is a possibility that the shearing heat generated by the friction among particles during pulverization might highly oxidize exposed manganese to reduce battery performance.

Furthermore, in the precipitation step for obtaining a powder having the particle size distribution described above, it is necessary to properly reduce, in particular, the rate of precipitate crystal growth. Especially for increasing $D_{10}$, i.e., for increasing the proportion of fine particles to obtain a wide particle size distribution, it is necessary to frequently generate random nuclei and, on the other hand, to inhibit the growth of crystal nuclei. Factors important for this are apparatus factors such as reactor shape and stirring blades and control factors such as the time period of precipitate residence in the reaction vessel, reaction vessel temperature, metal ion amount, solution pH, ammonia concentration, concentration of an oxidation number regulator, and oxygen concentration.

With respect to detailed conditions for efficiently obtaining a composite oxide having the optimal particle size distribution described above, there still is room for investigations. However, by producing a composite oxide under production conditions within the range shown above and screening the composite oxide to regulate the particle size distribution thereof, the positive active material can be made to produce its effects.

The positive active materials according to embodiments of the invention preferably further contain a lithium-cobalt oxide. When such positive active materials are used, a battery having enhanced high-rate discharge performance can be obtained. The amount of the lithium-cobalt oxide to be contained is preferably from 5% by weight to 95% by weight based on the specific composite oxide according to the invention. In case where the amount thereof is smaller than 5% by weight, high high-rate discharge performance, which is characteristic of the lithium-cobalt oxide, is difficult for a battery to impart. On the other hand, amounts thereof larger than 95% by weight are undesirable because the high discharge capacity possessed by the specific composite oxide according to the invention cannot be expected.

The positive active materials according to embodiments of the invention preferably further contain a lithium-manganese compound which has a spinel structure and is represented by $Li_{1+s}Mn_{2-s-t}M'''_tO_4$ (wherein $0 \leqq s \leqq 0.3$ ; $0 \leqq t \leqq 0.2$; and M''' is at least one element selected from Mg, Al, Ti, V, Cr, Fe, Co, and Ni). When such positive active materials are used, a battery combining low-temperature high-rate discharge performance and storage performance on a high level can be obtained.

The value of s in $Li_{1+s}Mn_{2-s-t}M'''_tO_4$ may be 0. However, for improving the structural stability of the spinel structure in charge/discharge, it is preferred to form a so-called lithium-rich structure in which part of the manganese sites have been displaced by lithium. Although s may be any value in the range of $0 \leqq s \leqq 0.3$, the value of s is more preferably in the range of $0 \leqq s \leqq 0.1$ because the effect described above can be produced while maintaining a high discharge capacity. Furthermore, use of element M''' of a different kind is preferred because the same effect as the lithium-rich spinel is produced. The value of t, which indicates the amount of the element of a different kind in this case, is preferably in the range of $0 \leqq t \leqq 0.2$ because use of this lithium-manganese compound improves charge/discharge cycle performance without impairing discharge capacity.

Examples of element M''' of a different kind include Mg, Al, Ti, V, Cr, Fe, Co, and Ni. Use of Mg, Al, Ti, V, Cr, Fe, Co, or Ni, in particular, Mg, Al, V, Cr, Fe, Co, or Ni, is preferred because dissolution of manganese species at high temperatures is inhibited and battery performance is improved. Such elements of different kinds may be used alone or in combination of two or more thereof.

In the case of using elements of different kinds, the calcining materials containing the elements of different kinds are not particularly limited and use can be made of salts or oxides of the elements. For example, when compounds of the elements of different kinds are used together with LiOB and $MnO_2$ and subjected to a heat treatment, then a compound represented by $Li_{1+s}Mn_{2-s-t}M'''_tO_4$ can be synthesized.

The amount of the compound represented by $Li_{1+s}Mn_{2-s-t}M'''_tO_4$ to be contained is preferably from 5% by weight to 95% by weight based on the specific composite oxide according to the invention. In case where the amount thereof is smaller than 5% by weight, low-temperature high-rate discharge performance, which is characteristic of the lithium-manganese oxide, is difficult to impart. On the other hand, amounts thereof larger than 95% by weight are undesirable because the high discharge capacity possessed by the specific composite oxide according to the invention cannot be expected.

The positive active materials may further contain other compounds. Examples of such other compounds include Group IV metal compounds such as CuO, $Cu_2O$, $Ag_2O$, CuS and $CuSO_4$, Group IV metal compounds such as $TiS_2$, $SiO_2$, and SnO, Group V metal compounds such as $V_2O_5$, $V_6O_{12}$, $VO_x$, $Nb_2O_5$, $Bi_2O_3$, and $Sb_2O_3$, Group VI metal compounds such as $CrO_3$, $Cr_2O_3$, $MoO_3$, $MoS_2$, $WO_3$, and $SeO_2$, Group VII metal compounds such as $MnO_2$ and $Mn_2O_3$, and Group VIII metal compounds such as $Fe_2O_3$, FeO, $Fe_3O_4$, $Ni_2O_3$, NiO, $CoO_3$, and CoO; compounds such as lithium-cobalt composite oxides and lithium-manganese composite oxides (compounds other than the lithium-cobalt oxides described above and the lithium-manganese compounds represented by $Li_{1+s}Mn_{2-s-t}M'''_tO_4$); conductive polymeric compounds such as disulfides, polypyrrole, polyaniline, poly-p-phenylene, polyacetylene, and polyacene materials; and carbonaceous materials of the pseudo-graphite structure. However, the optionally usable compounds should not be construed as being limited to these examples.

In the case where a combination of the specific composite oxide according to the invention and one or more other compounds is used as a positive active material, the proportion of these optional compounds is not particularly limited as long as the incorporation thereof does not impair the effects of the invention. However, the proportion of such optional compounds is preferably from 1% by weight to 50% by weight, more preferably from 5% by weight to 30% by weight, based on the total weight of the positive active material.

The non-aqueous electrolyte secondary battery (hereinafter often referred to simply as "battery") according to the invention has a positive active material for non-aqueous electrolyte secondary batteries (hereinafter often referred to simply as "positive electrode"), a negative electrode for non-aqueous electrolyte secondary batteries (hereinafter often referred to simply as "negative electrode"), and a non-aqueous electrolyte. In general, a separator for non-aqueous electrolyte batteries is disposed between the positive electrode and the negative electrode. Preferred examples of the non-aqueous electrolyte include ones comprising a non-aqueous solvent and an electrolyte salt contained therein.

The non-aqueous electrolyte can generally be any of ones proposed for use in lithium batteries or the like. Examples of the non-aqueous solvent include cyclic carbonic esters such as propylene carbonate, ethylene carbonate, butylene carbonate, chloroethylene carbonate, and vinylene carbonate; cyclic esters such as γ-butyrolactone and γ-valerolactone; chain carbonates such as dimethyl carbonate, diethyl carbonate, and ethyl methyl carbonate; chain esters such as methyl formate, methyl acetate, and methyl butyrate; tetrahydrofuran or derivatives thereof; ethers such as 1,3-dioxane, 1,4-dioxane, 1,2-dimethoxyethane, 1,4-dibutoxyethane, and methyldiglyme; nitriles such as acetonitrile and benzonitrile; dioxolane or derivatives thereof; and ethylene sulfide, sulfolane, sultones, or derivatives thereof. These may be used alone or as a mixture of two or more thereof. However, the non-aqueous solvent should not be construed as being limited to these examples.

Examples of the electrolyte salt include inorganic ion salts containing one of lithium (Li), sodium (Na), and potassium (K), such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$, and KSCN; and organic ion salts such as $LiCF_3SO_3$, LiN $(CF_3SO_2)_2$, LiN $(C_2F_5SO_2)_2$, LiN $(CF_3SO_2)$ $(C_4F_9SO_2)$, LiC $(CF_3SO_2)_3$, LiC $(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearylsulfonate, lithium octylsulfonate, and lithium dodecylbenzenesulfonate. These ionic compounds can be used alone or as a mixture of two or more thereof.

Furthermore, a mixture of an inorganic ion salt, such as $LiBF_4$ or $LiPF_6$, and a lithium salt having a perfluoroalkyl group, such as $LiN(C_2F_5SO_2)_2$, is more desirable because use of this mixture can reduce the viscosity of the electrolyte and hence further enhance low-temperature characteristics.

The concentration of the electrolyte salt in the non-aqueous electrolyte is preferably from 0.1 mol/l to 5 mol/l, more preferably from 1 mol/l to 2.5 mol/l, from the standpoint of obtaining a battery having high battery characteristics without fail.

The positive electrode employs a positive active material according to the invention as a major component. It is preferably produced by kneading the positive active material according to the invention together with a conductive material and a binder and optionally with a filler to obtain a positive composite, subsequently applying or press-bonding this positive composite to a foil, lath plate, or the like serving as a current corrector, and heat-treating the resultant structure at a temperature of about from 50°C to 250°C for about 2 hours. The content of the positive active material is regulated to usually from 80% by weight to 99% by weight, preferably from 85% by weight to 97% by weight, based on the positive electrode.

The negative electrode comprises a negative-electrode material as a major component. As the negative-electrode material may be selected any material capable of doping/undoping lithium ions. Examples thereof include lithium metal, lithium alloys (lithium metal-containing alloys such as lithium-aluminum, lithium-lead, lithium-tin, lithium-aluminum-tin, lithium-gallium, and Wood's metal), lithium composite oxides (lithium-titanium), and silicon nitride, and further include alloys capable of doping/undoping lithium and carbonaceous materials (e.g., graphites, hard carbon, low-temperature-calcined carbon, and amorphous carbon). Preferred of these for use as a negative-electrode material are graphites because graphites have an operating potential very close to that of metallic lithium and are hence effective in diminishing self-discharge and reducing the irreversible capacity in charge/discharge in the case of employing a lithium salt as an electrolyte salt. For example, artificial graphite and natural graphite are preferred. In particular, a graphite negative active material whose surface has been modified with, e.g., amorphous carbon is desirable because gas generation therefrom during charge is little.

Results of analysis of preferred graphites by X-ray diffractometry and another technique are shown below.
Lattice spacing ($d_{002}$): 0.333-0.350 nm
Crystallite size in a-axis direction, La: 20 nm or larger
Crystallite size in c-axis direction, Lc: 20 nm or larger
True density: 2.00-2.25 g/cm$^3$

It is also possible to modify a graphite by adding thereto a metal oxide, e.g., tin oxide or silicon oxide, phosphorus, boron, amorphous carbon, or the like. In particular, modifying the surface of a graphite by the method described above is desirable because this modification can inhibit electrolyte decomposition and thereby heighten battery characteristics. Furthermore, a combination of a graphite and either lithium metal or a lithium metal-containing alloy, such as lithium-aluminum, lithium-lead, lithium-tin, lithium-aluminum-tin, lithium-gallium, or Wood's metal, or the like can be used as a negative active material. A graphite into which lithium has been inserted beforehand by electrochemical reduction can also be used as a negative active material. The content of the negative-electrode material is regulated to usually from 80% by weight to 99% by weight, preferably from 90% by weight to 98% by weight, based on the negative electrode.

The powder of the positive active material and the powder of the negative-electrode material desirably have an average particle size of 100 $\mu$m or smaller. In particular, it is desirable that the average particle size of the powder of the positive active material be 10 $\mu$m or smaller for the purpose of improving the high-output characteristics of the battery. A pulverizer and a classifier are used for obtaining a powder having a given size. For example, use is made of a mortar, ball mill, sand mill, oscillating ball mill, planetary ball mill, jet mill, counter jet mill, or cyclone type jet mill and sieves or the like. Pulverization may be conducted by wet pulverization in which water or an organic solvent, e.g., hexane, coexists. Methods of classification are not particularly limited, and sieves, an air classifier, or the like is used in each of dry and wet processes according to need.

The battery according to the invention preferably has the following constitution: the positive active material is one which undergoes a decrease in crystal lattice volume with the lithium ion release accompanying the charge of the battery, the degree of the decrease in crystal lattice volume being up to 4% based on the crystal lattice volume of the positive active material as measured when the battery is in a discharge termination state; the negative-electrode material is one which undergoes an increase in crystal lattice volume with the lithium ion dope accompanying the charge of the battery, the degree of the increase in crystal lattice volume being up to 6% based on the crystal lattice volume of the negative-electrode material as measured when the battery is in a discharge termination state; the value of the volume increase for the negative-electrode material is equal to or larger than the value of the volume decrease for the positive active material in an ordinary charge/discharge range for the battery; and the difference between the value of the volume increase for the negative-electrode material and the value of the volume decrease for the positive active material in an ordinary charge/discharge range for the battery is from 0% to less than 3%.

With respect to the positive active material which undergoes a volume decrease upon charge, many compounds are usable which have any of the compositions described in the first embodiment and second embodiment and have an $\alpha$-NaFeO$_2$ structure.

As the negative-electrode material undergoing a volume increase upon charge may be selected any material capable of incorporating lithium ions into the structure. However, a graphite which, when analyzed by X-ray diffractometry and another technique, gives analytical results within the following ranges is preferred. This is because such graphite is, for example, extremely reduced in the content of oxides of tin, silicon, and the like and in capacity deterioration caused by charge/discharge cycling.

Lattice spacing ($d_{002}$): 0.335-0.358 nm

Crystallite size in a-axis direction, La: 20 nm to 100 nm

Crystallite size in c-axis direction, Lc: 20 nm to 100 nm

True density: 2.00-2.25 g/cm$^3$

In this constitution, the following combination is selected as the positive active material and negative-electrode material described above. The positive active material is one in which the degree of decrease in the crystal lattice volume is up to 4% based on the crystal lattice volume of the positive active material as measured when the battery is in a discharge termination state. The negative-electrode material is one in which the degree of increase in the crystal lattice volume is up to 6% based on the crystal lattice volume of the negative-electrode material as measured when the battery is in a discharge termination state. Furthermore, the value of the volume increase for the negative-electrode material is equal to or larger than the value of the volume decrease for the positive active material in an ordinary charge/discharge range for the battery. In addition, the difference between the value of the volume increase for the negative-electrode material and the value of the volume decrease for the positive active material in an ordinary charge/discharge range for the battery is from 0% to less than 3%.

The term ordinary charge/discharge range means the rated range of use for the battery wherein the battery is neither overcharged nor over-discharged. More particularly, it means a charge/discharge range in which the battery is used under the rated conditions specified in a catalog. It does not mean a charge/discharge range including abuse such as overcharge and over-discharge. Specifically, the ordinary charge/discharge range means a range of up to about 4.6 V in terms of positive electrode potential based on lithium metal.

Although the positive active material and negative-electrode material which are major components of the positive electrode and negative electrode were described above in detail, the positive electrode and negative electrode may contain a conductive material, binder, thickener, filler, and the like as other components besides the major components.

The conductive material is not limited as long as it is an electron-conductive material not adversely influencing battery performance. Usually, however, conductive materials such as natural graphite (e.g., flake graphite, flaky graphite, or soil-like graphite), artificial graphite, carbon black, acetylene black, Ketjen Black, carbon whiskers, carbon fibers, metal (e.g., copper, nickel, aluminum, silver, or gold) powders, metal fibers, and conductive ceramic materials can be incorporated alone or as a mixture thereof.

A preferred conductive material of these is acetylene black from the standpoints of electron-conductive properties and applicability. The amount of the conductive material to be added is preferably from 0.1% by weight to 50% by weight, especially preferably from 0.5% by weight to 30% by weight, based on the total weight of the positive electrode or negative electrode. It is especially desirable to use acetylene black which has been pulverized to ultrafine particles of from 0.1 to 0.5 μm, because use thereof is effective in reducing the amount of carbon required. For mixing those ingredients, physical mixing is conducted. Homogeneous mixing is ideal. For this mixing, a powder mixer such as a V-type mixer, S-type mixer, mortar mill, ball mill, or planetary mill can be used in a dry or wet mixing process.

As the binder can usually be used one of or a mixture of two or more of thermoplastic resins such as polytetrafluoroethylene (PTFE), poly (vinylidene fluoride) (PVdF), polyethylene, and polypropylene and polymers having rubber elasticity, such as ethylene/propylene/diene terpolymers (EPDM), sulfonated EPDM, styrene/butadiene rubbers (SBR), and fluororubbers. The amount of the binder to be added is preferably from 1 to 50% by weight, especially preferably from 2 to 30% by weight, based on the total weight of the positive electrode or negative electrode.

In particular, the positive electrode according to the invention preferably contains a conductive carbon material in an amount of 1% by weight or more based on the positive active material and further contains a binder which has ionic conductivity when it contains a liquid electrolyte. In the case where a liquid electrolyte comprising LiPF$_6$ as an electrolyte and ethylene carbonate, diethylene carbonate, dimethyl carbonate, or the like as a solvent is to be used, the binder which has ionic conductivity when it contains a liquid electrolyte preferably in poly (vinylidene fluoride) (PVdF) or polyethylene (poly(ethylene oxide)) among the binders enumerated above.

The Li-Ni-Mn-Co composite oxide described above gives a battery having slightly lower high-rate discharge performance than the battery obtained with a Li-Co composite oxide, probably because that composite oxide is inferior in solid-state ionic conductivity to the Li-Co composite oxide. However, when a binder which has ionic conductivity when it contains a liquid electrolyte is added to the positive electrode together with at least 1% by weight conductive carbon material based on the positive active material and the liquid electrolyte is used, then a battery having excellent high-rate discharge performance can be produced.

Although the reasons for that have not been fully elucidated, it is thought that in the Li-Ni-Mn-Co composite oxide, the conduction of lithium ions depends on pores present in the composite oxide because the composite oxide has insufficient solid-state conductivity or has poor ionic conductivity at boundaries between primary particles. In case where a binder having no ionic conductivity comes into these pores, lithium ion conduction passages are diminished and this is apt to reduce the high-rate discharge performance of the battery. It is therefore preferred to use a binder having ionic conductivity as stated above. Furthermore, even in the case where a binder having ionic conductivity is used, the positive active material cannot have electron passages when at least 1% by weight conductive carbon material is not added to the positive electrode. In the battery thus obtained, a decrease in discharge capacity in low-rate discharge is observed probably because a positive active material which does not react has been locally formed.

As the thickener can usually be used one of or a mixture of two or more of polysaccharides such as carboxymethyl cellulose and methyl cellulose and the like. In the case of thickeners having functional groups reactive with lithium, such as polysaccharides, it is desired to deactivate the functional groups beforehand by a treatment such as, e.g., methylation. The amount of the thickener to be added is preferably from 0.5 to 10% by weight, especially preferably from 1 to 2% by weight, based on the total weight of the positive electrode or negative electrode.

As the filler may be used any material which does not adversely influence battery performance. Usually, use is made of an olefin polymer such as polypropylene or polyethylene, amorphous silica, alumina, zeolite, glass, carbon, etc. The amount of the filler to be added is preferably up to 30% by weight based on the total weight of the positive electrode or negative electrode.

The positive electrode and negative electrode are produced preferably by mixing the main constituent ingredient (i.e., a positive active material in the case of the positive electrode or a negative-electrode material in the case of the negative electrode), a conductive material, and a binder with an organic solvent, e.g., N-methylpyrrolidone or toluene, to prepare a slurry, subsequently applying the slurry to the current collector which will be described later, and drying the coating. In the application, it is desired to apply the slurry, for example, by roller coating using an applicator roll, screen coating, doctor blade coating, spin coating, or coating with a bar coater or the like in any desired thickness and any desired shape. However, methods of application should not be construed as being limited to these.

As the current collector may be used any electron conductor which does not exert an adverse influence in the battery fabricated. For example, the current collector for the positive electrode can be aluminum, titanium, stainless steel, nickel, calcined carbon, a conductive polymer, conductive glass, or the like. Besides these, use can be made, as the positive-electrode current collector, of a material obtained by treating the surface of aluminum, copper, or the like with carbon, nickel, titanium, silver, or the like for the purpose of improving adhesiveness, conductivity, and oxidation resistance. The current collector for the negative electrode can be copper, nickel, iron, stainless steel, titanium, aluminum, calcined carbon, a conductive polymer, conductive glass, Al-Cd alloy, or the like. Besides these, use can be made, as the negative-electrode current collector, of a material obtained by treating the surface of copper or the like with carbon, nickel, titanium, silver, or the like for the purpose of improving adhesiveness, conductivity, and reduction resistance. These materials can be subjected to a surface oxidation treatment.

With respect to the shape of the current collector, use is made of a foil form or a film, sheet, net, punched or expanded, lath, porous, or foamed form. A structure made up of fibers is also usable. Although the thickness thereof is not particularly limited, collectors having a thickness of from 1 to 500 $\mu$m are used. Of these current collectors, a preferred collector for the positive electrode is an aluminum foil, which has excellent oxidation resistance. Preferred current collectors for the negative electrode are a copper foil, nickel foil, and iron foil, which are excellent in reduction resistance and electrical conductivity and are inexpensive, and an alloy foil containing part of these. Furthermore, these foils preferably are ones in which the rough-surface side has a surface roughness Ra of 0.2 $\mu$m or more. This surface roughness enables the current collector to be in highly close contact with the positive active material or negative-electrode material. It is therefore preferred to use an electrolytic foil, which has such a rough surface. Most preferred is an electrolytic foil which has undergone a "hana" surface treatment. Furthermore, in the case where these foils are to be coated on both sides, it is desirable that both sides have the same or almost the same surface roughness.

The separator for non-aqueous electrolyte batteries preferably is one of or a combination of two or more of porous films, nonwoven fabrics, and the like which show excellent rate characteristics. Examples of the material constituting the separator for non-aqueous electrolyte batteries include polyolefin resins represented by polyethylene and polypropylene, polyester resins represented by poly(ethylene terephthalate) and poly(butylene terephthalate), poly(vinylidene fluoride), vinylidene fluoride/hexafluoropropylene copolymers, vinylidene fluoride/perfluorovinyl ether copolymers, vinylidene fluoride/tetrafluoroethylene copolymers, vinylidene fluoride/trifluoroethylene copolymers, vinylidene fluoride/fluoroethylene copolymers, vinylidene fluoride/hexafluoroacetone copolymers, vinylidene fluoride/ethylene copolymers, vinylidene fluoride/propylene copolymers, vinylidene fluoride/trifluoropropylene copolymers, vinylidene fluoride/tetrafluoro-ethylene/hexafluoropropylene copolymers, and vinylidene fluoride/ethylene/tetrafluoroethylene copolymers.

The porosity of the separator for non-aqueous electrolyte batteries is preferably 98% by volume or lower from the standpoint of strength. The porosity thereof is preferably 20% by volume or higher from the standpoint of discharge capacity.

As the separator for non-aqueous electrolyte batteries may be used a polymer gel constituted of a polymer of, e.g., acrylonitrile, ethylene oxide, propylene oxide, methyl methacrylate, vinyl acetate, vinylpyrrolidone, vinylidene fluoride , or the like and an electrolyte.

Use of a non-aqueous electrolyte in such a gel form is preferred in that it has the effect of preventing electrolyte leakage.

Furthermore, a separator for non-aqueous electrolyte batteries which comprises a combination of a porous film, nonwoven fabric, or the like such as that described above and a polymer gel is desirable because use of this separator improves electrolyte retention. Namely, the surface of a microporous polyethylene film and the walls of the micropores are coated in a thickness of up to several micrometers with a polymer having affinity for solvents and an electrolyte is caused to held in the micropores of the coated film, whereby the polymer having affinity for solvents gels.

Examples of the polymer having affinity for solvents include poly(vinylidene fluoride) and polymers formed by the crosslinking of an acrylate monomer having an ethylene oxide group or ester group, epoxy monomer, monomer having isocyanate groups, or the like. These monomers can be crosslinked with heating or ultraviolet (UV) in the presence of a free-radical initiator or crosslinked with actinic rays, such as electron beams (EB), or the like.

For the purpose of regulating strength or properties, a property regulator can be incorporated into the polymer having affinity for solvents in such an amount as not to inhibit the formation of a crosslinked structure. Examples of the property regulator include inorganic fillers {metal oxides such as silicon oxide, titanium oxide, aluminum oxide, magnesium oxide, zirconium oxide, zinc oxide, and iron oxide and metal carbonates such as calcium carbonate and magnesium carbonate} and polymers {poly(vinylidene fluoride), vinylidene fluoride/hexafluoropropylene copolymers, polyacrylonitrile, poly(methyl methacrylate), and the like}. The amount of the property regulator to be added is generally up to 50% by weight, preferably up to 20% by weight, based on the crosslinkable monomer.

Examples of the acrylate monomer include unsaturated monomers having a functionality of 2 or higher. Specific examples thereof include difunctional (meth)acrylates {ethylene glycol di(meth)acrylate, propylene glycol di(meth)acrylate, adipic acid dineopentyl glycol ester di(meth)acrylate, polyethylene glycol di(meth)acrylates having a degree of polymerization of 2 or higher, polypropylene glycol di(meth)acrylates having a degree of polymerization of 2 or higher, polyoxyethylene/polyoxypropylene copolymer di(meth)-acrylates, butanediol di(meth)acrylate, hexamethylene glycol di(meth)acrylate, and the like}, trifunctional (meth) acrylates {trimethylolpropane tri(meth)acrylate, glycerol tri(meth)acrylate, tri(meth)acrylates of ethylene oxide adducts of glycerol, tri(meth)acrylates of propylene oxide adducts of glycerol, tri(meth)acrylates of ethylene oxide/propylene oxide adducts of glycerol, and the like}, and (meth)acrylates having a functionality of 4 or higher {pentaerythritol tetra(meth)acrylate, diglycerol hexa(meth)acrylate, and the like}. These monomers can be used alone or in combination.

A monofunctional monomer may be added to the acrylate monomer for the purpose of property regulation, etc. Examples of the monofunctional monomer include unsaturated carboxylic acids {acrylic acid, methacrylic acid, crotonic acid, cinnamic acid, vinylbenzoic acid, maleic acid, fumaric acid, itaconic acid, citraconic acid, mesaconic acid, methylmalonic acid, aconitic acid, and the like}; unsaturated sulfonic acids {styrenesulfonic acid, acrylamido-2-methylpropanesulfonic acid, and the like} or salts of these (lithium salts, sodium salts, potassium salts, ammonium salts, tetraalkylammonium salts, and the like); those unsaturated carboxylic acids partly esterified with a $C_1$-$C_{18}$ aliphatic or alicyclic alcohol, alkylene ($C_2$-$C_4$) glycol, polyalkylene ($C_2$-$C_4$) glycol, or the like (methyl maleate, monohydroxyethyl maleate, and the like) and partly amidated with ammonia or a primary or secondary amine (maleic acid monoamide, N-methylmaleic acid monoamide, N,N-diethylmaleic acid monoamide, and the like); (meth)acrylic esters [esters of (meth)acrylic acid with a $C_1$-$C_{18}$ aliphatic (e.g., methyl, ethyl, propyl, butyl, 2-ethylhexyl, or stearyl) alcohol; and esters of (meth)acrylic acid with an alkylene ($C_2$-$C_4$) glycol (ethylene glycol, propylene glycol, 1,4-butanediol, or the like) and with a polyalkylene ($C_2$-$C_4$) glycol (polyethylene glycol or polypropylene glycol)]; (meth)acrylamide or N-substituted (meth)acrylamides [(meth)acrylamide, N-methyl(meth)acrylamide, N-methylol(meth)acrylamide, and the like]; vinyl esters or allyl esters [vinyl acetate, allyl acetate, and the like]; vinyl ethers or allyl ethers [butyl vinyl ether, dodecyl allyl ether, and the like]; unsaturated nitrile compounds [(meth)acrylonitrile, crotononitrile, and the like]; unsaturated alcohols [(meth)allyl alcohol and the like]; unsaturated amines [(meth)allylamine, dimethylaminoethyl (meth)acrylate, diethylaminoethyl (meth)acrylate, and the like]; heterocycle-containing monomers [N-vinylpyrrolidone, vinylpyridine, and the like]; olefinic aliphatic hydrocarbons [ethylene, propylene, butylene, isobutylene, pentene, ($C_6$-$C_{50}$) α-olefins, and the like] ; olefinic alicyclic hydrocarbons [cyclopentene, cyclohexene, cycloheptene, norbornene, and the like]; olefinic aromatic hydrocarbons [styrene, α-methylstyrene, stilbene, and the like]; unsaturated imides [maleimide and the like]; and halogen-containing monomers [vinyl chloride, vinylidene chloride, vinylidene fluoride, hexafluoropropylene, and the like].

Examples of the epoxy monomer include glycidyl ethers {bisphenol A diglycidyl ether, bisphenol F diglycidyl ether, brominated bisphenol A diglycidyl ether, phenol-novolac glycidyl ether, cresol-novolac glycidyl ether, and the like}, glycidyl esters {hexahydrophthalic acid glycidyl ester, dimer acid glycidyl esters, and the like}, glycidylamines {triglycidyl isocyanurate, tetraglycidyldiaminophenylmethane, and the like}, linear aliphatic epoxides {epoxidized polybutadiene, epoxidized soybean oil, and the like}, and alicyclic epoxides {3,4-epoxy-6-methylcyclohexylmethylcarboxylate, 3,4-epoxycyclohexylmethylcarboxylate, and the like}. These epoxy resins can be used alone or after having been cured by addition of a hardener thereto.

Examples of the hardener include aliphatic polyamines {diethylenetriamine, triethylenetetramine, 3,9-(3-aminopropyl)-2,4,8,10-tetraoxaspiro[5,5]undecane, and the like}, aromatic polyamines {m-xylenediamine, diaminophenylmethane, and the like}, polyamides {dimer acid polyamides and the like}, acid anhydrides {phthalic anhydride, tetrahydromethylphthalic anhydride, hexahydrophthalic anhydride, trimellitic anhydride, and methylnadic anhydride}, phenol compounds {phenolic novolacs and the like}, polymercaptans {polysulfides and the like}, tertiary amines {tris(dimethylaminomethyl)phenol, 2-ethyl-4-methylimidazole, and the like}, and Lewis acid complexes {boron trifluoride/ethylamine complex and the like}.

Examples of the monomer having isocyanate groups include toluene diisocyanate, diphenylmethane diisocyanate, 1,6-hexamethylene diisocyanate, 2,2,4(2,2,4)-trimethylhexamethylene diisocyanate, p-phenylene diisocyanate, 4,4'-dicyclohexylmethane diisocyanate, 3,3'-dimethyldiphenyl 4,4'-diisocyanate, dianisidine diisocyanate, m-xylene diisocyanate, trimethylxylene diisocyanate, isophorone diisocyanate, 1,5-naphthalene diisocyanate, trans-1,4-cyclohexyl diisocyanate, and lysine diisocyanate.

In crosslinking the monomer having isocyanate groups, a compound having active hydrogen may also be used. Examples of this compound include polyols and polyamines [difunctional compounds {water, ethylene glycol, propylene glycol, diethylene glycol, dipropylene glycol, and the like}, trifunctional compounds {glycerol, trimethylolpropane, 1,2,6-hexanetriol, triethanolamine, and the like}, tetrafunctional compounds {pentaerythritol, ethylenediamine, tolylenediamine, diphenylmethanediamine, tetramethylolcyclohexane, methylglucosides, and the like}, pentafunctional compounds {2,2,6,6-tetrakis(hydroxy-methyl)cyclohexanol, diethylenetriamine, and the like}, hexafunctional compounds {sorbitol, mannitol, dulcitol, and the like}, and octafunctional compounds {sucrose and the like}], polyether polyols {propylene oxide and/or ethylene oxide adducts of the polyols or polyamines mentioned above}, and polyester polyols [condensates of the aforementioned polyols with a polybasic acid {adipic acid, o-, m-, or p-phthalic acid, succinic acid, azelaic acid, sebacic acid, or ricinoleic acid), polycaprolactone polyols {poly-ε-caprolactone and the like}, polycondensates of hydroxycarboxylic acids, and the like].

A catalyst may also be used in conducting the crosslinking reaction. Examples of the catalyst include organotin compounds, trialkylphosphines, amines [monoamines {N,N-dimethylcyclohexylamine, triethylamine, and the like), cyclic monoamines (pyridine, N-methylmorpholine, and the like), diamines {N,N,N',N'-tetramethylethylenediamine, N,N,N',N'-tetramethyl-1,3-butanediamine, and the like}, triamines {N,N,N',N'-pentamethyldiethylenetriamine and the like}, hexamines {N,N,N',N'-tetra(3-dimethylamino-propyl)methanediamine and the like}, cyclic polyamines {diazabicyclooctane (DABCO), N,N'-dimethylpiperazine, 1,2-dimethylimidazole, 1,8-diazabicyclo(5,4,0)undecene-7 (DBU), and the like}, and salts of these.

A non-aqueous electrolyte secondary battery according to the invention is produced preferably by a method which comprises superposing a separator for non-aqueous electrolyte batteries, a positive electrode, and a negative electrode, infiltrating an electrolyte thereinto, for example, before or after the superposition, and finally sealing the case with a sheathing material. In the case of a battery employing a wound power generating element comprising a positive electrode and a negative electrode which have been stacked on each other through a separator for non-aqueous electrolyte batteries, it is preferred that an electrolyte be infiltrated into the power generating element before and after the winding. Although the infiltration may be conducted at ordinary pressure, the vacuum impregnation method or the pressure impregnation method can be used.

Examples of the material of the sheathing material in the battery include nickel-plated iron, stainless steel, aluminum, and metal/resin composite films. For example, a metal/resin composite film having a constitution comprising resin films and a metal foil sandwiched therebetween is preferred. Examples of the metal foil are not particularly limited as long as they are foils of aluminum, iron, nickel, copper, stainless steel, titanium, gold, silver, or the like which are free from pinholes. However, aluminum foils are preferred because they are lightweight and inexpensive. Preferred for use as the resin film to be disposed on the outer side in the battery is a resin film having an excellent piercing strength, such as a poly(ethylene terephthalate) film or nylon film. Preferred as the resin film to be disposed on the inner side in the battery is a film which is fusion-bondable and has solvent resistance, such as a polyethylene film or nylon film.

The constitution of the battery is not particularly limited. Examples thereof include a coin battery and button battery which each have a positive electrode, negative electrode, and separator of a single-layer or multilayer structure, and further include a cylindrical battery, prismatic battery, and flat type battery which each have a positive electrode, negative electrode, and roll-form separator.

<Examples>

Examples 1-1 to 1-8, 2-6, 2-12 to 2-14, 3-1, 3-2, 4.1, 4-2, 5-4, 5-5 and 7-3 do not form part of the claimed invention and are provided as background art only.

Composite oxides Al to A10, C6, C12 to C15, C20, C21, C24, D1 to D3, and E1 to E3 also do not form part of the claimed invention and are provided as background art only.

The invention will be explained below in more detail by reference to Examples, but the invention should not be construed as being limited by the following statements.

[Syntheses of Composite Oxides]

(Composite Oxide A1)

The reaction vessel 11 used in this Example was a cylindrical one having in an upper part thereof an overflow pipe 13 for discharging a slurry of a crystallization reaction product from the system always at a constant flow rate, as shown in Fig. 1. The reaction vessel had a capacity of 15 1.

First, 13 1 of water was introduced into this reaction vessel and 32% aqueous sodium hydroxide solution was added thereto in such an amount as to result in a pH of 11.6. The mixture was stirred at 1,000 rpm with a stirrer 12 having 70-mm$\phi$ paddle type stirring blades 12a, and the temperature of the solution in the reaction vessel was kept constant at 50°C with a heater.

A starting-material solution in which Ni/Mn=1/1 (by mole) was prepared by mixing 1.7 mol/l aqueous nickel sulfate solution, 1.1 mol/l aqueous manganese sulfate solution, 6 mol/l aqueous ammonium sulfate solution, and 4 wt% aqueous hydrazine solution in a ratio by volume of 11:17:1.4:0.36 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having an average particle diameter ($D_{50}$) of 11.4 $\mu$m as a coprecipitated nickel-manganese composite. The specific surface area of this powder was measured on the nitrogen desorption side using 4SU-8 U2, manufactured by Yuasa Ionics Inc. As a result, the specific surface area thereof was found to be 35.6 m$^2$/g.

The coprecipitated nickel-manganese composite powder obtained and a powder of lithium hydroxide monohydrate were sufficiently mixed with each other in such weighed amounts as to result in Li/(Ni+Mn)=1.02. This mixture was charged into a pot made of alumina. Using an electric furnace, the mixture charged was heated to 1,030°C at a rate of 100°C/hr, held at 1,030°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 9.1 $\mu$m (composite oxide Al). The specific surface area of this composite oxide was measured on the nitrogen desorption side using 4SU-8 U2, manufactured by Yuasa Ionics Inc. As a result, the specific surface area thereof was found to be 0.9 m$^2$/g.

The total pore volume of this composite oxide was determined by a constant volume method using Nova 1200, manufactured by Quantachrome. Specifically, measurement was made on the desorption side by the BJH method. As a result, the total pore volume thereof was found to be 0.003291 ml/g.

The powder was analyzed by X-ray diffractometry with CuK$_\alpha$ ray. As a result, diffraction peaks were observed respectively at around 2θ's of 18.62°, 36.44°, 37.72°, 38.08°, 44.14°, 48.30°, 58.00°, 63.96°, 64.14°, 64.44°, 64.64°, and 67.70°. It was thus found that a highly crystalline single-phase structure had been synthesized which was considered to be a layer structure ($\alpha$-NaFeO$_2$ type layer structure) belonging to the space group R3/m. It was further found that the lattice constant a was 2.889, lattice constant c was 14.29, and crystal lattice volume V was 0.1033 nm$^3$.

The ratio of the relative intensity of the peak at a 2θ of 44.14° to that of the peak at a 2θ of 18.62° was 0.86. The half widths of these peaks were 0.141° and 0.141°, respectively. The X-ray diffraction pattern for the powder is shown in Fig. 2. An electron photomicrograph (SEM photograph) thereof is shown in Fig. 3. Uniform spherical secondary particles each made up of many aggregated primary particles of about 1 $\mu$m were observed.

Elemental analysis revealed that the composition of this powder was Li$_{1.02}$Mn$_{0.5}$Ni$_{0.5}$O$_2$.

(Composite Oxide A2)

The same procedure as in (Composite Oxide A1) was conducted, except that the mixture of the dried coprecipitated nickel-manganese composite powder having a specific surface area of 35.6 m$^2$/g and an average particle diameter $D_{50}$ of 11.4 $\mu$m obtained in (Composite Oxide A1) and lithium hydroxide monohydrate was calcined at 1,000°C. Thus, a lithium-nickel-manganese composite oxide having a $D_{50}$ of 10.5 $\mu$m (composite oxide A2) was obtained.

The specific surface area thereof was 1.2 m$^2$/g, and the total pore volume thereof was 0.004029 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.894, lattice constant c was 14.33, and crystal lattice volume V was 0.1039 nm$^3$.

The ratio of the relative intensity of the peak at a 2θ of 44.06° to that of the peak at a 2θ of 18.56° was 0.98. The half widths of these peaks were 0.141° and 0.188°, respectively. Elemental analysis revealed that the composition of this powder was $Li_{1.02}Mn_{0.5}Ni_{0.5}O_2$.

(Composite Oxide A3)

The same procedure as in (Composite Oxide A1) was conducted, except that the mixture of the dried coprecipitated nickel-manganese composite powder having a specific surface area of 35.6 $m^2$/g and an average particle diameter $D_{50}$ of 11.4 μm obtained in (Composite Oxide A1) and lithium hydroxide monohydrate was calcined at 950°C. Thus, a lithium-nickel-manganese composite oxide having a $D_{50}$ of 10.5 μm (composite oxide A3) was obtained.

The specific surface area thereof was 1.6 $m^2$/g, and the total pore volume thereof was 0.006015 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.889, lattice constant c was 14.30, and crystal lattice volume V was 0.1034 $nm^3$.

The ratio of the relative intensity of the peak at a 2θ of 44.10° to that of the peak at a 2θ of 18.60° was 0.72. The half widths of these peaks were 0.118° and 0.118°, respectively. Elemental analysis revealed that the composition of this powder was $Li_{1.02}Mn_{0.5}Ni_{0.5}O_2$.

(Composite Oxide A4)

The same procedure as in (Composite Oxide A1) was conducted, except that the mixture of the dried coprecipitated nickel-manganese composite powder having a specific surface area of 35.6 $m^2$/g and an average particle diameter $D_{50}$ of 11.4 μm obtained in (Composite Oxide A1) and lithium hydroxide monohydrate was calcined at 850°C. Thus, a lithium-nickel-manganese composite oxide having a $D_{50}$ of 10.4 μm was obtained.

The specific surface area thereof was 3.5 $m^2$/g, and the total pore volume thereof was 0.01220 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.895, lattice constant c was 14.28, and crystal lattice volume V was 0.1036 $nm^3$.

The ratio of the relative intensity of the peak at a 2θ of 44.15° to that of the peak at a 2θ of 18.65° was 0.63. The half widths of these peaks were 0.176° and 0.118°, respectively. Elemental analysis revealed that the composition of this powder was $Li_{1.02}Mn_{0.5}Ni_{0.5}O_2$. An electron photomicrograph (SEM photograph) thereof is shown in Fig. 4. This composite oxide had a primary-particle size considerably smaller than 1 μm unlike that shown in Fig. 3, showing that particle growth had been insufficient. This poor crystallinity is thought to be a cause of a decrease in charge/discharge cycle performance.

(Composite Oxide A5; Neutralizing Method Heretofore in Use)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 14.5. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn=1/1 (by mole) was prepared by mixing 1.7 mol/l aqueous nickel sulfate solution and 1.1 mol/l aqueous manganese sulfate solution in a ratio by volume of 11:17 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 14.5. Furthermore, the temperature of the solution in the reaction vessel was kept constant at 50°C by intermittently operating the heater.

At 120 hours after initiation of the introduction of the starting-material solution, a slurry of a coprecipitated nickel-manganese composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having an average particle diameter $(D_{50})$ of 5.2 μm as a coprecipitated nickel-manganese composite. The specific surface area of this powder was measured on the nitrogen desorption side using 4SU-8 U2, manufactured by Yuasa Ionics Inc. As a result, the specific surface area thereof was found to be 100 $m^2$/g.

The coprecipitated nickel-manganese composite powder obtained and a powder of lithium hydroxide monohydrate were sufficiently mixed with each other in such weighed amounts as to result in Li/(Ni+Mn)=1.02. This mixture was charged into a pot made of alumina. Using an electric furnace, the mixture charged was heated to 1,030°C at a rate of 100°C/hr, held at 1,030°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 10.2 $\mu$m (composite oxide A5).

The specific surface area thereof was 1.8 m$^2$/g, and the total pore volume thereof was 0.007 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.889, lattice constant c was 14.30, and crystal lattice volume V was 0.1034 nm$^3$.

The ratio of the relative intensity of the peak at a 2θ of 44.12° to that of the peak at a 2θ of 18.60° was 0.77. The half widths of these peaks were 0.282° and 0.212°, respectively. Elemental analysis revealed that the composition of this powder was $Li_{1.02}Mn_{0.5}Ni_{0.5}O_2$.

(Composite Oxide A6; Powder Mixing Method Heretofore in Use)

An electrolytic manganese dioxide powder ($\gamma$-MnO$_2$; purity, 92%) was pulverized with a wet pulverizer to an average particle diameter of 2.0 $\mu$m. A nickel hydroxide powder was pulverized with a wet pulverizer to an average particle diameter of 2.0 $\mu$m. Thereafter, the manganese dioxide powder and the nickel hydroxide powder were mixed together in such a ratio as to result in a nickel /manganese element ratio of 1:1.

The nickel-manganese powder mixture obtained and a powder of lithium hydroxide monohydride were sufficiently mixed with each other in such weighed amounts as to result in Li/(Ni+Mn)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 9.5 $\mu$m (composite oxide A6). The specific surface area thereof was 1.8 m$^2$/g, and the total pore volume thereof was 0.006423 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.891, lattice constant c was 14.30, and crystal lattice volume V was 0.1035 nm$^3$.

The ratio of the relative intensity of the peak at a 2θ of 44.12° to that of the peak at a 2θ of 18.58° was 0.77. The half widths of these peaks were 0.259° and 0.188°, respectively. Elemental analysis revealed that the composition of this powder was $Li_{1.02}Mn_{0.5}Ni_{0.5}O_2$.

(Composite Oxide A7; Powder Mixing Method Heretofore in Use)

An electrolytic manganese dioxide powder ($\gamma$-MnO$_2$; purity, 92%) was pulverized with a wet pulverizer to an average particle diameter of 2.0 $\mu$m. A nickel hydroxide powder was pulverized with a wet pulverizer to an average particle diameter of 2.0 $\mu$m. Thereafter, the manganese dioxide powder and the nickel hydroxide powder were mixed together in such a ratio as to result in a nickel /manganese element ratio of 1:1. The nickel-manganese powder mixture obtained and a powder of lithium hydroxide monohydride were sufficiently mixed with each other in such weighed amounts as to result in Li/(Ni+Mn)=1.02. This mixture was charged into a pot made of alumina. Using an electric furnace, the mixture charged was heated to 1,060°C at a rate of 100°C/hr, held at 1, 060°C for 25 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 13.2 $\mu$m (composite oxide A7). The specific surface area thereof was 0.8 m$^2$/g, and the total pore volume thereof was 0.002715 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.883, lattice constant c was 14.30, and crystal lattice volume V was 0.1029 nm$^3$.

The ratio of the relative intensity of the peak at a 2θ of 44.24° to that of the peak at a 2θ of 18.60° was 0.76. The half widths of these peaks were 0.259° and 0.188°, respectively. Elemental analysis revealed that the composition of this powder was $Li_{1.02}Mn_{0.5}Ni_{0.5}O_2$.

(Composite Oxide A8)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,000 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn=0.4/0.6 (by mole) was prepared by mixing 1.7 mol/l aqueous nickel sulfate solution, 1.1 mol/l aqueous manganese sulfate solution, 6 mol/l aqueous ammonium sulfate solution, and 4 wt% aqueous hydrazine solution in a ratio by volume of 6.59:15.27:1.40:0.36 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having an average particle diameter ($D_{50}$) of 10.6 $\mu$m as a coprecipitated nickel-manganese composite. The specific surface area of this powder was measured on the nitrogen desorption side using 4SU-8 U2, manufactured by Yuasa Ionics Inc. As a result, the specific surface area thereof was found to be 39.4 m$^2$/g.

The coprecipitated nickel-manganese composite powder obtained and a powder of lithium hydroxide monohydrate were sufficiently mixed with each other in such weighed amounts as to result in Li/(Ni+Mn)=1.02. This mixture was charged into a pot made of alumina. Using an electric furnace, the mixture charged was heated to 1,030°C at a rate of 100°C/hr, held at 1,030°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 10.4 $\mu$m (composite oxide A8). The specific surface area of this composite oxide was measured on the nitrogen desorption side using 4SU-8 U2, manufactured by Yuasa Ionics Inc. As a result, the specific surface area thereof was found to be 0.9 m$^2$/g.

The total pore volume of this composite oxide was determined by a constant volume method using Nova 1200, manufactured by Quantachrome. Specifically, measurement was made on the desorption side by the BJH method. As a result, the total pore volume thereof was found to be 0.002964 ml/g.

The powder was analyzed by X-ray diffractometry with CuK$_\alpha$ ray. As a result, it was found that mixed-crystal layer structures belonging to the space group R3/m and the space group C2/m had been formed. The space group C2/m is thought to be Li$_2$MnO$_3$. The ratio of the relative intensity of the peak at a 2$\theta$ of 44.1° to that of the peak at a 2$\theta$ of 18.7° was 0.70. The half widths of these peaks were 0.141° and 0.141°, respectively.

Elemental analysis revealed that the composition of this powder was Li$_{1.02}$Mn$_{0.56}$Ni$_{0.4}$O$_2$.

(Composite Oxide A9)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,000 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn=0.6/0.4 (by mole) was prepared by mixing 1.7 mol/l aqueous nickel sulfate solution, 1.1 mol/l aqueous manganese sulfate solution, 6 mol/l aqueous ammonium sulfate solution, and 4 wt% aqueous hydrazine solution in a ratio by volume of 9.88:10.18:1.40:0.36 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having an average particle diameter ($D_{50}$) of 10.5 $\mu$m as a coprecipitated nickel-manganese composite. The specific surface area of this powder was measured on the nitrogen desorption side using 4SU-8 U2, manufactured by Yuasa Ionics Inc. As a result, the specific surface area thereof was found to be 28.2 m$^2$/g.

The coprecipitated nickel-manganese composite powder obtained and a powder of lithium hydroxide monohydrate were sufficiently mixed with each other in such weighed amounts as to result in Li/(Ni+Mn)=1.02. This mixture was charged into a pot made of alumina. Using an electric furnace, the mixture charged was heated to 1,030°C at a rate of 100°C/hr, held at 1, 030°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese composite oxide having a $D_{50}$ of 10.5 $\mu$m (composite oxide A9). The specific surface area of this composite oxide was measured on the nitrogen desorption side using 4SU-8 U2, manufactured by Yuasa Ionics Inc. As a result, the specific surface area thereof was found to be 0.3 $m^2$/g.

The total pore volume of this composite oxide was determined by a constant volume method using Nova 1200, manufactured by Quantachrome. Specifically, measurement was made on the desorption side by the BJH method. As a result, the total pore volume thereof was found to be 0.000926 ml/g.

The powder was analyzed by X-ray diffractometry with $CuK_{\alpha}$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.885, lattice constant c was 14.29, and crystal lattice volume V was 0.1030 $nm^3$.

The ratio of the relative intensity of the peak at a 2$\theta$ of 44.6° to that of the peak at a 2$\theta$ of 18.9° was 0.88. The half widths of these peaks were 0.094° and 0.141°, respectively.

Elemental analysis revealed that the composition of this powder was $Li_{1.02}Mn_{0.4}Ni_{0.6}O_2$.

(Composite Oxide A10)

The same procedure as in (Composite Oxide A1) was conducted, except that the mixture of the dried coprecipitated nickel-manganese composite powder having a specific surface area of 35.6 $m^2$/g and an average particle diameter $D_{50}$ of 11.4 $\mu$m obtained in (Composite Oxide A1) and lithium hydroxide monohydrate was calcined at 1,100°C. Thus, a lithium-nickel-manganese composite oxide having a $D_{50}$ of 9.1 $\mu$m (composite oxide A10) was obtained.

The specific surface area thereof was 0.4 $m^2$/g, and the total pore volume thereof was 0.001266 ml/g.

The powder was analyzed by X-ray diffractometry with $CuK_{\alpha}$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.886, lattice constant c was 14.27, and crystal lattice volume V was 0.10209 $nm^3$.

The ratio of the relative intensity of the peak at a 2$\theta$ of 44.1° to that of the peak at a 2$\theta$ of 18.6° was 1.15. The half widths of these peaks were 0.090° and 0.107°, respectively. Elemental analysis revealed that the composition of this powder was $Li_{1.02}Mn_{0.5}Ni_{0.5}O_2$.

(With Respect to Ternary Phase Diagram for Li-Mn-Ni Composite Oxides)

As shown in Fig. 6, composite oxides A1 to A7 and A10 are composite oxides represented by the composite formula $Li_wMn_{x'}Ni_{y'}CO_{z'}O_2$, wherein x', y', and z' are such values that (x', y', z') is present on the perimeter of or inside the quadrilateral ABCD defined by point A (0.51, 0.49, 0), point B (0.45, 0.55, 0), point C (0.25, 0.35, 0.4), and point D (0.31, 0.29, 0.4) as vertexes (x', y', z') is on the line segment AB).

Composite oxides A1 to A10 have z'=0 in the above composite formula.

(Composite Oxide C1)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 7.2 having 70-mm$\phi$ paddle type stirring blades 12a, and the temperature of the solution in the reaction vessel was kept constant at 50°C with a heater (see Fig. 1).

A starting-material solution in which Ni/Mn/Co=5/5/2 (by mole) was prepared by mixing 1.7 mol/l aqueous nickel sulfate solution, 1.1 mol/l aqueous manganese sulfate solution, 1.5 mol/l aqueous cobalt sulfate solution, 6 mol/l aqueous ammonium sulfate solution, and 4 wt% aqueous hydrazine solution in a ratio by volume of 11:17:5.0:1.4:0.42 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.3. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.3 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 23.1 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1, 000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 9.54 $\mu$m (composite oxide C1).

The specific surface area thereof was 0.6 m$^2$/g, and the total pore volume thereof was 0.002151 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.869, lattice constant c was 14.31, and crystal lattice volume V was 0.1020 nm$^3$.

The ratio of the relative intensity of the peak at a 2$\theta$ of 44.30° to that of the peak at a 2$\theta$ of 18.60° was 0.81. The half widths of these peaks were 0.118° and 0.118°, respectively. Elemental analysis revealed that the composition of this powder was Li$_{1.02}$Mn$_{5/12}$Ni$_{5/12}$Co$_{2/12}$O$_2$. An electron photomicrograph (SEM photograph) thereof is shown in Fig. 5. Although primary particles of about 1 $\mu$m were observed, it can be seen that the size thereof had grown more than in Fig. 3. It is thought that the presence of cobalt had accelerated solid-phase reactions.

(Composite Oxide C2)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=3/3/2 (by mole) was prepared by mixing 1.7 mol/l aqueous nickel sulfate solution, 1.1 mol/l aqueous manganese sulfate solution, 1.5 mol/l aqueous cobalt sulfate solution, 6 mol/l aqueous ammonium sulfate solution, and 4 wt% aqueous hydrazine solution in a ratio by volume of 11:17:8.3:1.4:0.46 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.3. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 12.9 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 6.6 m$^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a Dso of 13.7 $\mu$m (composite oxide C2).

The specific surface area thereof was 0.4 m$^2$/g, and the total pore volume thereof was 0.001562 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.867, lattice constant c was 14.30, and crystal lattice volume V was 0.1018 nm$^3$.

The ratio of the relative intensity of the peak at a 2$\theta$ of 44.40° to that of the peak at a 2$\theta$ of 18.65° was 0.76. The half widths of these peaks were 0.176° and 0.059°, respectively. Elemental analysis revealed that the composition of this powder was Li$_{1.02}$Mn$_{3/8}$Ni$_{3/8}$Co$_{2/8}$O$_2$.

(Composite Oxide C3)

The reaction vessel 11 used in Composite Oxide A1 was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=1/1/1 (by mole) was prepared by mixing 1.7 mol/l aqueous nickel sulfate solution, 1.1 mol/l aqueous manganese sulfate solution, 1.5 mol/l aqueous cobalt sulfate solution, 6 mol/l aqueous ammonium sulfate solution, and 4 wt% aqueous hydrazine solution in a ratio by volume of 11:17:12.4:1.4:0.49 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.3. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.8 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 12.0 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 11.3 $\mu$m (composite oxide C3).

The specific surface area thereof was 0.6 $m^2$/g, and the total pore volume thereof was 0.002195 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.864, lattice constant c was 14.25, and crystal lattice volume V was 0.1012 $nm^3$.

The ratio of the relative intensity of the peak at a 2θ of 44.45° to that of the peak at a 2θ of 18.65° was 0.75. The half widths of these peaks were 0.118° and 0.118°, respectively. Elemental analysis revealed that the composition of this powder was $Li_{1.02}Mn_{1/3}Ni_{1/3}Co_{1/3}O_2$.

(Composite Oxide C4)

The same procedure as in (Composite Oxide C1) was conducted, except that the mixture of the dried coprecipitated nickel-manganese-cobalt composite powder having a specific surface area of 23.1 $m^2$/g and an average particle diameter $D_{50}$ of 9.3 $\mu$m obtained in (Composite Oxide C1) and lithium hydroxide monohydrate was calcined at 950°C. Thus, a lithium-nickel-manganese composite oxide having a $D_{50}$ of 9.5 $\mu$m (composite oxide C4) was obtained. The specific surface area thereof was 0.9 $m^2$/g, and the total pore volume thereof was 0.03421 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.874, lattice constant c was 14.30, and crystal lattice volume V was 0.1023 $nm^3$.

The ratio of the relative intensity of the peak at a 2θ of 44.30° to that of the peak at a 2θ of 18.60° was 0.72. The half widths of these peaks were 0.192° and 0.176°, respectively. Elemental analysis revealed that the composition of this powder was $Li_{1.02}Mn_{5/12}Ni_{5/12}Co_{2/12}O_2$.

(Composite Oxide C5)

The same procedure as in (Composite Oxide C1) was conducted, except that the mixture of the dried coprecipitated nickel-manganese-cobalt composite powder having a specific surface area of 23.1 $m^2$/g and an average particle diameter $D_{50}$ of 9.3 $\mu$m obtained in (Composite Oxide C1) and lithium hydroxide monohydrate was calcined at 900°C. Thus, a lithium-nickel-manganese composite oxide having a $D_{50}$ of 9.4 $\mu$m (composite oxide C5) was obtained.

The specific surface area thereof was 1.6 $m^2$/g, and the total pore volume thereof was 0.05863 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.878, lattice constant c was 14.27, and crystal lattice volume V was 0.1024 $nm^3$.

The ratio of the relative intensity of the peak at a 2θ of 44.20° to that of the peak at a 2θ of 18.60° was 0.69. The half widths of these peaks were 0.170° and 0.180°, respectively. Elemental analysis revealed that the composition of this powder was $Li_{1.02}Mn_{5/12}Ni_{5/12}Co_{2/12}O_2$.

(Composite Oxide C6)

The same procedure as in (Composite Oxide C1) was conducted, except that the mixture of the dried coprecipitated nickel-manganese-cobalt composite powder having a specific surface area of 23.1 $m^2/g$ and an average particle diameter $D_{50}$ of 9.3 $\mu m$ obtained in (Composite Oxide C1) and lithium hydroxide monohydrate was calcined at 950°C. Thus, a lithium-nickel-manganese composite oxide having a $D_{50}$ of 9.6 $\mu m$ (composite oxide C6) was obtained.

This powder was pulverized with a ball mill to regulate the specific surface area thereof to 2.0 $m^2/g$. The total pore volume thereof was 0.07153 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized. It was further found that the lattice constant a was 2.881, lattice constant c was 14.26, and crystal lattice volume V was 0.1025 $nm^3$.

The ratio of the relative intensity of the peak at a 2θ of 44.30° to that of the peak at a 2θ of 18.60° was 0.72. The half widths of these peaks were 0.200° and 0.182°, respectively. Elemental analysis revealed that the composition of this powder was $Li_{1.02}Mn_{5/12}Ni_{5/12}Co_{2/12}O_2$.

(Composite Oxide C9)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.45/0.45/0.1 (by mole) was prepared by mixing 0.789 mol/l aqueous nickel sulfate solution, 0.789 mol/l aqueous manganese sulfate solution, 0.175 mol/l aqueous cobalt sulfate solution, 1.0 mol/l aqueous ammonium sulfate solution, and 0.010 mol/l aqueous hydrazine solution in a ratio by volume of 1:1:1:1:1 (l).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.5 $\mu m$ as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 26.0 $m^2/g$.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu m$ sieve to obtain a lithium-nickel-manganese-cobalt composite oxide having a $D_{50}$ of 10.6 $\mu m$ (composite oxide C9).

The specific surface area thereof was 0.6 $m^2/g$, and the total pore volume thereof was 0.001979 ml/g.

The powder was analyzed by X-ray diffractometry with $CuK_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.40° to that of the peak at a 2θ of 18.60° was 0.85. The half widths of these peaks were 0.142° and 0.172°, respectively.

As a result of the analysis by X-ray diffractometry with $CuK_\alpha$ ray, composite oxide C9 was found to have an α-$NaFeO_2$ type layer structure consisting of a highly crystalline, hexagonal, single phase and having diffraction peaks at 2θ's of 18.58°, 36,56°, 37.72°, 38-20°, 44.28° 48.44°, 58.40°, 64,12°, 63.75°, and 68.02°. It was further found that the lattice constant a was 2.881, lattice constant c was 14.33, and crystal lattice volume V was 0.1030 $nm^3$. Elemental analysis revealed that the composition of this powder was $Li_{1.02}Mn_{0.45}Ni_{0.45}Co_{0.10}O_2$.

(Composite Oxide C10)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.3/0.3/0.4 (by mole) was prepared by mixing 0.526 mol/l aqueous nickel sulfate solution, 0.526 mol/l aqueous manganese, sulfate solution, 0.701 mol/l aqueous cobalt sulfate solution, 1.0 mol/l aqueous ammonium sulfate solution, and 0.010 mol/l aqueous hydrazine solution in a

As a result of the analysis by X-ray diffractometry with CuK$_\alpha$ ray, composite oxide C9 was found to have an $\alpha$-NaFeO$_2$ type layer structure consisting of a highly crystalline, hexagonal, single phase and having diffraction peaks at 2θ's of 18.58°, 36.56°, 37.72°, 38.20°, 44.28° 48.44°, 58.40°, 64.12°, 63.76°, and 68.02°. It was further found that the lattice constant a was 2.881, lattice constant c was 14.33, and crystal lattice volume V was 0.1030 nm$^3$. Elemental analysis revealed that the composition of this powder was Li$_{1.02}$Mn$_{0.45}$Ni$_{0.45}$Co$_{0.10}$O$_2$.

(Composite Oxide C10)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.45/0.45/0.1 (by mole) was prepared by mixing 0.526 mol/l aqueous nickel sulfate solution, 0.526 mol/l aqueous manganese sulfate solution, 0.701 mol/l aqueous cobalt sulfate solution, 1.0 mol/l aqueous ammonium sulfate solution, and 0.010 mol/l aqueous hydrazine solution in a ratio by volume of 1:1:1:1:1 (l).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a D$_{50}$ of 10.2 μm as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 31.0 m$^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-μm sieve to obtain a lithium-nickel-manganese-cobalt composite oxide having a D$_{50}$ of 10.4 μm (composite oxide C10).

The specific surface area thereof was 0.8 m$^2$/g, and the total pore volume thereof was 0.002760 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.60° to that of the peak at a 2θ of 18.60° was 0.65. The half widths of these peaks were 0.125° and 0.165°, respectively.

As a result of the analysis by X-ray diffractometry with CuK$_\alpha$ ray, the composite oxide prepared above was found to have an $\alpha$-NaFeO$_2$ type layer structure consisting of a highly crystalline, hexagonal, single phase like composite oxide C9. It was further found that the lattice constant a was 2.863, lattice constant c was 14.22, and crystal lattice volume V was 0.1010 nm$^3$. Elemental analysis revealed that the composition of this powder was Li$_{1.02}$Mn$_{0.30}$Ni$_{0.30}$Co$_{0.40}$O$_2$.

(Composite Oxide C11)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.5/0.4/0.1 (by mole) was prepared by mixing 0.877 mol/l aqueous nickel sulfate solution, 0.701 mol/l aqueous manganese sulfate solution, 0.175 mol/l aqueous cobalt sulfate solution, 1.0 mol/l aqueous ammonium sulfate solution, and 0.010 mol/l aqueous hydrazine solution in a ratio by volume of 1:1:1:1:1 (I).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.8 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 26.1 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 10.1 $\mu$m (composite oxide C11).

The specific surface area thereof was 0.7 $m^2$/g, and the total pore volume thereof was 0.002149 ml/g.

The powder was analyzed by X-ray diffractometry with $CuK_{\alpha}$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.40° to that of the peak at a 2θ of 18.60° was 0.89. The half widths of these peaks were 0.134° and 0.190°, respectively.

As a result of the analysis by X-ray diffractometry with $CuK_{\alpha}$ ray, the composite oxide prepared above was found to have a layer structure consisting of a highly crystalline, hexagonal, single phase like composite oxide C9. It was further found that the lattice constant a was 2.880, lattice constant c was 14.32, and crystal lattice volume V was 0.1028 $nm^3$. Elemental analysis revealed that the composition of this powder was $Li_{1.02}Mn_{0.40}Ni_{0.50}Co_{0.10}O_2$.

(Composite Oxide C12)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=0.35/0.25/0.4 (by mole) was prepared by mixing 0.614 mol/l aqueous nickel sulfate solution, 0.438 mol/l aqueous manganese sulfate solution, 0.701 mol/l aqueous cobalt sulfate solution, 1.0 mol/l aqueous ammonium sulfate solution, and 0.010 mol/l aqueous hydrazine solution in a ratio by volume of 1:1:1:1:1 (I).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.0 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 27.8 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.01. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 10.2 $\mu$m (composite oxide C12).

The specific surface area thereof was 0.6 m$^2$/g, and the total pore volume thereof was 0.001843 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.60° to that of the peak at a 2θ of 18.60° was 0.62. The half widths of these peaks were 0.118° and 0.154°, respectively.

As a result of the analysis by X-ray diffractometry with CuK$_\alpha$ ray, the composite oxide prepared above was found to have an α-NaFeO$_2$ type layer structure consisting of a highly crystalline, hexagonal, single phase like composite oxide C9. It was further found that the lattice constant a was 2.861, lattice constant c was 14.20, and crystal lattice volume V was 0.1007 nm$^3$. Elemental analysis revealed that the composition of this powder was Li$_{1.02}$Mn$_{0.25}$Ni$_{0.35}$Co$_{0.40}$O$_2$.

(Composite Oxide C13)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.7/0.2/0.1 (by mole) was prepared by mixing 1.227 mol/l aqueous nickel sulfate solution, 0.351 mol/l aqueous manganese sulfate solution, 0.175 mol/l aqueous cobalt sulfate solution, 1.0 mol/l aqueous ammonium sulfate solution, and 0.010 mol/l aqueous hydrazine solution in a ratio by volume of 1:1:1:1:1 (l).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a D$_{50}$ of 9.4 μm as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 21.8 m$^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.01. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-μm sieve to obtain a lithium-nickel-manganese-cobalt composite oxide having a D$_{50}$ of 9.4 μm (composite oxide C13).

The specific surface area thereof was 0.7 m$^2$/g, and the total pore volume thereof was 0.002386 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.20° to that of the peak at a 2θ of 18.50° was 0.71. The half widths of these peaks were 0.134° and 0.178°, respectively.

As a result of the analysis by X-ray diffractometry with CuK$_\alpha$ ray, the composite oxide prepared above was found to have an α-NaFeO$_2$ type hexagonal layer structure like composite oxide C9. It was further found that the lattice constant a was 2.875, lattice constant c was 14.27, and crystal lattice volume V was 0.1022 nm$^3$. Elemental analysis revealed that the composition of this powder was Li$_{1.00}$Mn$_{0.20}$Ni$_{0.70}$Co$_{0.10}$O$_2$.

(Composite Oxide C14)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.44/0.50/0.06 (by mole) was prepared by mixing 0.771 mol/l aqueous nickel sulfate solution, 0.877 mol/l aqueous manganese sulfate solution, 0.105 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 11.0 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 27.4 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=0.99. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 11.2 $\mu$m (composite oxide C14).

The specific surface area thereof was 0.9 $m^2$/g, and the total pore volume thereof was 0.003066 ml/g.

The powder was analyzed by X-ray diffractometry with $CuK_a$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.80° to that of the peak at a 2θ of 18.80° was 0.92. The half widths of these peaks were 0.130° and 0.155°, respectively.

As a result of the analysis by X-ray diffractometry with $CuK_\alpha$ ray, the composite oxide prepared above was found to have a layer structure assignable to hexagonal crystals although it showed minute peaks probably attributable to reduced crystallinity, unlike composite oxide C9. It was further found that the lattice constant a was 2.890, lattice constant c was 14.31, and crystal lattice volume V was 0.1035 $nm^3$. Elemental analysis revealed that the composition of this powder was $Li_{0.99}Mn_{0.50}Ni_{0.44}Co_{0.06}O_2$.

(Composite Oxide C15)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=0.2/0.2/0.6 (by mole) was prepared by mixing 0.351 mol/l aqueous nickel sulfate solution, 0.351 mol/l aqueous manganese sulfate solution, 1.052 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.1 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 31.0 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.01. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 10.2 $\mu$m (composite oxide C15).

The specific surface area thereof was 0.4 m$^2$/g, and the total pore volume thereof was 0.0013000 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.80° to that of the peak at a 2θ of 18.70° was 0.62. The half widths of these peaks were 0.120° and 0.142°, respectively.

As a result of the analysis by X-ray diffractometry with CuK$_\alpha$ ray, the composite oxide prepared above was found to have an $\alpha$-NaFeO$_2$ type hexagonal layer structure like composite oxide C9. It was further found that the lattice constant a was 2.847, lattice constant c was 14.17, and crystal lattice volume V was 0.0952 nm$^3$. Elemental analysis revealed that the composition of this powder was Li$_{1.01}$Mn$_{0.20}$Ni$_{0.20}$Co$_{0.60}$O$_2$.

(Composite Oxide C16)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Co=0.45/0.45/0.1 (by mole) was prepared by mixing 0.789 mol/l aqueous nickel sulfate solution, 0.789 mol/l aqueous manganese sulfate solution, 0.175 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a D$_{50}$ of 10.5 μm as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 26.0 m$^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.01. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-μm sieve to obtain a lithium-nickel-manganese-cobalt composite oxide having a D$_{50}$ of 10.5 μm (composite oxide C16).

The specific surface area thereof as measured by the BET method was 0.9 m$^2$/g, and the total pore volume thereof was 0.0032350 ml/g.

The powder was analyzed by X-ray diffractometry with CuK$_\alpha$ ray. As a result, diffraction peaks were observed respectively at around 2θ's of 18.56°, 36.56°, 37.76°, 38.24°, 44.32°, 48.40°, 58.40°, 64.16°, 64.80°, and 68.80°. It was thus found that a highly crystalline single-phase structure considered to be a layer structure belonging to the space group R3/m had been synthesized. Elemental analysis revealed that the composition of this powder was LiMn$_{0.45}$Ni$_{0.45}$Co$_{0.1}$O$_2$.

(Composite Oxide C17)

The reaction vessel used in this Example was a cylindrical one having in an upper part thereof an overflow pipe for discharging a slurry of a crystallization reaction product from the system always at a constant flow rate. The reaction vessel had a capacity of 5 1.

Four liters of pure water was introduced into this reaction vessel and 32% aqueous sodium hydroxide solution was added thereto in such an amount as to result in a pH of 11.6. The mixture was stirred at a revolution speed of 1,350 rpm with a stirrer having paddle type stirring blades, and the temperature of the solution in the reaction vessel was kept constant at 50°C with a heater.

A starting-material solution in which Ni/Mn/Co element ratio was 1/1/1 was prepared by mixing an aqueous nickel sulfate (NiSO$_4$) solution having a concentration of 1.0 mol/l, an aqueous manganese sulfate (MnSO$_4$) solution having a concentration of 1.0 mol/l, an aqueous cobalt sulfate (CoSO$_4$) solution having a concentration of 1.0 mol/l, an

aqueous ammonium sulfate $((NH_4)_2SO_4)$ solution having a concentration of 6 mol/l, and 4 wt% aqueous hydrazine $(NH_2NH_2)$ solution in a ratio by volume of 0.33:0.33:0.33:0.05:0.01. This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.3. Furthermore, the temperature of the solution in the reaction vessel was kept constant at 50°C by intermittently operating the heater. At 50 hours after initiation of the introduction of the starting-material solution, a slurry of a Ni-Mn-Co composite oxide formed as a product of crystallization reaction was continuously collected for 24 hours through the overflow pipe. The slurry collected was washed with water and filtered. The powder thus obtained was dried at 100°C for 20 hours to obtain a dry Ni-Mn-Co composite oxide powder.

The Ni-Mn-Co composite oxide obtained and a powder of lithium hydroxide monohydrate were sufficiently mixed with each other in such weighed amounts as to result in Li/(Ni+Mn+Co)=1.02. This mixture was charged into a pot made of alumina. In a dry air stream in an electric furnace, the mixture charged was heated to 1,000°C at a rate of 100°C/hr, held at 1, 000°C for 15 hours, cooled to 600°C at a rate of 100°C/hr, and then allowed to cool. The resultant powder was analyzed by X-ray diffractometry (XRD). As a result, the Li-Ni-Mn-Co composite oxide (composite oxide C17) was found to have a single-phase structure belonging to the space group R3/m. IPC analysis revealed that the composition thereof was $LiMn_{0.33}Ni_{0.33}Co_{0.33}O_2$.

The powder thus obtained was sieved so as to result in a D50% of 5 $\mu$m and a D10% of 1.3 $\mu$m. The particle size distribution thereof was determined with a laser diffraction/scattering particle size analyzer (HORIBA LA-910) manufactured by Horiba Ltd. This powder had a BET specific surface area of 0.8 m$^2$/g.

(Composite Oxide C18)

The same procedure as in (Composite Oxide C17) was conducted, except that the powder obtained was sieved so as to result in a D50% of 7 $\mu$m and a D10% of 3.4 $\mu$m. Thus, a powder (composite oxide C18) was obtained. This powder had a BET specific surface area of 0.9 m$^2$/g.

(Composite Oxide C19)

The same procedure as in (Composite Oxide C17) was conducted, except that the powder obtained was sieved so as to result in a D50% of 10 $\mu$m and a D10% of 6 $\mu$m. Thus, a powder (composite oxide C19) was obtained. This powder had a BET specific surface area of 1.2 m$^2$/g.

(Composite Oxide C20)

The same procedure as in (Composite Oxide C17) was conducted, except that the powder obtained was sieved so as to result in a D50% of 0.8 $\mu$m and a D10% of 0.4 $\mu$m. Thus, a powder (composite oxide C20) was obtained. This powder had a BET specific surface area of 9.0 m$^2$/g.

(Composite Oxide C21)

The same procedure as in (Composite Oxide C17) was conducted, except that the powder obtained was sieved so as to result in a D50% of 2 $\mu$m and a D10% of 0.4 $\mu$m. Thus, a powder (composite oxide C21) was obtained. This powder had a BET specific surface area of 7.0 m$^2$/g.

(Composite Oxide C22)

The same procedure as in (Composite Oxide C17) was conducted, except that the powder obtained was sieved so as to result in a D50% of 12.5 $\mu$m and a D10% of 7 $\mu$m. Thus, a powder (composite oxide C22) was obtained. This powder had a BET specific surface area of 0.3 m$^2$/g.

Important parts of particle size distribution curves obtained by examining the powders of composite oxides C17 to C22 are shown in Fig. 18.

(Composite Oxide C23)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=0.4/0.4/0.2 (by mole) was prepared by mixing 0.701 mol/l aqueous nickel sulfate solution, 0.701 mol/l aqueous manganese sulfate solution, 0.351 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.7 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 30.6 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 10.6 $\mu$m (composite oxide C23). Elemental analysis revealed that the composition of this powder was $Li_{1.02}Mn_{0.40}Ni_{0.40}Co_{0.2}O_2$.

(Composite Oxide C24)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=0.7/0.2/0.1 (by mole) was prepared by mixing 1.227 mol/l aqueous nickel sulfate solution, 0.351 mol/l aqueous manganese sulfate solution, 0.175 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.8 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 26.6 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 9.6 $\mu$m (composite oxide C24). Elemental analysis revealed that the composition of this powder was $Li_{1.02}Mn_{0.20}Ni_{0.70}Co_{0.10}O_2$.

(Composite Oxide C25)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Co=0.42/0.35/0.23 (by mole) was prepared by mixing 0.736 mol/l aqueous nickel sulfate solution, 0.614 mol/l aqueous manganese sulfate solution, 0.403 mol/l aqueous cobalt sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-cobalt composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.1 $\mu$m as a coprecipitated nickel-manganese-cobalt composite.

The specific surface area of this powder was measured on the nitrogen desorption side using 4SU-8 U2, manufactured by Yuasa Ionics Inc. As a result, the specific surface area thereof was found to be 32.8 $m^2$/g.

The coprecipitated nickel-manganese-cobalt composite powder obtained and a powder of lithium hydroxide monohydrate were sufficiently mixed with each other in such weighed amounts as to result in Li/(Ni+Mn+Co)=1.02. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-cobalt composite oxide having a $D_{50}$ of 10.0 $\mu$m (composite oxide C25). Elemental analysis revealed that the composition of this powder was $Li_{1.02}Mn_{0.35}Ni_{0.42}Co_{0.23}O_2$.

(With Respect to Ternary Phase Diagram for Li-Mn-Ni-Co Composite Oxides)

As shown in Fig. 6, composite oxides C1 to C12 and C16 to C22 are composite oxides represented by the composite formula $Li_wMn_{x'}Ni_{y'}Co_{z'}O_2$, wherein x', y', and z' are such values that (x', y', z') is present on the perimeter of or inside the quadrilateral ABCD defined by point A (0.51, 0.49, 0), point B (0.45, 0.55, 0), point C (0.25, 0.35, 0.4), and point D (0.31, 0.29, 0.4) as vertexes. Furthermore, C2, C3, C10, and C17 to C22 are composite oxides in which (x', y', z') is present on the perimeter of or inside the quadrilateral A'B'CD defined by point A' (0.41, 0.39, 0.2), point B' (0.35, 0.45, 0.2), point C (0.25, 0.35, 0.4), and point D (0.31, 0.29, 0.4) as vertexes.

(Composite Oxide D1)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mm$\phi$ paddle type stirring blades 12a, and the temperature of the solution in the reaction vessel was kept constant at 50°C with a heater (see Fig. 1).

A starting-material solution in which Ni/Mn/Mg=0.495/0.495/0.01 (by mole) was prepared by mixing 0.868 mol/l aqueous nickel sulfate solution, 0.868 mol/l aqueous manganese sulfate solution, 0.018 mol/l aqueous magnesium sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-magnesium composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 10.8 $\mu$m as a coprecipitated nickel-manganese-magnesium composite.

The specific surface area of this powder was measured on the nitrogen desorption side using 4SU-8 U2, manufactured by Yuasa Ionics Inc. As a result, the specific surface area thereof was found to be 32.3 $m^2$/g.

The coprecipitated nickel-manganese-magnesium composite powder obtained and a powder of lithium hydroxide monohydrate were sufficiently mixed with each other in such weighed amounts as to result in Li/(Ni+Mn+Mg)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-magnesium composite oxide having a $D_{50}$ of 10.5 $\mu$m (composite oxide D1).

The specific surface area thereof was 0.6 m$^2$/g, and the total pore volume thereof was 0.001945 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.1° to that of the peak at a 2θ of 18.6° was 0.95. The half widths of these peaks were 0.144° and 0.14°, respectively.

As a result of the analysis by X-ray diffractometry with CuK$_\alpha$ ray, composite oxide D1 was found to have an α-NaFeO$_2$ type layer structure consisting of a highly crystalline, hexagonal, single phase. It was further found that the lattice constant a was 2.891, lattice constant c was 14.31, and crystal lattice volume V was 0.1036 nm$^3$. Elemental analysis revealed that the composition of this powder was LiMn$_{0.495}$Ni$_{0.495}$Mg$_{0.01}$O$_2$.

(Composite Oxide D2)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Mg=0.396/0.594/0.01 (by mole) was prepared by mixing 0.694 mol/l aqueous nickel sulfate solution, 1.041 mol/l aqueous manganese sulfate solution, 0.018 mol/l aqueous magnesium sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-magnesium composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 11.4 $\mu$m as a coprecipitated nickel-manganese-magnesium composite.

The specific surface area of this powder was measured on the nitrogen desorption side using 4SU-8 U2, manufactured by Yuasa Ionics Inc. As a result, the specific surface area thereof was found to be 35.1 m$^2$/g.

The coprecipitated nickel-manganese-magnesium composite powder obtained and a powder of lithium hydroxide monohydrate were sufficiently mixed with each other in such weighed amounts as to result in Li/(Ni+Mn+Mg)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-magnesium composite oxide having a $D_{50}$ of 10.9 $\mu$m (composite oxide D2).

The specific surface area thereof was 0.7 m$^2$/g, and the total pore volume thereof was 0.002285 ml/g.

The powder was analyzed by X-ray diffractometry with CuK$_\alpha$ ray. As a result, it was found that mixed-crystal layer structures belonging to the space group R3/m and the space group C2/m had been formed. The space group C2/m is thought to be Li$_2$MnO$_3$.

The ratio of the relative intensity of the peak at a 2θ of 44.7° to that of the peak at a 2θ of 18.6° was 0.7. The half widths of these peaks were 0.19° and 0.17°, respectively. Elemental analysis revealed that the composition of this powder was LiMn$_{0.594}$Ni$_{0.396}$Mg$_{0.01}$O$_2$.

(Composite Oxide D3)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Mg=0.594/0.396/0.01 (by mole) was prepared by mixing 1.041 mol/l aqueous nickel sulfate solution, 0.694 mol/l aqueous manganese sulfate solution, 0.018 mol/l aqueous magnesium sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-magnesium composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.9 $\mu$m as a coprecipitated nickel-manganese-magnesium composite.

The specific surface area of this powder was measured on the nitrogen desorption side using 4SU-8 U2, manufactured by Yuasa Ionics Inc. As a result, the specific surface area thereof was found to be 31 $m^2$/g.

The coprecipitated nickel-manganese-magnesium composite powder obtained and a powder of lithium hydroxide monohydrate were sufficiently mixed with each other in such weighed amounts as to result in Li/(Ni+Mn+Mg)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-magnesium composite oxide having a $D_{50}$ of 9.7 $\mu$m (composite oxide D3).

The specific surface area thereof was 0.6 $m^2$/g, and the total pore volume thereof was 0.001945 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.2° to that of the peak at a 2θ of 18.6° was 0.88. The half widths of these peaks were 0.146° and 0.14°, respectively.

As a result of the analysis by X-ray diffractometry with CuK$_\alpha$ ray, the composite oxide prepared above was found to have an $\alpha$-NaFeO$_2$ type layer structure consisting of a highly crystalline, hexagonal, single phase like composite oxide D1. It was further found that the lattice constant a was 2.883, lattice constant c was 14.3, and crystal lattice volume V was 0.1031 $nm^3$. Elemental analysis revealed that the composition of this powder was LiMn$_{0.396}$Ni$_{0.594}$Mg$_{0.01}$O$_2$.

(Composite Oxide E1)

The reaction vessel 11 used in (Composite Oxide A1) was used. Into this reaction vessel 11 was introduced 13 l of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Al=0.495/0.495/0.01 (by mole) was prepared by mixing 0.868 mol/l aqueous nickel sulfate solution, 0.868 mol/l aqueous manganese sulfate solution, 0.018 mol/l aqueous aluminum sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-aluminum composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 9.6 $\mu$m as a coprecipitated nickel-manganese-aluminum composite.

**[0418]** - The specific surface area of this powder was measured on the nitrogen desorption side using 4SU-8 U2, manufactured by Yuasa Ionics Inc. As a result, the specific surface area thereof was found to be 28.8 $m^2$/g.

The coprecipitated nickel-manganese-aluminum composite powder obtained and a powder of lithium hydroxide monohydrate were sufficiently mixed with each other in such weighed amounts as to result in Li/(Ni+Mn+Al)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-aluminium composite oxide having a $D_{50}$ of 9.4 $\mu$m (composite oxide E1).

The specific surface area thereof was 0.5 $m^2$/g, and the total pore volume thereof was 0.001605 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.1° to that of the peak at a 2θ of 18.6° was 1. The half widths of these peaks were 0.135° and 0.13°, respectively.

As a result of the analysis by X-ray diffractometry with CuK$_\alpha$ ray, composite oxide E1 was found to have an α-NaFeO$_2$ type layer structure consisting of a highly crystalline, hexagonal, single phase. It was further found that the lattice constant a was 2.89, lattice constant c was 14.34, and crystal lattice volume V was 0.1037 nm$^3$. Elemental analysis revealed that the composition of this powder was LiMn$_{0.495}$Ni$_{0.495}$Al$_{0.01}$O$_2$.

(Composite Oxide E2)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Al=0.396/0.594/0.01 (by mole) was prepared by mixing 0.694 mol/l aqueous nickel sulfate solution, 1.041 mol/l aqueous manganese sulfate solution, 0.018 mol/l aqueous aluminum sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-aluminum composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a D$_{50}$ of 10.4 μm as a coprecipitated nickel-manganese-aluminum composite.

The specific surface area of this powder was measured on the nitrogen desorption side using 4SU-8 U2, manufactured by Yuasa Ionics Inc. As a result, the specific surface area thereof was found to be 33 m$^2$/g.

The coprecipitated nickel-manganese-aluminum composite powder obtained and a powder of lithium hydroxide monohydrate were sufficiently mixed with each other in such weighed amounts as to result in Li/(Ni+Mn+Al)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-μm sieve to obtain a lithium-nickel-manganese-aluminum composite oxide having a D$_{50}$ of 9.9 μm (composite oxide E2).

The specific surface area thereof was 0.6 m$^2$/g, and the total pore volume thereof was 0.001945 ml/g.

The powder was analyzed by X-ray diffractometry with CuK$_\alpha$ ray. As a result, it was found that mixed-crystal layer structures belonging to the space group R3/m and the space group C2/m had been formed. The space group C2/m is thought to be Li$_2$MnO$_3$.

The ratio of the relative intensity of the peak at a 2θ of 44.8° to that of the peak at a 2θ of 18.9° was 0.75. The half widths of these peaks were 0.18° and 0.16°, respectively. Elemental analysis revealed that the composition of this powder was LiMn$_{0.594}$Ni$_{0.396}$Al$_{0.01}$O$_2$.

(Composite Oxide E3)

The reaction vessel 11 used in (Composite Oxide A1) was used. Into this reaction vessel 11 was introduced 13 1 of water. A 32% aqueous solution of sodium hydroxide was added thereto in such an amount as to result in a pH of 11.6. The mixture was stirred at 1,350 rpm with a stirrer 12 having 70-mmφ paddle type stirring blades 12a, and the temperature of the solution in the reaction vessel was kept constant at 50°C with a heater (see Fig. 1).

A starting-material solution in which Ni/Mn/Al=0.594/0.396/0.01 (by mole) was prepared by mixing 1.041 mol/l aqueous nickel sulfate solution, 0.694 mol/l aqueous manganese sulfate solution, 0.018 mol/l aqueous aluminum sulfate solution, 1.0 mol/l aqueous ammonium sulfate solution, and 0.010 mol/l aqueous hydrazine solution in a ratio by volume of 1:1:1:1:1 (1).

This starting-material solution was continuously dropped into the reaction vessel at a flow rate of 13 ml/min. A 32% aqueous solution of sodium hydroxide was further introduced intermittently so that the pH of the solution in the reaction vessel was kept constant at 11.8. Furthermore, the temperature of the solution in the reaction vessel was kept constant at 50°C by intermittently operating the heater.

At 120 hours after initiation of the introduction of the starting-material solution, a slurry of a coprecipitated nickel-manganese-aluminum composite formed as a product of crystallization reaction and thought to be a hydroxide or oxide was continuously collected for 24 hours through the overflow pipe 13. The slurry collected was washed with water and filtered. The powder thus obtained was dried at 100°C for 20 hours to obtain a dry powder having a $D_{50}$ of 11 $\mu$m as a coprecipitated nickel-manganese-aluminum composite.

The specific surface area of this powder was measured on the nitrogen desorption side using 4SU-8 U2, manufactured by Yuasa Ionics Inc. As a result, the specific surface area thereof was found to be 26.9 $m^2$/g.

The coprecipitated nickel-manganese-aluminum composite powder obtained and a powder of lithium hydroxide monohydrate were sufficiently mixed with each other in such weighed amounts as to result in Li/(Ni+Mn+Al)=1.00. This mixture was charged into a pot made of alumina. Using an electric furnace, the mixture charged was heated to 1,000°C at a rate of 100°C/hr, held at 1,000°C for 15 hours, cooled to 600°C at a rate of 100°C/hr, and then allowed to cool. The sinter obtained was pulverized and the resultant particles were classified with a 75-$\mu$m sieve to obtain a lithium-nickel-manganese-aluminum composite oxide having a $D_{50}$ of 10.4 $\mu$m (composite oxide E3).

The specific surface area thereof was 0.5 $m^2$/g, and the total pore volume thereof was 0.001605 ml/g.

The powder was analyzed by X-ray diffractometry with CuK$_\alpha$ ray. As a result, diffraction peaks similar to those for composite oxide A1 were observed. It was thus found that a highly crystalline single-phase structure considered to be a layer structure belonging to the space group R3/m had been synthesized.

The ratio of the relative intensity of the peak at a 2θ of 44.1° to that of the peak at a 2θ of 18.6° was 0.94. The half widths of these peaks were 0.18° and 0.143°, respectively.

As a result of the analysis by X-ray diffractometry with CuK$_\alpha$ ray, the composite oxide prepared above was found to have an $\alpha$-NaFeO$_2$ type layer structure consisting of a highly crystalline, hexagonal, single phase like composite oxide E1. It was further found that the lattice constant a was 2.883, lattice constant c was 14.33, and crystal lattice volume V was 0.1032 nm$^3$. Elemental analysis revealed that the composition of this powder was LiMn$_{0.396}$Ni$_{0.594}$Al$_{0.01}$O$_2$.

The compositions of the composite oxides described above are summarized in the following tables.

Table 1

| Composite oxide | Composition | Precursor, before calcining | | | Composite oxide, after calcining | | |
|---|---|---|---|---|---|---|---|
| | | Specific surface area ($m^2$/g) | $D_{50}$ ($\mu$m) | Coating coprecipitation | Specific surface area ($m^2$/g) | Total pore volume (ml/g) | $D_{50}$ ($\mu$m) |
| A1 | Li$_{1.02}$Mn$_{0.5}$Ni$_{0.5}$O$_2$ | 35.6 | 11.4 | not conducted | 0.9 | 0.003291 | 9.1 |
| A2 | Li$_{1.02}$Mn$_{0.5}$Ni$_{0.5}$O$_2$ | 35.6 | 11.4 | not conducted | 1.2 | 0.004029 | 10.5 |
| A3 | Li$_{1.02}$Mn$_{0.5}$Ni$_{0.5}$O$_2$ | 35.6 | 11.4 | not conducted | 1.6 | 0.006015 | 10.5 |
| A4 | Li$_{1.02}$Mn$_{0.5}$Ni$_{0.5}$O$_2$ | 35.6 | 11.4 | not conducted | 3.5 | 0.01220 | 10.4 |
| A5 | Li$_{1.02}$Mn$_{0.5}$Ni$_{0.5}$O$_2$ | 100 | 5.2 | - | 1.8 | 0.007 | 10.2 |
| A6 | Li$_{1.02}$Mn$_{0.5}$Ni$_{0.5}$O$_2$ | - | - | - | 1.8 | 0.006423 | 9.5 |
| A7 | Li$_{1.02}$Mn$_{0.5}$Ni$_{0.5}$O$_2$ | - | - | - | 0.8 | 0.002715 | 13.2 |
| A8 | Li$_{1.02}$Mn$_{0.6}$Ni$_{0.4}$O$_2$ | 39.4 | 10.6 | - | 0.9 | 0.002964 | 10.4 |
| A9 | Li$_{1.02}$Mn$_{0.4}$Ni$_{0.6}$O$_2$ | 28.2 | 10.5 | - | 0.3 | 0.000926 | 10.5 |
| A10 | Li$_{1.02}$Mn$_{0.5}$Ni$_{0.5}$O$_2$ | 35.6 | 11.4 | not conducted | 0.4 | 0.001266 | 9.1 |

Table 2

| Composite oxide | Crystal structure | | | | | | |
|---|---|---|---|---|---|---|---|
| | Space group | Peak intensity ratio | Half width 18.6±1° | Half width 44.1±1° | Lattice constant | | Crystal lattice volume V (nm$^3$) |
| | | | | | a | c | |
| A1 | R3/m | 0.86 | 0.141 | 0.141 | 2.889 | 14.29 | 0.1033 |
| A2 | R3/m | 0.98 | 0.188 | 0.141 | 2.894 | 14.33 | 0.1039 |
| A3 | R3/m | 0.72 | 0.118 | 0.118 | 2.889 | 14.30 | 0.1034 |
| A4 | R3/m | 0.63 | 0.118 | 0.176 | 2.895 | 14.28 | 0.1036 |

(continued)

| Composite oxide | Crystal structure | | | | | | |
|---|---|---|---|---|---|---|---|
| | Space group | Peak intensity ratio | Half width $18.6\pm1°$ | Half width $44.1\pm1°$ | Lattice constant | | Crystal lattice volume V ($nm^3$) |
| | | | | | a | c | |
| A5 | R3/m | 0.51 | 0.212 | 0.282 | 2.889 | 14.30 | 0.1034 |
| A6 | R3/m | 0.60 | 0.188 | 0.259 | 2.891 | 14.30 | 0.1035 |
| A7 | R3/m | 0.76 | 0.188 | 0.259 | 2.883 | 14.30 | 0.1029 |
| A8 | R3/m+C2/m | 0.70 | - | - | - | - | - |
| A9 | R3/m | 0.88 | 0.141 | 0.094 | 2.885 | 14.29 | 0.1030 |
| A10 | R3/m | 1.15 | 0.107 | 0.090 | 2.886 | 14.27 | 0.1029 |

The values of lattice constants a and c and crystal lattice volume V ($nm^3$) are values obtained when the potential is 3.2 to 3.3 V versus the potential of metallic lithium.

Table 3

| Composite oxide | Composition | Precursor, before calcining | | | Composite oxide, after calcining | | |
|---|---|---|---|---|---|---|---|
| | | Specific surface area ($m^2/g$) | $D_{50}$ ($\mu m$) | Coating coprecipitation | Specific surface area ($m^2/g$) | Total pore volume (ml/g) | $D_{50}$ ($\mu m$) |
| C1 | $Li_{1.02}Mn_{5/12}Ni_{5/12}Co_{2/12}O_2$ | 23.1 | 9.3 | not conducted | 0.6 | 0.002151 | 9.54 |
| C2 | $Li_{1.02}Mn_{3/4}Ni_{3/8}CO_{2/8}O_2$ | 6.6 | 12.9 | not conducted | 0.4 | 0.001562 | 13.7 |
| C3 | $Li_{1.02}Mn_{1/3}Ni_{1/3}Co_{1/3}O_2$ | 12.0 | 9.8 | not conducted | 0.6 | 0.002195 | 11.3 |
| C4 | $Li_{1.02}Mn_{5/12}Ni_{5/12}Co_{2/12}O_2$ | 23.1 | 9.3 | not conducted | 0.9 | 0.003421 | 9.5 |
| C5 | $Li_{1.02}Mn_{5/12}Ni_{5/12}Co_{2/12}O_2$ | 23.1 | 9.3 | not conducted | 1.6 | 0.005863 | 9.4 |
| C6 | $Li_{1.02}Mn_{3/12}Ni_{5/12}CO_{2/12}O_2$ | 23.1 | 9.3 | not conducted | 2.0 | 0.007153 | 9.6 |
| C9 | $Li_{1.02}Mn_{0.45}Ni_{0.45}Co_{0.10}O_2$ | 26.0 | 10.5 | not conducted | 0.6 | 0.001979 | 10.6 |
| C10 | $Li_{1.02}Mn_{0.30}Ni_{0.30}Co_{0.40}O_2$ | 31.0 | 10.2 | not conducted | 0.8 | 0.002760 | 10.4 |
| C11 | $Li_{1.02}Mn_{0.40}Ni_{0.50}Co_{0.10}O_2$ | 26.1 | 9.8 | not conducted | 0.7 | 0.002149 | 10.1 |
| C12 | $Li_{1.01}Mn_{0.25}Ni_{0.35}Co_{0.40}O_2$ | 27.8 | 10.0 | not conducted | 0.6 | 0.001843 | 10.2 |
| C13 | $Li_{1.00}Mn_{0.20}Ni_{0.70}Co_{0.10}O_2$ | 21.8 | 9.4 | not conducted | 0.7 | 0.002386 | 9.4 |
| C14 | $Li_{0.99}Mn_{0.50}Ni_{0.44}Co_{0.06}O_2$ | 27.4 | 11.0 | not conducted | 0.9 | 0.003066 | 11.2 |
| C15 | $Li_{1.01}Mn_{0.20}Ni_{0.20}Co_{0.60}O_2$ | 31.0 | 10.1 | not conducted | 0.4 | 0.001300 | 10.2 |
| C16 | $LiMn_{0.45}Ni_{0.45}Co_{0.10}O_2$ | 26.0 | 10.5 | not conducted | 0.9 | 0.003235 | 10.5 |

Table 4

| Composite oxide | Composition | Particle size distribution | | |
|---|---|---|---|---|
| | | Specific surface area ($m^2/g$) | $D_{10}$ ($\mu m$) | $D_{50}$ ($\mu m$) |
| C17 | $LiMn_{0.33}Ni_{0.33}Co_{0.33}O_2$ | 0.8 | 1.3 | 5 |
| C18 | $LiMn_{0.33}Ni_{0.33}Co_{0.33}O_2$ | 0.9 | 3.4 | 7 |
| C19 | $LiMn_{0.33}Ni_{0.33}Co_{0.33}O_2$ | 1.2 | 6 | 10 |

(continued)

| Composite oxide | Composition | Particle size distribution | | |
|---|---|---|---|---|
| | | Specific surface area (m²/g) | $D_{10}$ (μm) | $D_{50}$ (μm) |
| C20 | $LiMn_{0.33}Ni_{0.33}Co_{0.33}O_2$ | 9.0 | 0.4 | 0.8 |
| C21 | $LiMn_{0.33}Ni_{0.33}Co_{0.33}O_2$ | 7.0 | 0.4 | 2 |
| C22 | $LiMn_{0.33}Ni_{0.33}Co_{0.33}O_2$ | 0.3 | 7 | 12.5 |

Table 5

| Composite oxide | Crystal structure | | | | | | |
|---|---|---|---|---|---|---|---|
| | Space group | Peak intensity ratio | Half width 18.6±1° | Half width 44.1±1° | Lattice constant | | Crystal lattice volume V (nm³) |
| | | | | | a | c | |
| C1 | R3/m | 0.81 | 0.118 | 0.118 | 2.869 | 14.31 | 0.1020 |
| C2 | R3/m | 0.76 | 0.059 | 0.176 | 2.867 | 14.30 | 0.1018 |
| C3 | R3/m | 0.75 | 0.118 | 0.118 | 2.864 | 14.25 | 0.1012 |
| C4 | R3/m | 0.72 | 0.176 | 0.192 | 2.874 | 14.30 | 0.1023 |
| C5 | R3/m | 0.69 | 0.180 | 0.170 | 2.878 | 14.27 | 0.1024 |
| C6 | R3/m | 0.72 | 0.182 | 0.200 | 2.881 | 14.26 | 0.1025 |
| C9 | R3/m | 0.85 | 0.172 | 0.142 | 2.881 | 14.30 | 0.1028 |
| C10 | R3/m | 0.65 | 0.165 | 0.125 | 2.863 | 14.22 | 0.1010 |
| C11 | R3/m | 0.89 | 0.190 | 0.134 | 2.880 | 14.32 | 0.1028 |
| C12 | R3/m | 0.62 | 0.154 | 0.118 | 2.861 | 14.20 | 0.1007 |
| C13 | R3/m | 0.71 | 0.178 | 0.134 | 2.875 | 14.27 | 0.1022 |
| C14 | R3/m | 0.92 | 0.155 | 0.130 | 2.890 | 14.31 | 0.1035 |
| C15 | R3/m | 0.62 | 0.142 | 0.120 | 2.847 | 14.17 | 0.9952 |

The values of lattice constants a and c and crystal lattice volume V (nm³) are values obtained when the potential is 3.2 to 3.3 V versus the potential of metallic lithium.

Table 6

| Composite oxide | Composition | Precursor, before calcining | | | Composite oxide, after calcining | | |
|---|---|---|---|---|---|---|---|
| | | Specific surface area (m²/g) | $D_{50}$ (μm) | Coating coprecipitation | Specific surface area (m²/g) | Total pore volume (ml/g) | $D_{50}$ (μm) |
| D1 | $LiMn_{0.495}Ni_{0.495}Mg_{0.01}O_2$ | 32.3 | 10.8 | not conducted | 0.6 | 0.001945 | 10.5 |
| D2 | $LiMn_{0.594}Ni_{0.396}Mg_{0.01}O_2$ | 35.1 | 11.4 | not conducted | 0.7 | 0.002285 | 10.9 |
| D3 | $LiMn_{0.396}Ni_{0.594}Mg_{0.01}O_2$ | 31 | 9.9 | not conducted | 0.6 | 0.001945 | 9.7 |
| E1 | $LiMn_{0.495}Ni_{0.495}Al_{0.01}O_2$ | 28.8 | 9.6 | not conducted | 0.5 | 0.001605 | 9.4 |
| E2 | $LiMn_{0.594}Ni_{0.396}Al_{0.01}O_2$ | 33 | 10.4 | not conducted | 0.6 | 0.001945 | 9.9 |
| E3 | $LiMn_{0.396}Ni_{0.594}Al_{0.01}O_2$ | 26.9 | 11 | not conducted | 0.5 | 0.001605 | 10.4 |

Table 7

| Composite oxide | Crystal structure | | | | | | |
|---|---|---|---|---|---|---|---|
| | Space group | Peak intensity ratio | Half width 18.6±1° | Half width 44.1±1° | Lattice constant | | Crystal lattice volume V (nm³) |
| | | | | | a | c | |
| D1 | R3/m | 0.95 | 0.14 | 0.144 | 2.891 | 14.31 | 0.1036 |
| D2 | R3/m+C2/m | 0.7 | 0.17 | 0.19 | - | - | - |
| D3 | R3/m | 0.88 | 0.14 | 0.146 | 2.886 | 14.3 | 0.1031 |
| E1 | R3/m | 1 | 0.13 | 0.135 | 2.89 | 14.34 | 0.1037 |
| E2 | R3/m+C2/m | 0.75 | 0.16 | 0.18 | - | - | - |
| E3 | R3/m | 0.94 | 0.143 | 0.18 | 2.883 | 14.33 | 0.1032 |

The values of lattice constants a and c and crystal lattice volume V (nm³) are values obtained when the potential is 3.2 to 3.3 V versus the potential of metallic lithium.

[Production of Batteries (Batteries Employing Composite Oxides A1 to A10, C1 to C6, D1 to D3, and E1 to E3 as Positive Active Materials)]

Composite oxides A1 to A10, C1 to C6, D1 to D3, and E1 to E3 were employed as the positive active materials to be used in respective batteries.

The powder as a positive active material, acetylene black as a conductive material, and poly(vinylidene fluoride) (PVdF) as a binder were mixed together in a weight ratio of 91:4.5:4.5. Thereto was added N-methylpyrrolidone as a solvent. The resultant mixture was kneaded for dispersion to prepare a coating fluid for positive electrode formation. The poly(vinylidene fluoride) was used in the form of a solution containing the solid dissolved or dispersed therein; the amount thereof was shown in terms of solid amount. The coating fluid for positive electrode formation was applied to one side of an aluminum foil current collector having a thickness of 20 μm so that the coated foil as a whole came to have a thickness of 105 μm. Thus, a positive electrode plate was produced.

For the purpose of ascertaining the behavior of the positive electrode plate itself, a coin battery employing metallic lithium as the counter electrode was produced. As shown in Fig. 7, this coin battery has a constitution formed by disposing a positive electrode 21 and a negative electrode 22 in a coin battery case 24 together with a separator 23 interposed between the electrodes and then covering the case with a coin battery cap 25. A resin packing 28 has been inserted between the coin battery case 24 and the coin battery cap 25.

More specifically, after the positive electrode plate was pressed, a disk having a diameter of 16 mm was punched out of the positive electrode plate and dried at 150°C for 12 hours at a reduced pressure of 26.6 Pa or lower to obtain a positive electrode 21. This positive electrode 21 was disposed in a coin battery case 24 in such a manner that the positive-electrode current collector 26 faced the coin battery case 24.

On the other hand, a disk having a diameter of 16 mm was punched out of metallic lithium having a thickness of 200 μm to obtain a metallic-lithium negative electrode 22. This negative electrode 22 was used in such a manner that a coin battery cap 25 was pressed against it while interposing a negative-electrode current collector 27 therebetween.

As a non-aqueous electrolyte was used a solution prepared by dissolving 1 mol/l $LiPF_6$ in a mixed solvent composed of ethylene carbonate and diethyl carbonate in a volume ratio of 3:7. As the separator 23 was used a microporous polypropylene film.

The positive electrode 21, negative electrode 22, separator 23, and liquid electrolyte described above were used to produce a coin battery having a diameter of 20 mm and a thickness of 1.6 mm (I-form).

This coin battery employing lithium as the counter electrode was subjected at 25°C to 5 cycles each comprising constant-current constant-voltage charge conducted for 15 hours at 0.1 ItA (10 hour rates) and 4.3 V and constant-current discharge conducted at 0.1 ItA to a final voltage of 3 V. The discharge capacities as measured in the fifth cycle are shown in the following tables. In the sixth cycle, constant-current constant-voltage charge at 0.1 ItA and 4.3 V was conducted at 25°C for 15 hours, and constant-current discharge at 0.2 ItA (5 hour rates) was conducted at -20°C to a final voltage of 3 V. The discharge capacities in this cycle are shown in the following tables under "-20°C 0.2-ItA discharge capacity". The ratio of the -20°C 0.2-ItA discharge capacity to the fifth-cycle discharge capacity was taken as discharge efficiency; high-rate discharge performance (low-temperature high-rate discharge performance) was evaluated based on values of this property.

Subsequently, a coin battery (II-form) to be examined for charge/discharge cycle performance was produced in the same manner as for the coin batteries (I-form), except that a negative electrode plate was produced in the following manner.

Artificial graphite (particle diameter, 10 $\mu$m) was used as a negative-electrode material. Poly(vinylidene fluoride) (PVdF) as a binder was added thereto in an amount of 10% by weight based on the negative-electrode material. Thereto was added N-methylpyrrolidone as a solvent. The resultant mixture was kneaded for dispersion to prepare a coating fluid for negative electrode formation. The poly(vinylidene fluoride) was used in the form of a solution containing the solid dissolved or dispersed therein; the amount thereof is shown in terms of solid amount. The coating fluid for negative electrode formation was applied to one side of a copper foil current collector having a thickness of 10 $\mu$m so that the coated foil as a whole came to have a thickness of 85 $\mu$m. Thus, a negative electrode plate was produced.

This battery was subjected at 25°C to constant-current constant-voltage charge conducted at 0.5 ItA (2 hour rates) and 4.2 V for 3 hours and constant-current discharge conducted at 0.5 ItA to a final voltage of 3 V. The number of cycles required for the discharge capacity to decrease to 80% of the discharge capacity as measured at the fifth cycle is shown as charge/discharge cycle performance.

[Production of Batteries (Batteries Employing Composite Oxides C9 to C15 as Positive Active Materials)]

(Production of Positive Electrodes)

Composite oxides C9 to C15 were employed as the positive active materials to be used in respective batteries.

Each positive active material, acetylene black as a conductive material, and poly(vinylidene fluoride) (PVdF) as a binder were mixed together in a weight ratio of 85:10:5. Thereto was added N-methyl-2-pyrrolidone (NMP). The resultant mixture was sufficiently kneaded to obtain a positive-electrode paste. The positive-electrode paste was applied to one side of an aluminum foil current collector having a thickness of 20 $\mu$m. The coated foil was pressed and cut into a 1-cm$^2$ disk.

(Production of Negative Electrode)

Artificial graphite (average particle diameter, 6 $\mu$m; lattice spacing measured by X-ray diffractometry ($d_{002}$), 0.337 nm; c-axis-direction crystal size (Lc), 55 nm) as a negative-electrode material was mixed with poly(vinylidene fluoride) (PVdF) as a binder in a weight ratio of 95:5. Thereto was added N-methyl-2-pyrrolidone (NMP). The resultant mixture was sufficiently kneaded to obtain a negative-electrode paste. Subsequently, the negative-electrode paste was applied to one side of a copper foil current collector having a thickness of 15 $\mu$m. The coated foil was pressed and cut into a 1-cm$^2$ disk.

(Preparation of Non-aqueous Electrolyte)

LiPF$_6$, a fluorinated electrolyte salt, was dissolved in a concentration of 1 mol/l in a mixed solvent prepared by mixing ethylene carbonate and diethyl carbonate in a volume ratio of 1:1. Thus, a non-aqueous electrolyte was produced. The water content in the non-aqueous electrolyte had been regulated to below 20 ppm.

(Production of Coin Batteries)

The members described above were used to produce coin batteries (III-form) in a dry atmosphere having a dew point of -50°C or lower in the same manner as for the coin batteries (I-form).

(Charge/Discharge Cycle Performance Test)

Two coin batteries (III-form) were produced for each positive active material and subjected to five cycles of initial charge/discharge. This charge was constant-current constant-voltage charge conducted under the conditions of a current of 0.1 ItA (10 hour rates) and 4.2 V. The discharge was constant-current discharge conducted under the conditions of a current of 0.1 ItA (10 hour rates) and a final voltage of 3.0 V. Subsequently, the batteries were subjected to a charge/discharge cycle test in which the charge was constant-current constant-voltage charge conducted at a current of 0.5 ItA and 4.2 V for 3 hours, and the discharge was constant-current discharge conducted at a current of 0.5 ItA to a final voltage of 3.0 V. A 30-minute pause period was inserted after each charge and after each discharge.

In the charge/discharge cycle performance test, the number of cycles (average for the two batteries) required for the discharge capacity to decrease to 80% of the initial discharge capacity as measured in the beginning of the charge/discharge cycle performance test was taken as charge/discharge cycle performance.

(High-Rate Discharge Performance Test)

Coin batteries (I-form) (coin batteries employing lithium as the counter electrode) were produced. The discharge efficiencies thereof were calculated in the same manner as described above. Low-temperature high-rate discharge performance, which is a kind of high-rate discharge performance, was evaluated based on values of this discharge efficiency.

The relationships between the batteries produced above and the battery performances thereof are summarized in Tables 8 to 10.

Table 8

| Battery | Positive-electrode active material | Battery performance | | | |
|---|---|---|---|---|---|
| | | 5th-cycle discharge capacity (mAh/g) | -20°C 0.2-ItA discharge capacity (mAh/g) | Cycle performance | Discharge efficiency (%) |
| Ex. 1-1 | composite oxide A1 | 146 | 48 | 500 | 32.9 |
| Ex. 1-2 | composite oxide A2 | 148 | 52 | 480 | 35.1 |
| Ex. 1-3 | composite oxide A3 | 149 | 53 | 470 | 35.6 |
| Ex. 1-4 | composite oxide A4 | 149 | 45 | 200 | 30.2 |
| Ex. 1-5 | composite oxide A5 | 152 | 62 | 300 | 40.8 |
| Ex. 1-6 | composite oxide A6 | 120 | 20 | 250 | 16.7 |
| Ex. 1-7 | composite oxide A7 | 140 | 30 | 400 | 21.4 |
| Comp. Ex. 1-1 | composite oxide A8 | 100 | 10 | 95 | 10.0 |
| Comp. Ex. 1-2 | composite oxide A9 | 150 | 47 | 300 | 31.3 |
| Ex. 1-8 | composite oxide A10 | 125 | 38 | 450 | 30.4 |

**Discharge efficiency (%):**

**(-20°C 0.2-ItA discharge capacity)/(5th-cycle discharge capacity) × 100**

Table 9

| Battery | Positive-electrode active material | Battery performance | | | |
|---|---|---|---|---|---|
| | | 5th-cycle discharge capacity (mAh/g) | -20°C 0.2-ItA discharge capacity (mAh/g) | Cycle performance | Discharge efficiency (%) |
| Ex. 2-1 | composite oxide C1 | 160 | 99 | 550 | 61.9 |
| Ex. 2-2 | composite oxide C2 | 153 | 87 | 540 | 56.9 |
| Ex. 2-3 | composite oxide C3 | 160 | 107 | 550 | 66.9 |
| Ex. 2-4 | composite oxide C4 | 160 | 95 | 540 | 59.4 |
| Ex. 2-5 | composite oxide C5 | 160 | 90 | 530 | 56.3 |
| Ex. 2-6 | composite oxide C6 | 160 | 104 | 400 | 65.0 |
| Ex. 2-9 | composite oxide C9 | 160 | 94 | 610 | 58.8 |
| Ex. 2-10 | composite oxide C10 | 155 | 115 | 700 | 74.2 |
| Ex. 2-11 | composite oxide C11 | 162 | 94 | 590 | 58.0 |
| Ex. 2-12 | composite oxide C12 | 155 | 110 | 670 | 71.0 |
| Comp. Ex. 2-1 | composite oxide C13 | 166 | 100 | 460 | 60.2 |
| Ex. 2-13 | composite oxide C14 | 160 | 60 | 400 | 37.5 |
| Ex. 2-14 | composite oxide C15 | 158 | 120 | 560 | 75.9 |

Discharge efficiency (%):

(-20°C 0.2-ItA discharge capacity)/(5th-cycle discharge

capacity) × 100

Table 10

| Battery | Positive-electrode active material | Battery performance | | | |
|---|---|---|---|---|---|
| | | 5th-cycle discharge capacity (mAh/g) | -20°C 0.2-ItA discharge capacity (mAh/g) | Cycle performance | Discharge efficiency (%) |
| Ex. 3-1 | composite oxide D1 | 145 | 45 | 510 | 31.0 |
| Comp. Ex. 3-1 | composite oxide D2 | 130 | 40 | 500 | 30.8 |
| Comp. Ex. 3-2 | composite oxide D3 | 150 | 43 | 450 | 28.7 |
| Ex. 4-1 | composite oxide E1 | 140 | 43 | 500 | 30.7 |
| Comp. Ex. 4-1 | composite oxide E2 | 110 | 35 | 490 | 31.8 |
| Comp. Ex. 4-2 | composite oxide E3 | 150 | 40 | 430 | 26.7 |

Discharge efficiency (%):

(-20°C 0.2-ItA discharge capacity)/(5th-cycle discharge capacity) × 100

EP 2 144 314 B1

The Examples will be compared with the Comparative Examples using graphs drawn from the data given in the tables shown above. In the graphs, "E1-1" means "Example 1-1"; the same applies to other numerals. In the graphs, the discharge capacity corresponds to "fifth-cycle discharge capacity".

(Dependence on pH in Coprecipitation Step)

In producing lithium-manganese-nickel composite oxides, various pH values were used to produce coprecipitated composites (composite oxide precursors). As a result, it was found that a composite oxide having preferred properties can be obtained by regulating the pH to a value in the range of from 10 to 13. Namely, in case where the pH is lower than 10, the formation of a complex of a metal ion with an ammonium ion is incomplete and an acid-base reaction occurs preferentially, resulting in a composite oxide having a large total pore volume and a low density. On the other hand, in case where the pH exceeds 13, a composite oxide having a small total pore volume and a higher density is obtained probably because the formation of a metal-ammine complex salt is stable and the rate of a coprecipitation reaction is reduced.

With respect to total pore volume, it is possible to reduce the volume of inner pores by adding a given amount of an element of a different kind, heightening the calcining temperature, or prolonging the calcining period. However, heightening the calcining temperature or prolonging the calcining period is undesirable because it lowers the productivity in calcining. Even when an element of a different kind is added, it is necessary to evenly conduct the displacement of nickel, manganese, and the element of a different kind in a solid solution state (especially, displacement of nickel and manganese in a solid solution state) at a given temperature for a given time period. It is hence very important to use as an uncalcined powder a dense raw material in which the solid-state displacement of nickel and manganese has been conducted more evenly, because use of this raw material is effective in shortening the calcining period and heightening productivity.

The lithium-manganese-nickel composite oxide produced through a coprecipitation step in which the pH was regulated to a value within that range has a moderate total pore volume and is composed of spherical secondary particles. Consequently, this composite oxide is a high-density lithium-manganese-nickel composite oxide although it has a relatively large inner-pore volume as compared with lithium-manganese-nickel composite oxides produced by a related-art process which includes addition of a given amount of an element of a different kind, elevation of calcining temperature, prolongation of calcining period, etc.

(Relationship between Specific Surface Area and Total Pore Volume)

The total pore volumes and specific surface areas of lithium-manganese-nickel composite oxides obtained by a process heretofore in use and of high-density active materials (lithium-manganese-nickel composite oxides) obtained by the coprecipitation method specified in the process according to the invention were calculated from desorption-side nitrogen adsorption isotherms.

As a result, it was found that the composite oxides obtained varied in both total pore volume and specific surface area with the pH of the aqueous solution and stirring speed in the coprecipitation step, calcining period, calcining temperature, and addition of an element of a different kind.

(Relationship between Calcining Conditions and Each of Total Pore Volume and Specific Surface Area)

Composite oxide A4, for which a calcining temperature of 850°C had been used, had a specific surface area of about 3.5 $m^2$/g. This composite oxide had a total pore volume of 0.0122 ml/g, which was 5.5% of the particle volume (0.220 ml/g).

Composite oxide A1, for which a calcining temperature of 1,030°C had been used, had a specific surface area of about 0.89 $m^2$/g. However, the total pore volume thereof was 0.0033 ml/g and could have been reduced to 1.5% of the particle volume (0.220 ml/g).

(Relationship between Calcining Temperature and Each of Specific Surface Area and Charge/Discharge Cycle Performance)

The graphs showing the relationship between calcining temperature in $LiMn_{0.5}Ni_{0.5}O_2$ production and each of specific surface area and charge/discharge cycle performance (see Fig. 8) show the following. As the calcining temperature was elevated, the total pore volume decreased and a high-density $LiMn_{0.5}Ni_{0.5}O_2$ with excellent charge/discharge cycle performance came to be obtained, as stated above. However, as the calcining temperature was lowered, the charge/discharge cycle performance decreased abruptly between 850°C and 950°C.

The reasons for this performance decrease are thought to be as follows. Due to the low calcining temperature, solid-phase reactions did not proceed and this obstructed lithium diffusion passages. Because of this and because of the presence of grain boundaries among crystal particles and microcracks and the like, the particle distortion attributable to lithium extraction during charge was enhanced. The positive active material hence suffered cracking, etc., resulting in the performance decrease. It was thus found that calcining at 900°C or a higher temperature is preferred for the composition $LiMn_{0.5}Ni_{0.5}O_2$.

(Relationship between Total Pore Volume (Specific Surface Area) and Each of Discharge Capacity and Charge/Discharge Cycle Performance)

As apparent from the graphs showing the relationship between the total pore volume (specific surface area) of $LiMn_{0.5}Ni_{0.5}O_2$ and each of discharge capacity and cycle performance (see Fig. 9), total pore volumes not larger than 0.002 ml/g tended to result in reduced discharge capacities.

Furthermore, Fig. 9 shows that total pore volumes exceeding 0.006 ml/g tended to result in reduced cycle performance. It is thought that this tendency is attributable to electrode breakage caused by distortions during charge/discharge, especially contraction distortions during charge, and to a capacity decrease caused by oxidative decomposition of the liquid electrolyte, etc.

It was thus found that the preferred range of the total pore volumes of composite oxides, especially $LiMn_{0.5}Ni_{0.5}O_2$, is from 0.002 ml/g to 0.006 ml/g because both of a high discharge capacity and excellent charge/discharge cycle performance can be attained.

(Effect of Displacement by Cobalt Element in Solid Solution State in Mn-Ni Oxide)

The following was found from a comparison among Examples 1-1, 2-1 to 2-3, 2-9, and 2-10, in which coprecipitation was used for production, the molar amount of manganese was equal to that of nickel, and the same calcining conditions (1,000°C 15 hours) were used. Namely, the amount of cobalt was found to be proportional to high-rate discharge performance although slight errors were observed.

This phenomenon is thought to be attributable to an improved degree of freedom of lithium ion movement within the crystals constituting the composite oxide in which the manganese and nickel have been partly displaced by cobalt in a solid solution state. However, since the composite oxide which has undergone displacement by cobalt in a solid solution state has a smaller crystal lattice size before charge than $LiMn_{0.5}Ni_{0.5}O_2$, it is also thought that the degree of freedom of lithium ion movement has decreased from the standpoint of crystal lattice size.

However, the reasons why the displacement by cobalt in a solid solution state resulted in an increased degree of freedom of lithium ion movement may be as follows. Since the degree of freedom of the reaction in which lithium ions are extracted from $LiMn_{0.5}Ni_{0.5}O_2$ during charge influences the electronic state of the oxygen in the $LiMn_{0.5}Ni_{0.5}O_2$, the displacement of the manganese and nickel in -Mn-O-Ni-O- as a component of the layer structure by cobalt in a solid solution state changed the electronic state of the oxygen and thereby improved the degree of freedom of lithium ion movement.

As stated hereinabove, $LiCoO_2$ is a material which undergoes a crystal lattice size increase upon lithium ion extraction during charge. When manganese and nickel are displaced in a given amount by cobalt, which is capable of imparting such properties, then the resultant $LiMn_{0.5-x}Ni_{0.5-y}Co_{x-y}O_2$ either undergoes mitigated shrinkage or suffers shrinkage with a reduced distortion. It is thought that this displacement thus brought about better charge/discharge cycle performance and enabled the composite oxide to retain a higher degree of charge/discharge cycle performance even when it had an enlarged specific surface area and an increased pore volume.

As shown in Example 3-1, displacement in $LiMn_{0.5}Ni_{0.5}O_2$ by 1% magnesium in a solid solution state yielded particles which had a high density and retained the same layer structure as that of the original composite oxide. The displacement by magnesium in a solid solution state tended to enhance charge/discharge cycle performance. In the case where the manganese amount was considerably larger than the nickel amount, an impurity which had a structure belonging to the space group C2/m and was thought to be $Li_2MnO_3$ was yielded, resulting in a further reduced discharge capacity, as shown in Comparative Example 3-1. Furthermore, in the case where the nickel amount was larger than the manganese amount, the composite oxide obtained by displacement by an element in a solid solution state had a higher initial discharge capacity than the original composite oxide but had reduced, rather than increased, charge/discharge cycle performance, as shown in Comparative Example 3-2.

Displacement in $LiMn_{0.5}Ni_{0.5}O_2$ by 1% aluminum in a solid solution state showed the same tendency as in Example 3-1, as shown in Example 4-1.

Those effects of element displacement are thought to be attributable to acceleration of crystallization by the element which has displaced and to the resultant inhibition of crystal structure changes with charge/discharge.

**(Relationship between X-Ray Diffraction Peak Relative-Intensity Ratio and Each of Discharge Capacity and Charge/Discharge Cycle Performance)**

Fig. 10 is a graph showing the relationship between discharge capacity and the relative-intensity ratio of the diffraction peak at a 26 of 44.1±1° to the diffraction peak at a 26 of 18.6±1° in a diffraction pattern for $LiMn_{0.5}Ni_{0.5}O_2$ in X-ray powder diffractometry with $CuK_\alpha$ ray.

As shown in Fig. 10, the discharge capacity decreased considerably as the relative-intensity ratio increased beyond 1.05.

The reasons for this are as follows. According to the Reibelt analysis of an X-ray powder diffraction pattern, that relative-intensity ratio can be related to element displacement at sites occupied by constituent elements. When an elevated calcining temperature, a prolonged calcining period, or the like is used, an element such as, e.g., nickel, manganese, or cobalt undergoes a site exchange with lithium, whereby that relative-intensity ratio tends to increase.

As described above, $LiMn_{0.5-x}Ni_{0.5-y}M_{x+y}O_2$ in which the relative-intensity ratio of the diffraction peak at a $2\theta$ of 44.1±1° to the diffraction peak at a $2\theta$ of 18.6±1° is high has a small specific surface area, small total pore volume, and high density but has a reduced discharge capacity. Consequently, that relative-intensity ratio is desirably 1.05 or lower.

Fig. 11 is a graph showing the relationship between charge/discharge cycle performance and the relative-intensity ratio of the diffraction peak at a $2\theta$ of 44.1±1° to the diffraction peak at a $2\theta$ of 18.6±1° in a diffraction pattern for $LiMn_{0.5}Ni_{0.5}O_2$ in X-ray powder diffractometry with $CuK_\alpha$ ray.

As shown in Fig. 11, the charge/discharge cycle performance decreased considerably as the relative-intensity ratio decreased to below 0.65.

It is thought that the decrease in charge/discharge cycle performance is attributable to unsmooth lithium diffusion in this composite oxide, which has not undergone sufficient solid-phase reactions and formation of a crystal structure.

On the other hand, the $LiMn_{0.5}Ni_{0.5}O_2$ produced by the neutralization method or powder mixing method heretofore in use gave unsatisfactory results with respect to each of discharge capacity and charge/discharge cycle performance. The reasons for this may be as follows. In the case of the composite oxide produced by the former process, i.e., the neutralization method, it is thought that the presence of impurities including $Li_2MnO_3$ which differ from R3/m is causative of these results and that such impurities were yielded because the valence of the manganese in the composite oxide precursor was not regulated. In the case of the composite oxide produced by the latter process, i.e., the powder mixing method, those results are attributable to the insufficient growth of a crystal structure because solid-phase reactions do not proceed sufficiently during calcining.

Consequently, the relative-intensity ratio of the diffraction peak at a $2\theta$ of 44.1±1° to the diffraction peak at a $2\theta$ of 18.6±1° is desirably 0.65 or higher because this material has an evenly mixed state.

(Relationship between Half Width at $2\theta$ of 18.6±1° and Each of Discharge Capacity and Charge/Discharge Cycle Performance)

Fig. 12 is a graph showing the relationship between discharge capacity and the half width at a $2\theta$ of 18.6±1° in a diffraction pattern for $LiMn_{0.5}Ni_{0.5}O_2$ in X-ray powder diffractometry with $CuK_\alpha$ ray. It is thought that the half width at a $2\theta$ of 18.6° does not correlate with discharge capacity when it is in the range of from 0.050 to 0.200.

Fig. 13 is a graph showing the relationship between charge/discharge cycle performance and the half width at a $2\theta$ of 18.6.±1° in a diffraction pattern for $LiMn_{0.5}Ni_{0.5}O_2$ in X-ray powder diffractometry with $CuK_\alpha$ ray. It is thought that in the batteries of the Examples, the half width at a $2\theta$ of 18.6±1° does not correlate with charge/discharge cycle performance.

However, in the $LiMn_{0.5}Ni_{0.5}O_2$ produced by the neutralization method or powder mixing method heretofore in use, the half width at a $2\theta$ of 18.6±1° was around 0.200 and tended to result in reduced charge/discharge cycle performance.

It is thought that in the $LiMn_{0.5}Ni_{0.5}O_2$ produced through mixing and calcining by the neutralization method or powder mixing method heretofore in use, the nickel and manganese are in an insufficiently mixed state, and that the resultant widened half width is causative of the decrease in charge/discharge cycle performance. It is thought that the local presence of a manganese-rich part and a nickel-rich part which each have a shifted proportion brought about the poor charge/discharge cycle performance attributable to $LiMnO_2$ and the poor thermal stability during charge attributable to $LiNiO_2$.

(Relationship between Half Width at 2θ of 44.1±1° and Each of Discharge Capacity and Charge/Discharge Cycle Performance)

Fig. 14 shows the relationship between discharge capacity and the half width at a 2θ of 44.1±1° in a diffraction pattern for $LiMn_{0.5}Ni_{0.5}O_2$ in X-ray powder diffractometry with $CuR_\alpha$ ray.

In the batteries of the Examples, which employed the composition $LiMn_{0.5}Ni_{0.5}O_2$, the discharge capacity tended to decrease as the half width at a 2θ of 44.1±1° decreased around 0.100°.

Fig. 15 shows the relationship between charge/discharge cycle performance and the half width at a 2θ of 44.1±1° in a diffraction pattern for $LiMn_{0.5}Ni_{0.5}O_2$ in X-ray powder diffractometry with $CuK_\alpha$ ray.

In the batteries of the Examples, which employed the composition $LiMn_{0.5}Ni_{0.5}O_2$, the charge/discharge cycle performance tended to decrease as the half width at a 2θ of 44.1±1° increased around 0.170°. Incidentally, the batteries produced with the neutralization method or powder mixing method heretofore in use tended to have reduced charge/discharge cycle performance probably because the half width at a 2θ of 44.1±1° exceeded 0.250 and the crystal homogeneity was insufficient.

It was found from these results that excellent charge/discharge cycle performance and a high discharge capacity are maintained when the half width at a 2θ of 44.1±1° is from 0.100° to 0.200°.

(Relationship between Charge Amount and Each of Lattice Spacing and Crystal Lattice Volume)

It was ascertained as shown in Fig. 16 that composite oxides represented by $Li_aMn_{0.5-x}Ni_{0.5-y}M_{x+y}O_2$ which had undergone displacement by an element M of a different kind, in particular, the composite oxide in which M was cobalt, i.e., $Li_aMn_{0.5-x}Ni_{0.5-y}Co_{x+y}O_2$ (composite oxide C1 as the positive active material of the battery of Example 2-1), had a slightly shorter a-axis lattice spacing and a slightly shorter c-axis lattice spacing before charge than $LiMn_{0.5}Ni_{0.5}O_2$ (composite oxide A1 as the positive active material of the battery of Example 1-1) and had a reduced crystal lattice volume. With respect to the c-axis lattice spacing in a charged state, composite oxide C1 had a slightly larger value than composite oxide A1. However, with respect to the a-axis lattice spacing in a charged state, the difference before charge was almost maintained. It was thus ascertained as shown in Fig. 17 that the crystal lattice volume of a composite oxide which has undergone displacement by an element M of a different kind in a solid solution state (composite oxide C1) is smaller than the crystal lattice volume of a composite oxide which has not undergone displacement by an element M of a different kind in a solid solution state (composite oxide A1).

The reason why the element M of a different kind facilitates security of a discharge capacity even when the total pore volume is small is not that the displacement increases the crystal lattice volume to heighten the degree of freedom of lithium ion movement, but that the displacement influences the electronic state of the oxygen to which the element M of a different kind is bonded and thereby heightens the degree of freedom of lithium ion movement.

The high-density lithium-nickel-manganese-cobalt composite oxide produced by the coating coprecipitation method is a composite oxide of a nearly single-phase structure formed by calcining. However, since this composite oxide is slightly superior in charge/discharge cycle performance to the composite oxide by coprecipitation method, it is thought that the addition of cobalt had the effect of reducing contraction distortions in the surface.

It was ascertained from the results of the Examples given above that when a $LiMn_{0.5-x}Ni_{0.5-y}M_{x+y}O_2$ having a higher cobalt proportion than $LiMn_{5/12}Ni_{5/12}Co_{2/12}O_2$, in which the displacement amount is 10% or more, is used as a positive active material, then an operating voltage of from 4.3 V to 3.0 V, which enables excellent interchangeability with lithium ion batteries heretofore in use, is obtained and a discharge capacity as high as 160 mAh/g is also obtained.

The case in which composite oxides represented by $Li_aMn_{0.5-x}Ni_{0.5-y}M_{x+y}O_2$ having a high lithium proportion were used as positive active materials was evaluated for the same properties. As a result, initial discharge capacity tended to decrease as the value of a exceeded 1.1. This is thought to be attributable to unreacted lithium, which changed into $Li_2CO_3$ and increased the resistance of the battery. When the value of a was smaller than 1.3, both initial discharge capacity and charge/discharge cycle performance were the same as in the Examples and no tendency to a decrease in battery performance was observed. It was found that increased lithium proportions tend to facilitate crystal growth in high-temperature calcining. Such lithium proportions were ascertained to further have the effect of reducing the calcining period. Consequently, it is thought that increased lithium proportions have not only the effect of facilitating lithium ion movement but also the effect of helping crystallization during calcining.

(Lattice Constants and Displacement by Cobalt in Solid Solution State)

The following can be seen, e.g., from a comparison between the batteries of Examples 2-9 and 2-10 and the battery of Example 1-2. In lithium composite oxides in which the nickel proportion and the manganese proportion are the same, the lattice constant a and the lattice constant c become smaller and the crystal lattice volume becomes closer to that of $LiCoO_2$ as the amount of displacement by cobalt increases. This indicates that the Li-Mn-Ni oxide and the

$LiCoO_2$ constitute a solid solution.

(Charge/Discharge Cycle Performance and Lattice Constants)

The batteries of, e.g., Example 2-9 to Example 2-12, in which the lattice constants and volume of the unit crystal lattice were within the preferred ranges shown above, were ascertained to have a longer cycle life than the battery of Example 2-13, in which these properties were outside the preferred ranges.

Charge/discharge cycle performance tends to become better as the amount of displacement by cobalt in the composition increases and the lattice constants decreases.

In a charged state, Li-Ni-Mn composite oxides have a reduced value of lattice constant a and an increased value of lattice constant c and hence have a distorted crystal lattice structure. In this state, the decrease in lattice constant a is larger and, as a result, the volume of the unit crystal lattice decreases.

On the other hand, when $LiCoO_2$, which has the same layer structure as Li-Ni-Mn composite oxides, is in a charge termination state, it has an increased value of lattice constant c due to the electrostatic repulsive force acting on the oxygen layers but has an almost unchanged value of lattice constant a. Consequently, the distortion of the crystal lattice is small and, as a result, the volume of the unit crystal lattice increases due to the lattice constant c.

It is therefore thought that the Li-Ni-Mn-Co composite oxides in the Examples suffer a reduced crystal lattice distortion because of the reduced decrease in lattice constant a in a charged state due to the presence of cobalt and are hence inhibited from deteriorating with repetitions of charge/discharge.

(Charge/Discharge Cycle Performance and Ni/Mn Ratio)

In the batteries of Examples 2-11 and 2-12, in which the Ni/Mn ratio has shifted from 1/1 to the nickel side, the thermal instability during charge which is attributable to $LiNiO_2$ is enhanced as the nickel proportion increases. However, satisfactory charge/discharge cycle performance is retained because cobalt is present in such an amount that the instability can be compensated for.

However, in the case where nickel is present in an excess amount as in the battery of Comparative Example 2-1, charge/discharge cycle performance was poor although a high initial discharge capacity was attained. The reasons for this may be that this composite oxide has almost the same properties as $LiNiO_2$ and the displacement by cobalt produces almost no improving effect.

In the case where manganese is present in an excess amount, the hexagonal system cannot be present as the only phase and constitutes a eutectic region together with Li-Mn oxides including $Li_2MnO_3$. Most of these compounds are electrochemically inactive at 4 V and hence relate to deterioration of discharge capacity and charge/discharge cycle performance.

In the Examples, non-aqueous electrolyte secondary batteries employing artificial graphite as a negative-electrode material were described. However, the same effects were ascertained to be produced when other negative-electrode materials were used.

[Production of Batteries (Batteries Employing Composite Oxides C17 to C22 as Positive Active Materials)]

Composite oxides C17 to C22 were employing as the positive active materials to be used in respective batteries. The powder as a positive active material, acetylene black as a conductive material, and poly(vinylidene fluoride) (PVdF) as a binder were mixed together in a weight ratio of 85:10:5. Thereto was added N-methyl-2-pyrrolidone (NMP). This mixture was sufficiently kneaded to obtain a positive-electrode paste. The positive-electrode paste was applied to one side of an aluminum foil current collector having a thickness of 20 $\mu$m. The coated foil was allowed to dry naturally at an ordinary temperature of about 25°C and then dried at 130°C for 12 hours under reduced pressure. Thereafter, the coated foil was pressed and cut into a 1-cm$^2$ disk to be used as a positive electrode.

Artificial graphite (average particle diameter, 6 $\mu$m; lattice spacing measured by X-ray diffractometry ($d_{002}$), 0.337 nm; c-axis-direction crystallite size (Lc), 55 nm) as a negative-electrode material was mixed with poly(vinylidene fluoride) (PVdF) in a weight ratio of 95:5. Thereto was added N-methyl-2-pyrrolidone (NMP). This mixture was sufficiently kneaded to obtain a negative-electrode paste. Subsequently, the negative-electrode paste was applied to one side of a copper foil current collector having a thickness of 15 $\mu$m. The coated foil was allowed to dry naturally at an ordinary temperature of about 25°C and then dried at 130°C for 12 hours under reduced pressure. Thereafter, the coated foil was pressed and cut into a 1-cm$^2$ disk to be used as a negative electrode.

$LiPF_6$, a fluorinated electrolyte salt, was dissolved in a concentration of 1 mol/l in a mixed solvent prepared by mixing ethylene carbonate and diethyl carbonate in a volume ratio of 1:1. Thus, a non-aqueous electrolyte was produced. The water content in the non-aqueous electrolyte had been regulated to below 20 ppm.

The members described above were used to produce coin batteries in a dry atmosphere having a dew point of -50°C or lower. The positive electrode was used after having been press-bonded to a positive-electrode can to which a positive-electrode current collector had been attached. The negative electrode was used after having been press-bonded to a negative-electrode can to which a negative-electrode current collector had been attached. The positive electrode, negative electrode, and electrolyte described above and a separator were used to produce a coin battery having a diameter of 20 mm and a thickness of 1.6 mm (IV-form).

(Cycle Test)

Many coin batteries of the type described above (IV-form) were produced for each positive active material and subjected to ten cycles of initial charge/discharge. This charge was constant-current constant-voltage charge conducted under the conditions of a current of 0.1 ItA (10 hour rates) and 4.2 V for 15 hours. The discharge was constant-current discharge conducted under the conditions of a current of 0.1 ItA (10 hour rates) and a final voltage of 3.0 V.
Subsequently, a cycle test was conducted. In this cycle test, the charge was conducted in the constant-current constant-voltage mode under the conditions of 1.0 ItA (1 hour rate), 4.2 V, and 15 hours. The discharge was conducted in the constant-current mode under the conditions of a current of 1.0 ItA (1 hour rate) and a final voltage of 3.0 V.
The relationships between the batteries produced above and the battery performances thereof are summarized in Table 11.

Table 11

| Battery | Positive-electrode active material | Battery performance | | |
|---|---|---|---|---|
| | | 1st-cycle discharge capacity (mAh/g) | 50th-cycle discharge capacity (mAh/g) | Capacity retention (%) |
| Ex. 5-1 | composite oxide C17 | 160 | 160 | 100 |
| Ex. 5-2 | composite oxide C18 | 160 | 155 | 96.9 |
| Ex. 5-3 | composite oxide C19 | 155 | 150 | 96.8 |
| Ex. 5-4 | composite oxide C20 | 162 | 130 | 80.2 |
| Ex. 5-5 | composite oxide C21 | 161 | 133 | 82.6 |
| Ex. 5-6 | composite oxide C22 | 155 | 140 | 90.3 |

**Capacity retention: (50th-cycle discharge capacity)/(1st-cycle discharge capacity)**

The results given in Table 11 show the following. The batteries of Examples 5-1 to 5-3, in which a composite oxide having a particle size distribution in which the 50% particle diameter was larger than 0.8 $\mu$m and not larger than 10 $\mu$m and the 10% particle diameter was larger than 0.4 $\mu$m and not larger than 7 $\mu$m was employed as the positive active material, had a higher discharge capacity (see "50th-cycle discharge capacity") and higher charge/discharge cycle performance (see "capacity retention") as compared with the batteries of Examples 5-4 to 5-6 (see Fig. 13).

(EXAMPLE 6-1)

(Production of Positive Electrode)

Composite oxide C16 was used as a positive active material to produce a prismatic non-aqueous electrolyte battery of the constitution shown in Fig. 19 in the following manner.

Composite oxide C16, acetylene black as a conductive material, and poly(vinylidene fluoride) (PVdF) as a binder were mixed together in a weight ratio of 85:10:5. Thereto was added N-methylpyrrolidone as a solvent. This mixture was kneaded for dispersion to prepare a coating fluid for positive electrode formation. The poly(vinylidene fluoride) was used in the form of a solution containing the solid dissolved or dispersed therein; the amount thereof was shown in terms of solid amount. The coating fluid for positive electrode formation was applied to each side of an aluminum foil current collector having a thickness of 20 $\mu$m so that the coated foil as a whole came to have a thickness of 230 $\mu$m. Thus, a positive-electrode sheet was produced. This positive-electrode sheet was cut into a shape having a width of 61 mm and a height of 107 mm. An aluminum lead having a thickness of 20 $\mu$m and a width of 10 mm was attached to an end of the cut sheet to obtain a positive electrode plate 7.

The value of x in this positive active material $Li_{1-x}Mn_{0.45}Ni_{0.45}Co_{0.1}O_2$ was varied, and these compositions were examined by X-ray diffractometry. Fluctuations in crystal lattice volume calculated from the thus-found values of a-axis and c-axis crystallite sizes are shown in Fig. 20. The crystal lattice volume as measured when the value of x is 0.6 is smaller by about 2.8% than the crystal lattice volume as measured when the value of x is 0.

(Production of Negative Electrode)

A carbon material (graphite) was used as a negative-electrode material which had a lattice plane (002) spacing $d_{002}$ as measured by X-ray diffractometry of 0.335 nm, a-axis-direction crystal particle size La of about 80 to 100 nm, c-axis-direction crystal particle size Lc of about 60 to 100 nm, true specific gravity of 2.24 g/cc, and specific surface area of 1.7 m$^2$/g. This carbon material as a negative-electrode material was mixed with poly(vinylidene fluoride) (PVdF) as a binder in a weight ratio of 90:10. Thereto was added N-methylpyrrolidone as a solvent. This mixture was kneaded for dispersion to prepare a coating fluid for negative electrode formation. The poly(vinylidene fluoride) was used in the form of a solution containing the solid dissolved or dispersed therein; the amount thereof is shown in terms of solid amount. The coating fluid for negative electrode formation was applied to each side of a copper foil current collector having a thickness of 10 $\mu$m so that the coated foil as a whole came to have a thickness of 180 $\mu$m. Thus, a negative-electrode sheet was produced. This negative-electrode sheet was cut into a shape having a width of 65 mm and a height of 111 mm. A copper lead having a thickness of 10 $\mu$m and a width of 10 mm was attached to an end of the cut sheet to obtain a negative electrode plate 9.

The value of y in this negative-electrode material $Li_yC_6$ was varied, and these compositions were examined by X-ray diffractometry. Fluctuations in crystal lattice volume calculated from the thus-found values of a-axis and c-axis crystallite sizes are shown in Fig. 21. The crystal lattice volume as measured when the value of y is 0.6 is larger by about 5% than the crystal lattice volume as measured when the value of y is 0.

(Production of Battery)

The positive electrode plate 7 and negative electrode plate 9 were dried under reduced pressure at 150°C for 12 hours. Subsequently, the positive electrode plate 7 was inserted into a bag, as a separator 8, obtained by cutting a microporous polyethylene film into a bag shape with a width of 65 mm and a height of 111 mm. The positive electrode plate 7 with the separator 8 and the negative electrode plate 9 were alternately stacked to obtain an electrode group composed of forty sheets of the positive electrode plate 7 with the separator 8 and forty-one sheets of the negative electrode plate 9.

The electrode group was wrapped in an insulating film made of a polyethylene resin, and housed in a prismatic battery case 10 made of aluminum. The leads of each positive electrode plate 7 and of each negative electrode plate 9 were connected by a bolt respectively to a positive terminal 5 and a negative terminal 4 attached to a cap 2 made of aluminum and having a safety vent 1. The terminals 5 and 4 had been insulated from the cap 2 with a gasket 6 made of a polypropylene resin.

The cap 2 and the battery case 10 were laser-welded together at a laser-welded part 3. A liquid electrolyte prepared by dissolving 1 mol/l $LiPF_6$ in a mixed solvent composed of ethylene carbonate and diethyl carbonate in a volume ratio of 1:1 was charged into the battery case 10 in an amount of 85 g. This battery case was sealed. Thereafter, constant-current constant-voltage charge at 1.5 A and 4.2 V was conducted at 25°C for 15 hours and constant-current discharge at 1.5 A was conducted at 25°C to a final voltage of 3 V. Thus, a prismatic lithium battery was obtained which had a length of 70 mm, height of 130 mm (height including terminal height: 136 mm), and width of 22 mm. This battery is referred to as battery of Example 6-1.

(EXAMPLE 6-2)

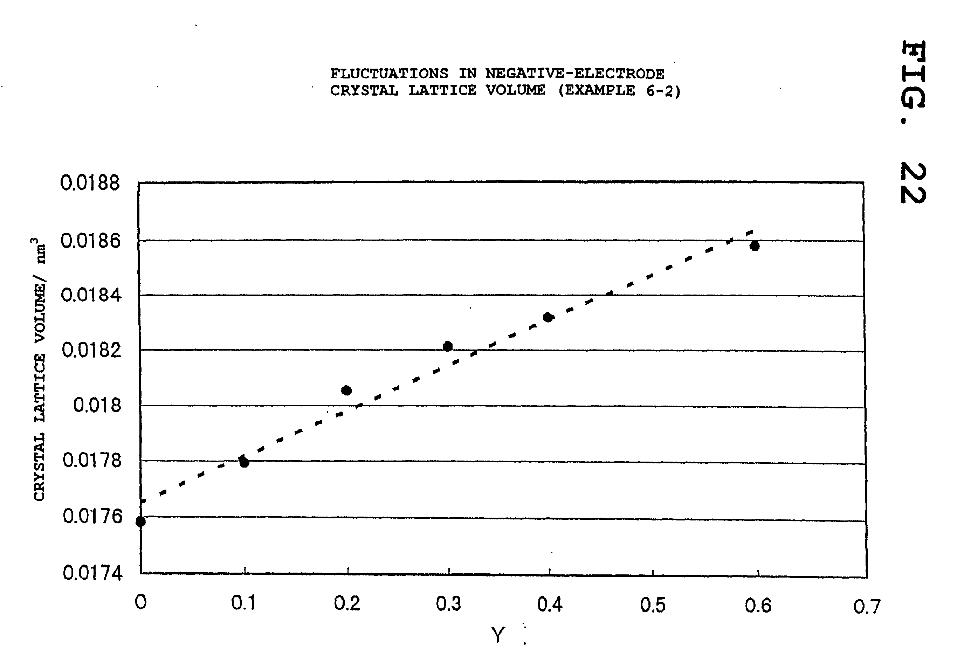

A battery was produced in the same manner as in (Example 6-1), except that a carbon material having a lattice plane (002) spacing $d_{002}$ as measured by X-ray diffractometry of 0.337 nm, a-axis-direction crystal particle size La of about from 40 to 60 nm, c-axis-direction crystal particle size Lc of about from 40 to 70 nm, true specific gravity of 2.2 g/cc, and specific surface area of 1.5 $m^2$/g was used as a negative-electrode material. This battery is referred to as battery of Example 6-2.
The value of y in this negative-electrode material $Li_yC_6$ was varied, and these compositions were examined by X-ray diffractometry. Fluctuations in crystal lattice volume calculated from the thus-found values of a-axis and c-axis crystallite sizes are shown in Fig. 22. The crystal lattice volume as measured when the value of y is 0.6 is larger by about 6% than the crystal lattice volume as measured when the value of y is 0.

(EXAMPLE 6-3)

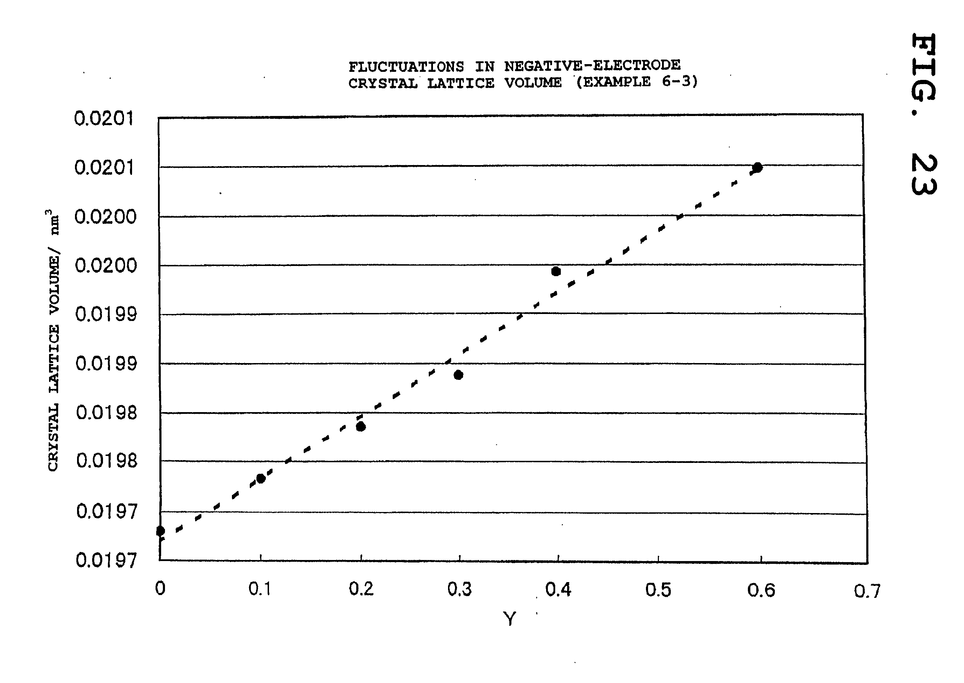

A battery was produced in the same manner as in (Example 6-1), except that a carbon material having a lattice plane (002) spacing $d_{002}$ as measured by X-ray diffractometry of 0.375 nm, a-axis-direction crystal particle size La of 100 nm or larger, c-axis-direction crystal particle size Lc of from 5 to 20 nm, true specific gravity of 1.80 g/cc, and specific surface area of 3.0 $m^2$/g was used as a negative-electrode material. This battery is referred to as battery of Example 6-3.
The value of y in this negative-electrode material $Li_yC_6$ was varied, and these compositions were examined by X-ray diffractometry. Fluctuations in crystal lattice volume calculated from the thus-found values of a-axis and c-axis crystallite sizes are shown in Fig. 23. The crystal lattice volume as measured when the value of y is 0.6 is larger by about 2% than the crystal lattice volume as measured when the value of y is 0.

(COMPARATIVE EXAMPLE 6-1)

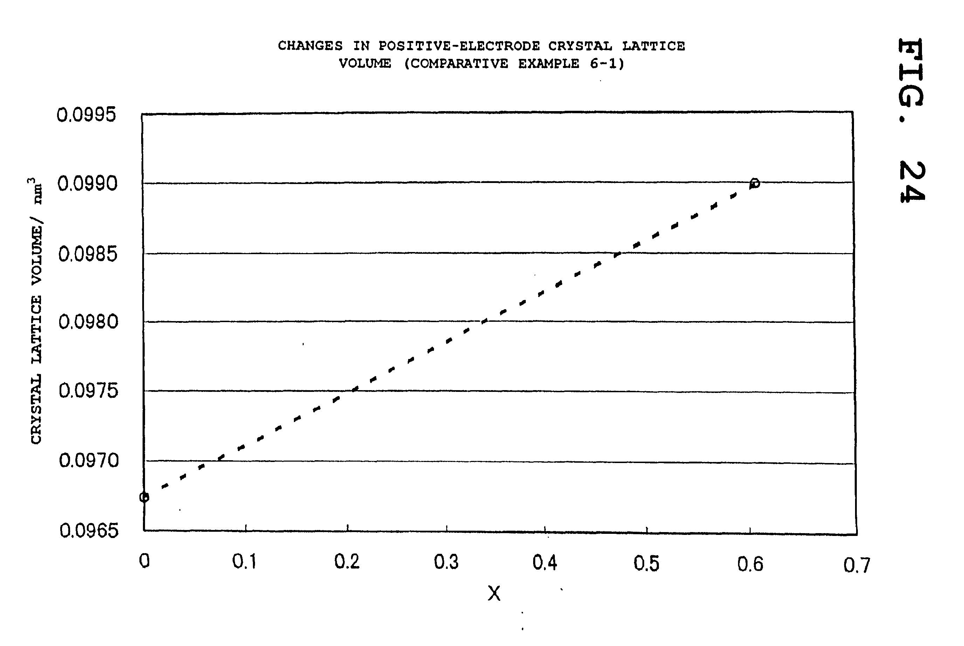

A battery was produced in the same manner as in (Example 6-1), except that $LiCoO_2$ was used as a positive active material. This battery is referred to as battery of Comparative Example 6-1.
The value of x in this positive active material $Li_{1-x}CoO_2$ was varied, and these compositions were examined by X-ray diffractometry. Fluctuations in crystal lattice volume calculated from the thus-found values of a-axis and c-axis crystallite sizes are shown in Fig. 24. The crystal lattice volume as measured when the value of x is 0.6 is larger by about 2.3% than the crystal lattice volume as measured when the value of x is 0.
The calculation of the crystal lattice volume (V) for each of the positive active materials and negative-electrode materials described above was made based on the a-axis, b-axis, and c-axis, which indicate the planes of the crystal structure, and on the angles $\alpha$, $\beta$, and $\gamma$ between the axes using the following calculation formula, on the assumption that a=b, $\alpha=\beta=90°$, and $\gamma=120°$.

$$V = abs(1-cos^2\alpha-cos^2\beta-cos^2\gamma+2cos\alpha cos\beta cos\gamma)^{1/2}$$

(Battery Performance Evaluation)

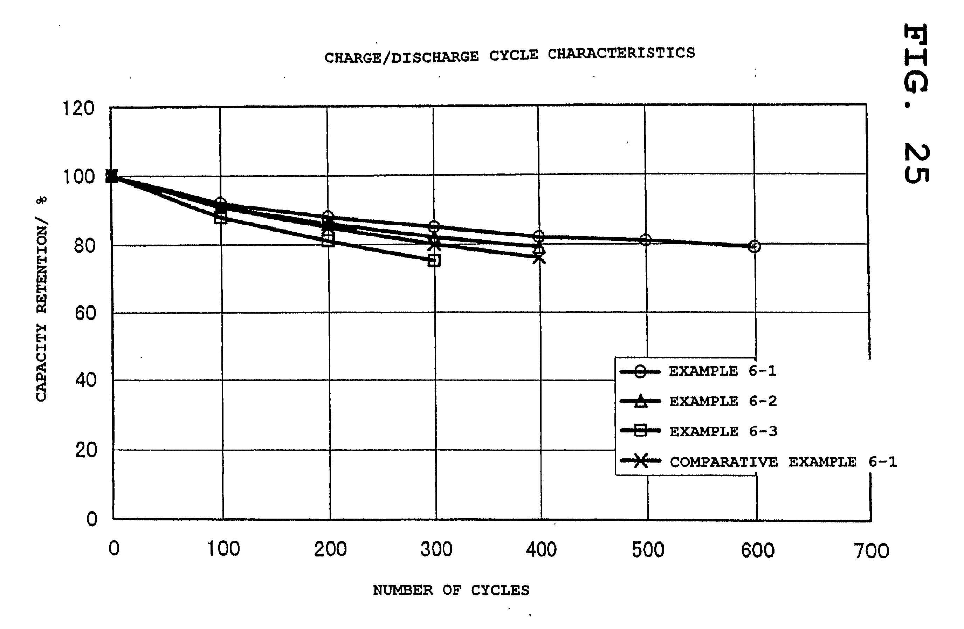

The batteries of Examples 6-1 to 6-3 and Comparative Example 6-1 were subjected to a charge/discharge cycle test. The test was conducted at room temperature under the following conditions. The charge was constant-current constant-voltage charge conducted at 7.5 A and 4.2 V for 3 hours. The discharge was constant-current discharge conducted at 7.5 A to a final voltage of 3.0 V. A 1-hour rest period was inserted after each charge and after each discharge.
The results of this cycle test are shown in Fig. 25. The battery of Example 6-1 showed a capacity retention of about 80% based on the initial capacity until the number of cycles reached about 600. The number of cycles in which 80% of the initial capacity was retained was about 350 for the battery of Example 6-2, about 200 for the battery of Example 6-3, and about 300 for the battery of Comparative Example 6-1.

The reasons for these results may be as follows. In the case where the rates of the fluctuations in crystal lattice volume with charge/discharge of the positive and negative electrodes were within the preferred ranges shown above as in the battery of Example 6-1, the group of electrodes retained a given evenly pressurized state even in repetitions of charge/discharge. Consequently, the bonding of each current collector to the active material was always kept in a high-strength state and this is thought to have brought about the very small decrease in discharge capacity. On the other hand, in the batteries of Examples 6-2 and 6-3 and Comparative Example 6-1, the volume fluctuations caused by the expansion and contraction of the active materials with charge/discharge could not be followed up. It is though that the resultant decrease in adhesion between each current collector and the active material led to a decrease in electron conduction and this resulted in the capacity decrease.

In this cycle test, each battery was tested without applying an external pressure (compression) thereto. In the battery of Example 6-1, the difference in battery case thickness between the battery before the cycle test and the battery after 600 cycles was 1 mm or smaller. In contrast, in the battery of Example 6-2, the battery case thickness had increased by about 3 mm at the time when 400 cycles had passed. In the battery of Comparative Example 6-1, the battery case thickness had increased by about 3 mm, as in the battery of Example 6-2, at the time when 300 cycles had passed.

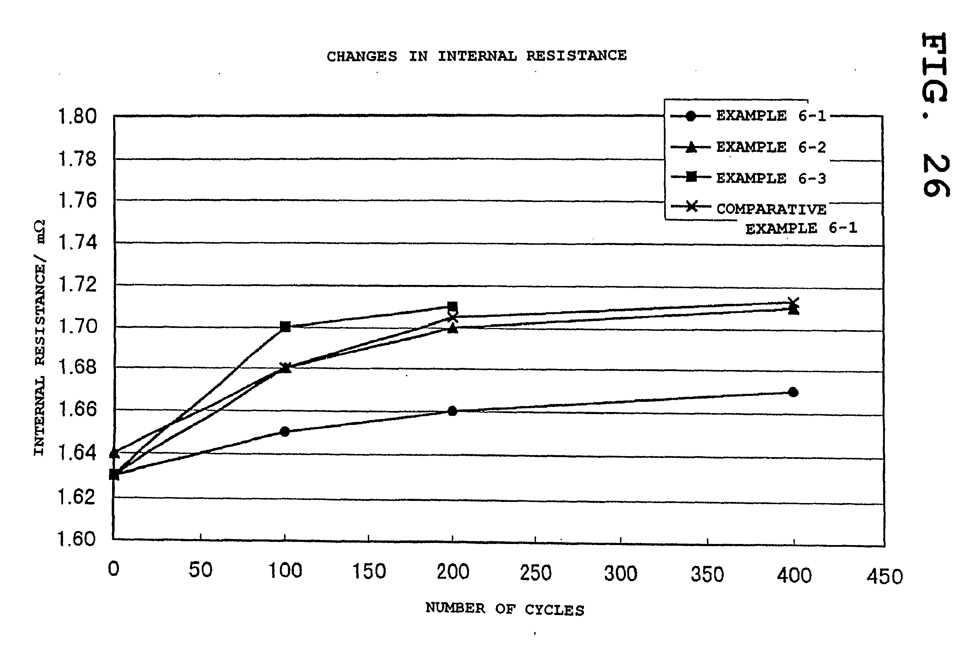

In the cycle test, the batteries of Examples 6-1 to 6-3 and Comparative Example 6-1 were examined for internal resistance at an interval of given cycles by the alternating testing method using a frequency of 1 kHz. All measurements were made when the batteries were in a discharge termination state. The results are shown in Fig. 26.

Fig. 26 shows the following. The increase in internal resistance of the battery of Example 6-1 at the time when 400 cycles had passed was about 0.04 m$\Omega$ based on the value before the test. In contrast, in the batteries of Examples 6-2 and 6-3 and Comparative Example 6-1, the increases in internal resistance were about 0.07 m$\Omega$ based on the values before the test. It is thought also from these results that the changes in the strength of adhesion between each current collector and the active material with repetitions of charge/discharge influence cycle performance.

In the Examples given above, a carbonaceous material having a lattice plane (002) spacing $d_{002}$ as measured by X-ray diffractometry of 0.335 nm, a-axis-direction crystal particle size La of about 80 to 100 nm, c-axis-direction crystal particle size Lc of about 60 to 100 nm, true specific gravity of 2.24 g/cc, and specific surface area of 1.7 m$^2$/g was used. However, carbonaceous materials are not particularly limited as long as the relationship between the coefficient of fluctuation in crystal lattice volume of each carbonaceous material and that of the positive active material is within the range described hereinabove.

Furthermore, although prismatic batteries were described above in (Battery Performance Evaluation), the properties described above should not be construed as being obtained with this structure only. The same effects are obtained in batteries of shapes such as the cylindrical, flat, and coin types.

(EXAMPLE 7-1)

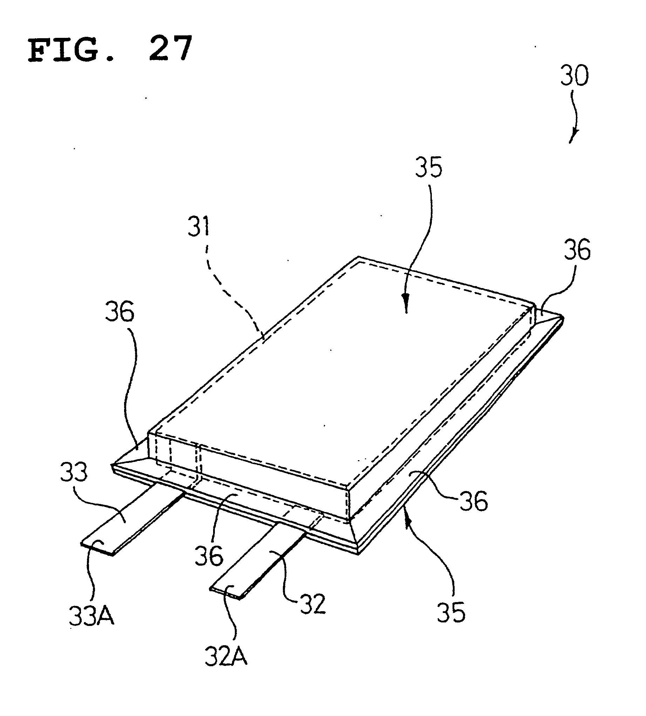

An 800-mAh non-aqueous electrolyte secondary battery of the constitution shown in Fig. 27 was produced as a sample in the following manner.

A lithium-cobalt oxide (trade name, CELLSEED C-10; manufactured by Nippon Chemical Industrial Co., Ltd.), composite oxide C9, acetylene black, and poly(vinylidene fluoride) (PVdF) were mixed together in a weight ratio of 45:45:5:5. Thereto was added N-methylpyrrolidone as a solvent. This mixture was kneaded for dispersion to prepare a coating fluid. The PVdF was used in the form of a liquid containing the solid dissolved or dispersed therein; the amount thereof was shown in terms of solid amount. The coating fluid was applied to each side of an aluminum foil current collector having a thickness of 20$\mu$m so as to result in a total thickness of 100pm. Thus, a positive-electrode sheet having 20 mg/cm$^2$ of a positive active material was produced. This positive electrode sheet was cut into a shape having a width of 61mm and a length of 445mm. That part of the positive electrode which was located at an end of the cut sheet was removed, and a positive terminal 32 made of aluminium having a thickness of 100$\mu$m and a width of 3mm was attached thereto by ultrasonic welding. Thus, a positive electrode plate was obtained.

Artificial graphite (particle diameter, 6 $\mu$m) was used as a negative-electrode carbon material. This graphite was mixed with 2% by weight styrene/butadiene rubber as a binder and 1% by weight sodium salt of carboxymethyl cellulose as a thickener. This mixture was kneaded together with purified water to obtain a coating fluid. This coating fluid was applied to each side of a copper foil current collector having a thickness of 10 $\mu$m so as to result in a total thickness of 90 $\mu$m. Thus, a negative-electrode sheet having the negative-electrode carbon material in an amount of 12 mg/cm$^2$ was produced. This negative-electrode sheet was cut into a shape having a width of 63 mm and a length of 460 mm. That part of the negative electrode which was located at an end of the cut sheet was removed, and a negative-electrode nickel terminal 33 having a thickness of 100 $\mu$m and a width of 3 mm was attached thereto by resistance welding. Thus, a negative electrode plate was obtained.

The positive electrode plate and negative electrode plate were dried under reduced pressure at 150°C for 12 hours.

A microporous polypropylene film which had undergone surface modification with a polyacrylate so as to impart improved electrolyte retention thereto was used as a separator. The negative electrode plate, separator, and positive electrode plate were stacked in this order and wound into a flat shape. Thus, an electrode group 31 was obtained.

As a sheathing material 35 was used a metal/resin composite film consisting of poly(ethylene terephthalate) (15 μm)/aluminum foil (50 μm)/metal-bondable polypropylene film (50 μm). The electrode group 31 was housed in the sheathing material so that the open end parts 32A and 33A of the positive terminal 32 and negative terminal 33 were exposed outside. The sheathing material was airtightly sealed in the fusion-bonding area 36, except the part serving as an electrolyte injection hole, in which two sheets of the metal/resin composite film met each other with the respective inner sides facing inward.

LiPF$_6$ was dissolved in a concentration of 1 mol/l in a solvent prepared by mixing ethylene carbonate, propylene carbonate, diethyl carbonate, and vinylene carbonate in a volume ratio of 50:20:30:2. Thus, a liquid electrolyte was obtained. About 3 g of the liquid electrolyte was injected through the electrolyte injection hole. Thereafter, the electrolyte injection hole part was thermally sealed under vacuum. Thus, a flat type non-aqueous electrolyte secondary battery 30 having a design capacity of 800 mAh was produced. This battery was subjected at 20°C to constant-voltage charge at 80 mA and 4.2 V and to discharge at 80 mA to 3 V. This battery is referred to as battery of Example 7-1.

(EXAMPLE 7-2)

A lithium-cobalt oxide (trade name, CELLSEED C-10; manufactured by Nippon Chemical Industrial Co., Ltd.), composite oxide C23, acetylene black, and poly(vinylidene fluoride) (PVdF) were mixed together in a weight ratio of 45:45:5:5. The subsequent steps were conducted in the same manner as in (Example 7-1) to produce a non-aqueous electrolyte secondary battery. This battery is referred to as battery of (Example 7-2).

(COMPARATIVE EXAMPLE 7-1)

A lithium-cobalt oxide (trade name, CELLSEED C-10; manufactured by Nippon Chemical Industrial Co., Ltd.), composite oxide C24, acetylene black, and poly(vinylidene fluoride) (PVdF) were mixed together in a weight ratio of 45:45:5:5. The subsequent steps were conducted in the same manner as in (Example 7-1) to produce a non-aqueous electrolyte secondary battery. This battery is referred to as battery of (Comparative Example 7-1).

(EXAMPLE 7-3)

A lithium-cobalt oxide (trade name, CELLSEED C-10; manufactured by Nippon Chemical Industrial Co., Ltd.), composite oxide A1, acetylene black, and poly(vinylidene fluoride) (PVdF) were mixed together in a weight ratio of 45:45:5:5. The subsequent steps were conducted in the same manner as in (Example 7-1) to produce a non-aqueous electrolyte secondary battery. This battery is referred to as battery of (Example 7-3).

(EXAMPLE 7-4)

To composite oxide C9 was added N-methylpyrrolidone as a solvent. This mixture was kneaded for dispersion to prepare a coating fluid. The subsequent steps were conducted in the same manner as in (Example 7-1) to produce a non-aqueous electrolyte secondary battery. This battery is referred to as battery of (Example 7-4).

(COMPARATIVE EXAMPLE 7-2)

A lithium-cobalt oxide (trade name, CELLSEED C-10; manufactured by Nippon Chemical Industrial Co., Ltd.), acetylene black, and poly(vinylidene fluoride) (PVdF) were mixed together in a weight ratio of 90:5:5. The subsequent steps were conducted in the same manner as in (Example 7-1) to produce a non-aqueous electrolyte secondary battery. This battery is referred to as battery of (Comparative Example 7-2).

(Battery Performance Tests)

The batteries of Examples 7-1 to 7-3 and Comparative Examples 7-1 and 7-2 were subjected to a charge/discharge test and a high-rate discharge performance test. The test temperature was 25°C. The charge was constant-current constant-voltage charge conducted under the conditions of 800 mA and 4.2 V. The discharge was constant-current discharge conducted under the conditions of 800 mA and a final voltage of 3.0 V. In the high-rate discharge test, however, constant-current discharge was conducted under the conditions of 2,400 mA and a final voltage of 3.0 V. The results of the battery performance tests are summarized in Table 12. In the table, the ratio of the high-rate discharge capacity at 2,400 mA to the discharge capacity at 800 mA is shown as high-rate discharge performance (%). Furthermore, the number of cycles required for the discharge capacity to decrease to 70% or lower is shown as charge/discharge cycle performance.

Table 12

| Battery | Positive-electrode active material | Battery performance | | | |
|---|---|---|---|---|---|
| | | 800-mA discharge capacity (mAh/g) | 2400-mA discharge capacity (mAh/g) | High-rate discharge performance (%) | Charge/discharge cycle performance |
| Ex. 7-1 | $LiMn_{0.45}Ni_{0.45}Co_{0.1}O_2 + LiCoO_2$ | 800 | 610 | 76.3 | 500 |
| Ex. 7-2 | $LiMn_{0.4}Ni_{0.4}Co_{0.2}O_2 + LiCoO_2$ | 810 | 610 | 75.3 | 500 |
| Comp. Ex. 7-1 | $LiMn_{0.2}Ni_{0.7}Co_{0.1}O_2 + LiCoO_2$ | 810 | 610 | 75.3 | 500 |
| Ex. 7-3 | $LiMn_{0.5}Ni_{0.5} + LiCoO_2$ | 700 | 500 | 71.4 | 400 |
| Comp. Ex. 7-2 | $LiCoO_2$ | 790 | 600 | 75.9 | 500 |
| Ex. 7-4 | $LiMn_{0.45}Ni_{0.45}Co_{0.1}O_2$ | 760 | 530 | 69.7 | 510 |

First, from a comparison between the results of Example 7-1 and the results of Example 7-4, in which addition of a lithium-cobalt oxide was omitted, it was ascertained that high-rate discharge performance was enhanced.

A comparison between the results of Examples 7-1 and 7-2 and the results of Comparative Example 7-2, in which a lithium-cobalt oxide was used as the only positive active material, shows that Examples 7-1 and 7-2 attained higher capacities. The reasons for this are thought to be as follows. $LiMn_{0.45}Ni_{0.45}Co_{0.1}O_2$ and $LiMn_{0.4}Ni_{0.4}Co_{0.2}O_2$ have an electrochemically high capacity and a moderate irreversible capacity and, hence, the insufficiency in irreversibility of the negative electrode could be compensated for by these materials.

A comparison between the results for the battery of Example 7-1 and the results for the battery of Example 7-3 shows that discharge capacity and charge/discharge cycle performance were improved. The reasons for this are thought to be as follows. The addition of cobalt to the lithium-manganese-nickel compound improved discharge capacity and further enabled the powder of the invention to have a stabilized crystal structure, whereby cycle performance also was improved.

The discharge capacity in Comparative Example 7-1 compares favorably with those of the batteries of Examples 7-1 and 7-2. However, the following was found. These three batteries were subjected to a test in which the batteries were charged at 800 mA and a constant voltage of 4.2 V for 15 hours and then stored in a hot box of 150°C. As a result, the battery of Example 7-1 suffered neither rupture, ignition, nor white fuming, although it swelled. In contrast, in the battery of Comparative Example 7-1, the temperature of the battery side-wall part increased to about 400°C and a white fume was observed. Incidentally, when the battery of Comparative Example 7-2 was subjected to the same test, this battery suffered neither rupture, ignition, nor white fuming like the battery of the Example. Such differences in the results of the safety test are presumed to relate to the relative amounts of manganese and nickel. Namely, it is thought that larger nickel amounts relative to the manganese amount result in reduced thermal stability during charge.

In the Examples given above, use of $Li[Mn_{0.45}Ni_{0.45}Co_{0.1}O_2]$ and $Li[Mn_{0.40}Ni_{0.40}Co_{0.2}O_2]$ as the main component of a positive active material was described. However, it was ascertained that the same effects are obtained with composite oxides obtained by displacing part of the manganese and nickel by another element in a solid solution state, such as $Li[Mn_{0.425}Ni_{0.425}Co_{0.1}B_{0.05}O_2]$, $Li[Mn_{0.425}Ni_{0.425}Co_{0.1}V_{0.05}O_2]$, $Li[Mn_{0.425}Ni_{0.425}Co_{0.1}Al_{0.05}O_2]$, $Li[Mn_{0.425}Ni_{0.425}Co_{0.1}Mg_{0.05}O_2]$, $Li[Mn_{0.425}Ni_{0.425}Co_{0.1}Cr_{0.5}O_2]$, $Li[Mn_{0.425}Ni_{0.425}Co_{0.1}Ti_{0.05}O_2]$, and $Li[Mn_{0.425}Ni_{0.425}Co_{0.1}Li_{0.05}O_2]$. In the Examples, non-aqueous electrolyte secondary batteries employing artificial graphite as a negative-electrode material were described. However, the same effects were ascertained to be produced when other carbon materials were used.

(EXAMPLE 8-1)

(Synthesis of Lithium-Manganese Compound Having Spinel Structure)

An aqueous suspension containing LiOH and $MnO_2$ in a Li:Mn element ratio of 1.08:1.92 was prepared. This aqueous suspension was dried under reduced pressure with a rotary evaporator to obtain a solid mixed salt. This mixed salt was preliminarily calcined at a temperature of 450°C for 12 hours in a stream of dry air (oxygen content, 20%) and then heat-treated at a temperature of 800°C for 24 hours. Thus, lithium-manganese compound (I) of the composition $Li_{1.08}Mn_{1.92}O_4$ was obtained.

(Production of Positive Electrode)

Composite oxide C25, lithium-manganese compound (I), acetylene black as a conductive material, and poly(vinylidene fluoride) (PVdF) as a binder were mixed together in a weight ratio of 80.75:4.25:10:5. Thereto was added N-methyl-2-pyrrolidone (NMP). This mixture was sufficiently kneaded to obtain a positive-electrode paste. This positive-electrode paste was applied to one side of an aluminum foil current collector having a thickness of 20 $\mu$m. The coated foil was allowed to dry naturally at an ordinary temperature of about 25°C and then dried at 130°C for 12 hours under reduced pressure. Thereafter, the coated foil was pressed and cut into a 1-cm$^2$ disk.

(Production of Negative Electrode)

Artificial graphite (average particle diameter, 6 $\mu$m; lattice spacing measured by X-ray diffractometry ($d_{002}$), 0.337 nm; c-axis-direction crystalline size (Lc), 55 nm) as a negative-electrode material was mixed with poly(vinylidene fluoride) (PVdF) in a weight ratio of 95:5. Thereto was added N-methyl-2-pyrrolidone (NMP). This mixture was sufficiently kneaded to obtain a negative-electrode paste. Subsequently, the negative-electrode paste was applied to one side of an electrolytic copper foil having a thickness of 12$\mu$m. The coated foil was allowed to dry naturally at an ordinary temperature of about 25°C and then dried at 130°C for 12 hours under reduced pressure. Thereafter, the coated foil was pressed and cut into a 1-cm$^2$ disk.

(Preparation of Non-aqueous Electrolyte)

$LiPF_6$, a fluorinated electrolyte salt, was dissolved in a concentration of 1 mol/l in a mixed solvent prepared by mixing ethylene carbonate and diethyl carbonate in a volume ratio of 1:1. Thus, a non-aqueous electrolyte was produced. The water content in the non-aqueous electrolyte had been regulated to below 20 ppm.

(Production of Coin Battery)

The members described above were used to produce a coin battery having the same constitution as the coin batteries described hereinabove (I-form) in a dry atmosphere having a dew point of -50°C or lower. This battery is referred to as battery of Example 8-1.

(EXAMPLE 8-2)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 76.5:8.5:10:5. This battery is referred to as battery of Example 8-2.

(EXAMPLE 8-3)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 59.5:25.5:10:5. This battery is referred to as battery of Example 8-3.

(EXAMPLE 8-4)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 42.5:42.5:10:5. This battery is referred to as battery of Example 8-4.

(EXAMPLE 8-5)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 25.5:59.5:10:5. This battery is referred to as battery of Example 8-5.

(EXAMPLE 8-6)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 8.5:76.5:10:5. This battery is referred to as battery of Example 8-6.

(EXAMPLE 8-7)

A coin battery was produced in the same manner as in (Example 8-1), except that in the positive-electrode production, composite oxide C25, lithium-manganese compound (I), acetylene black as a conductive material, and poly(vinylidene fluoride) (PVdF) as a binder were mixed in a weight ratio of 4.25:80.75:10:5. This battery is referred to as battery of Example 8-7.

(COMPARATIVE EXAMPLE 8-1)

A coin battery was produced in the same manner as in (Example 8-1), except that in the positive-electrode production, lithium-manganese compound (I), acetylene black as a conductive material, and poly(vinylidene fluoride) (PVdF) as a binder were mixed in a weight ratio of 85:10:5. This battery is referred to as battery of Comparative Example 8-1.

(EXAMPLE 8-8)

A coin battery was produced in the same manner as in (Example 8-1), except that in the positive-electrode production, composite oxide C25, acetylene black as a conductive material, and poly(vinylidene fluoride) (PVdF) as a binder were mixed in a weight ratio of 85:10:5. This battery is referred to as battery of Example 8-8.

(Initial Charge/Discharge)

The batteries of Examples 8-1 to 8-8 and Comparative Example 8-1 each were produced in a large number. These batteries were subjected to 10 cycles of initial charge/discharge. This charge was constant-current constant-voltage charge conducted under the conditions of a current of 0.1 ItA (10 hour rates) and 4.2 V. The discharge was constant-current discharge conducted under the conditions of a current of 0.1 ItA (10 hour rates) and a final voltage of 3.0 V.

(Low-Temperature High-Rate Discharge Test)

An ordinary discharge test at a temperature of 25°C and a high-rate discharge test at a temperature of -10°C were conducted. In the ordinary discharge test at a temperature of 25°C, constant-current constant-voltage charge at 0.2 ItA (5 hour rates) and 4.2 V was conducted, followed by constant-current discharge at a current of 0.2 ItA (5 hour rates) and a final voltage of 3.0 V. In the high-rate discharge test at a temperature of -10°C, constant-current constant-voltage charge at 0.2 ItA (5 hour rates) and 4.2 V was first conducted at a temperature of 25°C and constant-current discharge at a current of 5.0 ItA (0.2 hour rates) and a final voltage of 2.5 V was then conducted at a temperature of -10°C. The ratio of the discharge capacity at -10°C to the discharge capacity at 25°C is shown as low-temperature high-rate discharge performance (%). The results are shown in Table 13.

(Storage Performance Test)

After the initial charge/discharge, constant-current constant-voltage charge at a current of 0.2 ItA (5 hour rates) and 4.2 V was conducted at 25°C. After this charge, the batteries were stored in an explosion-proof thermostatic chamber set at 60°C. After 7 days, the batteries were taken out and subjected to discharge and subsequently to charge/discharge under the same conditions as in the initial charge/discharge. The ratio of the discharge capacity measured in this charge/discharge after the storage to the discharge capacity measured in the initial charge/discharge was calculated, and is shown as "capacity retention (%)" in Table 13.

Table 13

| | (Composite oxide C25)/[(composite oxide C25)+ (lithium-manganese compound (I))] (%) | 25°C discharge capacity (mAh/g) | -10°C discharge capacity (mAh/g) | Low-temperature high-rate discharge performance (%) | Capacity retention after 60°C storage (%) |
|---|---|---|---|---|---|
| Ex. 8-1 | 95 | 157 | 36 | 22.9 | 99.7 |
| Ex. 8-2 | 90 | 154 | 37 | 24.0 | 99.4 |
| Ex. 8-3 | 70 | 142 | 41 | 28.9 | 97.9 |
| Ex. 8-4 | 50 | 130 | 45 | 34.6 | 96.2 |
| Ex. 8-5 | 30 | 118 | 49 | 41.5 | 94.1 |
| Ex. 8-6 | 10 | 106 | 53 | 50.0 | 91.5 |
| Ex. 8-7 | 5 | 103 | 54 | 52.4 | 91 |
| Ex. 8-8 | 100 | 160 | 35 | 21.9 | 100 |
| Comp. Ex. 8-1 | 0 | 100 | 55 | 55.0 | 90 |

It can be seen that the batteries employing a combination of composite oxide C25 and lithium-manganese compound (I), which has a spinel structure, are superior in low-temperature high-rate discharge performance to the battery of Example 8-8, which employs composite oxide 25 having an $\alpha$-NaFeO$_2$ crystal structure as the only positive active material.

Furthermore, the batteries employing a combination of composite oxide C25 and lithium-manganese compound (I), which has a spinel structure, have higher capacity retentions after storage at 60°C than the battery employing lithium-manganese compound (I) alone, which has a spinel structure. It can hence be seen that these batteries have excellent high-temperature storage performance. In general, lithium-manganese compounds having a spinel structure cause capacity deterioration at high temperatures due to the dissolution of a manganese species. It is, however, presumed that the presence of a composite oxide in the positive electrode has the effect of, e.g., neutralizing that acid ingredient in the liquid electrolyte which is causative of manganese species dissolution, and thus inhibits the dissolution of a manganese species.

The effect of the addition of a lithium-manganese compound having a spinel structure is difficult to produce when the lithium-manganese compound having a spinel structure has a composition outside the range specified above, e.g., when the lithium-manganese compound having a spinel structure is one in which lithium and manganese are present in a stoichiometric proportion. This is because such a lithium-manganese compound undergoes a phase transition during charge/discharge and this significantly impairs charge/discharge cycle performance.

<Industrial Applicability>

The invention can provide: positive active materials with which a non-aqueous electrolyte secondary battery having a high energy density and excellent charge/discharge cycle performance can be produced; a process for producing these active materials; a positive electrode for non-aqueous electrolyte secondary batteries; and a non-aqueous electrolyte secondary battery having a high energy density and excellent charge/discharge cycle performance.

Claims

1.   A positive active material which comprises a composite oxide represented by the composite formula $Li_w Mn_{x'} Ni_{y'} Co_{z'} O_2$, wherein x', y', and z' are values within such a range that in a ternary phase diagram, a point at the coordinates x', y', z' is present on the perimeter of or inside the quadrilateral ABCD defined by point A at the coordinates 0.51, 0.49, 0, point B at the coordinates 0.45, 0.55, 0, point C at the coordinates 0.25, 0.35, 0.4, and point D at the coordinates 0.31, 0.29, 0.4 as vertexes, $0 \leqq w/(x'+y'+z') \leqq 1.30$, and z'>0;

wherein the composite oxide has a total pore volume of from 0.001 ml/g to 0.006 ml/g and, in X-ray powder diffrac-

tometry with CuK$_\alpha$ ray, gives a diffraction pattern in which the ratio of the relative intensity of the diffraction peak at a 2θ of 44.1±1° to the relative intensity of the diffraction peak at a 2θ of 18.6±1° is from 0.65 to 1.05; and

the composite oxide has a specific surface area of from 0.3 m$^2$/g to 1.6 m$^2$/g;

with the proviso that the compounds $LiMn_{0.45}Ni_{0.45}Co_{0.1}O_2$ in the form of a powder having a specific surface area as measured by the BET method of 0.3 or 0.9 m$^2$/g and $LiMn_{0.4}Ni_{0.4}Co_{0.2}O_2$ in the form of a powder having a specific surface area as measured by the BET method of 0.9 m$^2$/g, both powders having a D$_{50}$ of 20 μm and a value of 1.0 for said ratio, are excluded;

the compound $LiMn_{0.45}Ni_{0.45}Co_{0.1}O_2$ in the form of a powder having a specific surface area as measured by the BET method of 1.5 m$^2$/g, a D$_{50}$ of 5 μm and a value of 1.0 for said ratio is excluded; and

the compound $LiMn_{0.475}Ni_{0.475}Co_{0.05}O_2$ in the form of a powder having a specific surface area as measured by the BET method of 0.9 m$^2$/g, a D$_{50}$ of 9 μm and a value of 1.0 for said ratio is also excluded.

2. The positive active material as claimed in claim 1, **characterized in that** the diffraction peak at a 2θ of 18.6±1° has a half width of from 0.05° to 0.20° and the diffraction peak at a 2θ of 44.1±1° has a half width of from 0.10° to 0.20°.

3. The positive active material as claimed in claim 1 or claim 2, **characterized in that** the composite oxide has an α-NaFeO$_2$ type layer structure and a hexagonal unit crystal lattice and has been constituted so that when the composite oxide has a potential of from 3.2 V to 3.3 V versus the potential of metallic lithium, then the lattice constant a, lattice constant c, and crystal lattice volume V of the hexagonal lattice satisfy the following relationships:

$$2.860 \leqq a \leqq 2.890$$

$$14.20 \leqq c \leqq 14.33$$

$$0.1007 \text{ nm}^3 \leqq V \leqq 0.1034 \text{ nm}^3$$

wherein a and c are lattice constants and are respectively equal to the a-axis-direction length and c-axis-direction length of the unit crystal lattice as expressed in angstrom (Å) unit.

4. The positive active material as claimed in any one of claims 1 to 3, **characterized in that** the composite oxide is one obtained through calcining conducted at a temperature of from 900°C to 1,100°C for 3 hours or more.

5. The positive active material as claimed in any one of claims 1 to 4, **characterized in that** the composite oxide has a particle size distribution in which the 50% particle diameter is larger than 0.8 μm and not larger than 10 μm and the 10% particle diameter is larger than 0.4 μm and not larger than 7 μm.

6. The positive active material as claimed in any one of claims 1 to 5, **characterized by** further containing a lithium-cobalt oxide.

7. The positive active material as claimed in any one of claims 1 to 6, **characterized by** further containing a lithium-manganese compound which has a spinel structure and is represented by $Li_{1+s}Mn_{2-s-t}M'''_tO_4$, wherein $0 \leqq s \leqq 0.3$; $0 \leqq t \leqq 0.2$; and M''' is at least one element selected from Mg, Al, Ti, V, Cr, Fe, Co, and Ni.

8. A process for producing a positive active material as set forth in any one of claims 1 to 3, wherein the composite oxide is produced through:

   a coprecipitation step which comprises adding an alkali compound, a reducing agent, and a complexing agent to an aqueous solution prepared by dissolving a Ni compound, a Mn compound, and a Co compound in water to thereby adjust the pH of the aqueous solution to 10 to 13 and yield a coprecipitated Ni-Mn-Co composite in the aqueous solution; and

   a calcining step in which the coprecipitated Ni-Mn-Co composite obtained in the coprecipitation step is calcined together with a lithium compound at a temperature of from 900°C to 1,100°C for 3 hours or more.

9. The process for producing a positive active material as claimed in claim 8, **characterized in that** in the coprecipitation step, an aqueous nickel (Ni) compound solution, an aqueous manganese (Mn) compound solution, an aqueous Co compound solution, an aqueous complexing agent solution, and an aqueous reducing agent solution are continuously fed to a reaction vessel, each solution being fed independently or as a mixture of at least two of the aqueous solutions, while continuously supplying an aqueous alkali compound solution to the reaction vessel, and the coprecipitated Ni-Mn-Co composite yielded is continuously taken out.

10. The process for producing a positive active material as claimed in claim 8 or claim 9, **characterized by** using hydrazine as the reducing agent.

11. The process for producing a positive active material as claimed in any one of claims 8 to 10, **characterized in that** the complexing agent comprises at least one compound able to release an ammonium ion in aqueous solutions.

12. The process for producing a positive active material as claimed in claim 11, **characterized in that** the compound able to release an ammonium ion in aqueous solutions is at least one compound selected from the group consisting of ammonium nitrate, ammonium sulfate, ammonium hydrochloride, and ammonia water.

13. A positive electrode for non-aqueous electrolyte secondary batteries which contains the positive active material of any one of claims 1 to 7.

14. A positive electrode for non-aqueous electrolyte secondary batteries as claimed in claim 13, further comprising a conductive carbon material in an amount of 1% by weight or more based on the positive active material, and a binder which has ionic conductivity when it contains a liquid electrolyte.

15. A non-aqueous electrolyte secondary battery which has the positive electrode for non-aqueous electrolyte secondary batteries of claim 13 or 14, a negative electrode for non-aqueous electrolyte secondary batteries, and a non-aqueous electrolyte.

16. The non-aqueous electrolyte secondary battery as claimed in claim 15, **characterized in that** the negative electrode for non-aqueous electrolyte secondary batteries contains a negative-electrode material capable of doping/undoping lithium ions.

17. The non-aqueous electrolyte secondary battery as claimed in claim 15 or 16, **characterized in that** the positive active material is one which undergoes a decrease in crystal lattice volume with the lithium ion release accompanying the charge of the non-aqueous electrolyte secondary battery, the degree of the decrease in crystal lattice volume being up to 4% based on the crystal lattice volume of the positive active material as measured when the non-aqueous electrolyte second battery is in a discharge termination state,
**in that** the negative-electrode material is one which undergoes an increase in crystal lattice volume with the lithium ion doping accompanying the charge of the non-aqueous electrolyte secondary battery, the degree of the increase in crystal lattice volume being up to 6% based on the crystal lattice volume of the negative-electrode material as measured when the non-aqueous electrolyte secondary battery is in a discharge termination state,
**in that** the value of the volume increase for the negative-electrode material is equal to or larger than the value of the volume decrease for the positive active material in an ordinary charge/discharge range for the non-aqueous electrolyte secondary battery, and
**in that** the difference between the value of the volume increase for the negative-electrode material and the value of the volume decrease for the positive active material in an ordinary charge/discharge range for the non-aqueous electrolyte secondary battery is from 0% to less than 3%.

**Patentansprüche**

1. Positives aktives Material, das ein Verbundstoffoxid umfasst, das durch die Verbundstoffformel $Li_wMn_{x'}Ni_{y'}CO_{z'}O_2$ dargestellt ist, wobei x', y' und z' Werte innerhalb eines derartigen Bereichs sind, dass in einem ternären Phasendiagramm eine Stelle bei den Koordinaten x', y', z' am Umfang oder innerhalb des Vierecks ABCD vorliegt, das durch den Punkt A an den Koordinaten 0,51, 0,49, 0, Punkt B an den Koordinaten 0,45, 0,55, 0, Punkt C an den Koordinaten 0,25, 0,35, 0,4 und Punkt C an den Koordinaten 0,31, 0,29, 0,4 als Scheitelpunkte $0 \leqq w / (x'+y'+z') \leqq 1,30$ und z' > 0 definiert ist;
wobei das Verbundstoffoxid ein gesamtes Porenvolumen von 0,001 ml/g bis 0,006 ml/g aufweist und bei der Röntenpulverdiffraktometrie mit $CuK_\alpha$-Strahl ein Diffraktionsmuster ergibt, wobei das Verhältnis der relativen Intensität

des Diffraktionspeaks bei $2\theta$ vom $44{,}1\pm1$ ° zur relativen Intensität des Diffraktionspeaks bei $2\theta$ vom $18{,}6\pm1$ ° 0,65 bis 1,05 beträgt; und

das Verbundstoffoxid einen spezifischen Oberflächenbereich von 0,3 $m^2$/g bis 1,6 $m^2$/g aufweist;

mit der Maßgabe, dass die Verbindungen $LiMn_{0,45}Ni_{0,45}CO_{0,1}O_2$ in Form eines Pulvers, das einen spezifischen Oberflächenbereich, wie durch das BET-Verfahren gemessen, von 0,3 oder 0,9 $m^2$/g aufweist, und $LiMn_{0,4}Ni_{0,4}Co_{0,2}O_2$ in Form eines Pulvers, das einen spezifischen Oberflächenbereich, wie durch das BET-Verfahren gemessen, von 0,9 $m^2$/g aufweist, beide Pulver, die $D_{50}$ von 20 $\mu$m und einen Wert von 1,0 für das Verhältnis aufweisen, ausgeschlossen sind;

die Verbindung $LiMn_{0,45}Ni_{0,45}Co_{0,1}O_2$ in Form eines Pulvers, das einen spezifischen Oberflächenbereich, wie durch das BET-Verfahren gemessen, von 1,5 $m^2$/g, $D_{50}$ von 5 $\mu$m und einen Wert von 1,0 für das Verhältnis aufweist, ausgeschlossen ist;

die Verbindung $LiMn_{0,475}Ni_{0,475}Co_{0,05}O_2$ in Form eines Pulvers, das einen spezifischen Oberflächenbereich, wie durch das BET-Verfahren gemessen, von 0,9 $m^2$/g, $D_{50}$ von 9 $\mu$m und einen Wert von 1,0 für das Verhältnis aufweist, ebenfalls ausgeschlossen ist.

**2.** Positives aktives Material nach Anspruch 1, **dadurch gekennzeichnet, dass** der Diffraktionspeak bei $2\theta$ von $18{,}6\pm1$ ° eine halbe Breite von 0,05 ° bis 0,20 ° und der Diffraktionspeak bei $2\theta$ von $44{,}1\pm1$ ° eine halbe Breite von 0,10 ° bis 0,20 ° aufweist.

**3.** Positives aktives Material nach Anspruch 1 oder 2, **dadurch gekennzeichnet, dass** das Verbundstoffoxid eine Schichtstruktur von $\alpha$-$NaFeO_2$-Typ und ein sechseckiges Einheitskristallgitter aufweist und so erzeugt worden ist, dass, wenn das Verbundstoffoxid ein Potential von 3,2 V bis 3,3 V im Vergleich mit dem Potential von metallischem Lithium aufweist, die Gitterkonstante a, Gitterkonstante c und das Kristallgittervolumen V des sechseckigen Gitters dem folgenden Verhältnis entspricht:

$$2{,}860 \leqq a \leqq 2{,}890$$

$$14{,}20 \leqq c \leqq 14{,}33$$

$$0{,}1007\ nm^3 \leqq V \leqq 0{,}1034\ nm^3$$

wobei a und c Gitterkonstanten sind und jeweils der a-Achsenrichtungslänge und c-Achsenrichtungslänge des Einheitskristallgitters, wie in Ångström- (Å) Einheiten ausgedrückt, gleich sind.

**4.** Positives aktives Material nach einem der Ansprüche 1 bis 3, **dadurch gekennzeichnet, dass** das Verbundstoffoxid eines ist, das durch Calcinieren erhalten wird, das bei einer Temperatur von 900 °C bis 1.100 °C 3 Stunden lang oder länger durchgeführt wird.

**5.** Positives aktives Material nach einem der Ansprüche 1 bis 4, **dadurch gekennzeichnet, dass** das Verbundstoffoxid eine Teilchengrößenverteilung aufweist, wobei der 50 %-Teilchendurchmesser größer als 0,8 $\mu$m und nicht größer als 10 $\mu$m ist und der 10 %-Teilchendurchmesser größer als 0,4 $\mu$m und nicht größer als 7 $\mu$m ist.

**6.** Positives aktives Material nach einem der Ansprüche 1 bis 5, **gekennzeichnet durch** weiteres Enthalten von Lithium-Kobaltoxid.

**7.** Positives aktives Material nach einem der Ansprüche 1 bis 6, **gekennzeichnet durch** weiteres Enthalten einer Lithium-Manganverbindung, die eine Spinellstruktur aufweist und **durch** $Li_{1+s}Mn_{2-s-t}M'''_tO_4$ dargestellt ist, wobei $0 \leqq s \leqq 0{,}3$; $0 \leqq t \leqq 0{,}2$; und M''' mindestens ein Element ist ausgewählt unter Mg, Al, Ti, V, Cr, Fe, Co und Ni.

**8.** Verfahren zur Herstellung eines positiven aktive Materials wie in einem der Ansprüche 1 bis 3 aufgeführt, wobei das Verbundstoffoxid durch Folgendes hergestellt wird:

einen Mitfällungsschritt, der das Zugeben einer Alkaliverbindung, eines Reduktionsmittels und eines Komplexbildungsmittels zu einer wässrigen Lösung umfasst, die durch Lösen einer Ni-Verbindung, einer Mn-Verbindung und einer Co-Verbindung in Wasser hergestellt wird, um dadurch den pH-Wert der wässrigen Lösung auf 10 bis 13 einzustellen und einen mitgefällten Ni-Mn-Co-Verbundstoff in der wässrigen Lösung zu ergeben; und einen Calcinierschritt, wobei der mitgefällte Ni-Mn-Co-Verbundstoff, der in dem Mitfällungsschritt erhalten worden ist, zusammen mit einer Lithiumverbindung bei einer Temperatur von 900 °C bis 1.100 °C 3 Stunden lang oder länger calciniert wird.

9. Verfahren zur Herstellung eines positiven aktiven Materials nach Anspruch 8, **dadurch gekennzeichnet, dass** im Mitfällungsschritt eine wässrige Nickel- (Ni-) Verbindungslösung, eine wässrige Mangan- (Mn-) Verbindungslösung, eine wässrige Co-Verbindungslösung, eine wässrige Komplexbildungsmittellösung und eine wässrige Reduktionsmittellösung kontinuierlich in ein Reaktionsgefäß eingeführt werden, wobei jede Lösung unabhängig oder als Mischung von mindestens zwei der wässrigen Lösungen eingeführt wird, während eine wässrige Alkaliverbindungslösung kontinuierlich in das Reaktionsgefäß geführt wird und der erhaltene mitgefällte Ni-Mn-Co-Verbundstoff kontinuierlich herausgenommen wird.

10. Verfahren zur Herstellung eines positiven aktiven Materials nach Anspruch 8 oder 9, **gekennzeichnet durch** Verwenden von Hydrazin als Reduktionsmittel.

11. Verfahren zur Herstellung eines positiven aktiven Materials nach einem der Ansprüche 8 bis 10, **dadurch gekennzeichnet, dass** das Komplexbildungsmittel mindestens eine Verbindung umfasst, die in der Lage ist, ein Ammoniumion in wässrige Lösungen freizusetzen.

12. Verfahren zur Herstellung eines positiven aktiven Materials nach Anspruch 11, **dadurch gekennzeichnet, dass** die Verbindung, die in der Lage ist, ein Ammoniumion in wässrige Lösungen freizusetzen, mindestens eine Verbindung ist ausgewählt aus der Gruppe bestehend aus Ammoniumnitrat, Ammoniumsulfat, Ammoniumhydrochlorid und Ammoniakwasser.

13. Positive Elektrode für Sekundärbatterien mit nichtwässrigem Elektrolyt, die das positive aktive Material nach einem der Ansprüche 1 bis 7 enthält.

14. Positive Elektrode für Sekundärbatterien mit nichtwässrigem Elektrolyt nach Anspruch 13, des Weiteren ein leitfähiges Kohlenstoffmaterial in einer Menge von 1 Gew.-% oder mehr, auf das positive aktive Material bezogen, und ein Bindemittel, das eine Ionenleitfähigkeit aufweist, wenn es einen flüssigen Elektrolyt enthält, umfassend.

15. Sekundärbatterie mit nichtwässrigem Elektrolyt, die eine positive Elektrode für Sekundärbatterien mit nichtwässrigem Elektrolyt nach Anspruch 13 oder 14, eine negative Elektrode für Sekundärbatterien mit nichtwässrigem Elektrolyt und einen nichtwässrigen Elektrolyt aufweist.

16. Sekundärbatterie mit nichtwässrigem Elektrolyt nach Anspruch 15, **dadurch gekennzeichnet, dass** die negative Elektrode für Sekundärbatterien mit nichtwässrigem Elektrolyt ein negatives Elektrodenmaterial enthält, das in der Lage ist, Lithiumionen zu dotieren/undotieren.

17. Sekundärbatterie mit nichtwässrigem Elektrolyt nach Anspruch 15 oder 16, **dadurch gekennzeichnet, dass** das positive aktive Material eines ist, das eine Reduktion des Kristallgittervolumens durchmacht, wobei die Lithiumionenfreisetzung das Laden der Sekundärbatterie mit nichtwässrigem Elektrolyt begleitet, wobei der Grad der Reduktion des Kristallgittervolumens bis zu 4 %, auf das Kristallgittervolumen des positiven aktiven Materials bezogen, wie gemessen, wenn die Sekundärbatterie mit nichtwässrigem Elektrolyt sich in einem Entladeterminationszustand befindet, beträgt,
dass das negative Elektrodenmaterial eines ist, das eine Erhöhung des Kristallgittervolumens durchmacht, wobei das Lithiumionendotieren das Laden der Sekundärbatterie mit nichtwässrigem Elektrolyt begleitet, wobei der Grad der Erhöhung des Kristallgittervolumens bis zu 6 %, auf das Kristallgittervolumen des negativen Elektrodenmaterials bezogen, wie gemessen, wenn die Sekundärbatterie mit nichtwässrigem Elektrolyt sich in einem Entladeterminationszustand befindet, beträgt,
dass der Wert der Volumenerhöhung des negativen Elektrodenmaterials gleich oder höher ist als der Wert der Volumenreduktion des positiven aktiven Materials in einem gewöhnlichen Ladungs-/Entladungsbereich für die Sekundärbatterie mit nichtwässrigem Elektrolyt und
dass der Unterschied zwischen dem Wert der Volumenerhöhung des negativem Elektrodenmaterials und dem Wert der Volumenreduktion des positiven aktiven Materials in einem gewöhnlichen Ladungs-/Entladungsbereich der Sekundärbatterie mit nichtwässrigem Elektrolyt 0 % bis weniger als 3 % beträgt.

**Revendications**

1. Matière active positive qui comprend un oxyde composite représenté par la formule composite $Li_wMn_{x'}Ni_{y'}Co_{z'}O_2$, dans laquelle x', y' et z' sont des valeurs se situant dans une gamme telle que dans un diagramme de phase ternaire, un point de coordonnées x', y', z' est présent sur le périmètre du ou à l'intérieur du quadrilatère ABCD défini par le point A de coordonnées 0,51, 0,49, 0, le point B de coordonnées 0,45, 0,55, 0, le point C de coordonnées 0,25, 0,35, 0,4, et le point D de coordonnées 0,31, 0,29, 0,4 en tant que sommets, $0 \leqq w / (x'+y'+z') \leqq 1,30$, et z' > 0 ; dans laquelle l'oxyde composite possède un volume total des pores allant de 0,001 ml/g à 0,006 ml/g, dans la diffractométrie des rayons X sur poudre avec le rayonnement $CuK_\alpha$ du cuivre, donne un cliché de diffraction dans lequel le rapport de l'intensité relative du pic de diffraction à un $2\theta$ de $44,1\pm1$ ° à l'intensité relative du pic de diffraction à un $2\theta$ de $18,6\pm1$ ° est compris entre 0,65 et 1,05 ; et l'oxyde composite possède une surface spécifique allant de 0,3 m²/g à 1,6 m²/g ; c'est à la condition que les composés $LiMn_{0,45}Ni_{0,45}Co_{0,1}O_2$ sous la forme d'une poudre possédant une surface spécifique telle que mesurée par la méthode BET de 0,3 ou 0,9 m²/g et $LiMn_{0,4}Ni_{0,4}Co_{0,2}O_2$ sous la forme d'une poudre possédant une surface spécifique telle que mesurée par la méthode BET de 0,9 m²/g, les deux poudres possédant une valeur $D_{50}$ de 20 $\mu$m et une valeur de 1,0 pour ledit rapport, sont exclus ; le composé $LiMn_{0,45}Ni_{0,45}Co_{0,1}O_2$ sous la forme d'une poudre possédant une surface spécifique telle que mesurée par la méthode BET de 1,5 m²/g, une valeur $D_{50}$ de 9 $\mu$m et une valeur de 1,0 pour ledit rapport est exclu ; et le composé $LiMn_{0,475}Ni_{0,475}Co_{0,05}O_2$ sous la forme d'une poudre possédant une surface spécifique telle que mesurée par la méthode BET de 0,9 m²/g, une valeur $D_{50}$ de 9 $\mu$m et une valeur de 1,0 pour ledit rapport est également exclu.

2. Matière active positive selon la revendication 1, **caractérisée en ce que** le pic de diffraction à un $2\theta$ de $18,6\pm1$ ° possède une demi-largeur allant de 0,05 ° à 0,20 ° et le pic de diffraction à un $2\theta$ de $44,1\pm1$ ° possède une demi-largeur allant de 0,10 ° à 0,20 °.

3. Matière active positive selon la revendication 1 ou 2, **caractérisée en ce que** l'oxyde composite possède une structure de couche de type $\alpha$-NaFeO₂ et un réseau cristallin d'unité hexagonale et a été constitué de telle sorte que lorsque l'oxyde composite possède un potentiel allant de 3,2 V à 3,3 V par opposition au potentiel du lithium métallique, ainsi la constante de réseau a, la constante de réseau c, et le volume de réseau cristallin V du réseau hexagonal satisfont les relations suivantes :

$$2,860 \leq a \leq 2,892$$

$$14,20 \leq c \leq 14,33$$

$$0,1007 \text{ nm}^3 \leq V \leq 0,1034 \text{ nm}^3$$

dans lequel a et c sont les constantes de réseau et sont respectivement égales à la longueur de la direction de l'axe a et à la longueur de la direction de l'axe c de l'unité du réseau cristallin telles qu'exprimées en unités angström (Å).

4. Matière active positive selon l'une quelconque des revendications 1 à 3, **caractérisée en ce que** l'oxyde composite est un obtenu par calcination effectuée à une température allant de 900 °C à 1.100 °C pendant 3 heures ou plus.

5. Matière active positive selon l'une quelconque des revendications 1 à 4, **caractérisée en ce que** l'oxyde composite possède une distribution granulométrique des particules dans laquelle 50 % des diamètres des particules sont plus grands que 0,8 $\mu$m et pas plus grands que 10 $\mu$m et 10 % des diamètres des particules sont plus grands que 0,4 $\mu$m et pas plus grands que 7 $\mu$m.

6. Matière active positive selon l'une quelconque des revendications 1 à 5, **caractérisée en ce qu'**elle contient en outre un oxyde de lithium-cobalt.

7. Matière active positive selon l'une quelconque des revendications 1 à 6, **caractérisée en ce qu'**elle contient en outre un composé de lithium-manganèse qui possède une structure de spinelle et est représentée par

$Li_{1+s}Mn_{2-s-t}M'''_tO_4$, dans laquelle $0 \leqq s \leqq 0,3$ ; $0 \leqq t \leqq 0,2$ ; et M''' est au moins un élément choisi parmi Mg, Al, Ti, V, Cr, Fe, Co et Ni,

8. Processus pour produire une matière active positive selon l'une quelconque des revendications 1 à 3, dans lequel l'oxyde composite est produit par :

une étape de coprécipitation qui comprend l'addition d'un composé alcalin, d'un agent réducteur, et d'un agent complexant à une solution aqueuse préparée par dissolution d'un composé de Ni, d'un composé de Mn et d'un composé de Co dans de l'eau afin d'ajuster le pH de la solution aqueuse de 10 à 13 et produire un composite Ni-Mn-Co coprécipité dans la solution aqueuse ; et
une étape de calcination dans laquelle le composite Ni-Mn-Co coprécipité obtenu lors de l'étape de coprécipitation est calciné ensemble avec un composé de lithium a une température allant de 900 °C à 1.100 °C pendant 3 heures ou plus.

9. Processus pour produire une matière active positive selon la revendication 8, **caractérise en ce que** dans l'étape de coprécipitation, une solution aqueuse d'un composé de nickel (Ni), une solution aqueuse d'un composé de manganèse (Mn), une solution aqueuse d'un composé de cobalt (Co), une solution aqueuse d'un agent complexant et une solution aqueuse d'un agent réducteur sont continuellement amenés à une cuve de réaction, chaque solution étant amenée indépendamment ou en tant qu'un mélange d'au moins deux des solutions aqueuses, tout en fournissant de façon continue une solution aqueuse d'un composé alcalin à la cuve de réaction, et le composite Ni-Mn-Co coprécipité obtenu est retiré de façon continue.

10. Processus pour produire une matière active positive selon la revendication 8 ou 9, **caractérisé en ce qu'**il utilise de l'hydrazine en tant qu'agent réducteur.

11. Processus pour produire une matière active positive selon l'une quelconque des revendications 8 à 10, **caractérisé en ce que** l'agent complexant comprend au moins un composé capable de libérer un ion ammonium dans des solutions aqueuses.

12. Processus pour produire une matière active positive selon la revendication 11, **caractérisé en ce que** le composé capable de libérer un ion ammonium dans des solutions aqueuses est au moins un composé choisi parmi le groupe constitué du nitrate d'ammonium, du sulfate d'ammonium, du chlorhydrate d'ammonium et de l'eau ammoniaquée.

13. Electrode positive pour des batteries secondaires à électrolytes non aqueux qui contient la matière active positive selon l'une quelconque des revendications 1 à 7.

14. Electrode positive pour des batteries secondaires à électrolytes non aqueux selon la revendication 13, comprenant en outre un matériau carboné conducteur en une quantité de 1 % en poids ou plus sur la base de la matière active positive, et un liant qui possède une conductivité ionique lorsqu'il contient un électrolyte liquide.

15. Batterie secondaire à électrolytes non aqueux qui possède l'électrode positive pour des batteries secondaires à électrolytes non aqueux selon la revendication 13 ou 14, une électrode négative pour des batteries secondaires à électrolytes non aqueux, et un électrolyte non aqueux.

16. Batterie secondaire à électrolytes non aqueux selon la revendication 15, **caractérisée en ce que** l'électrode négative pour des batteries secondaires à électrolytes non aqueux contient un matériau d'électrode négative capable de capter et de libérer des ions lithium.

17. Batterie secondaire à électrolytes non aqueux selon la revendication 15 ou 16, **caractérisée en ce que** la matière active positive est celle qui subit une baisse du volume du réseau cristallin lors de la libération de l'ion lithium accompagnant la charge de la batterie secondaire à électrolytes non aqueux, le degré de la baisse du volume du réseau cristallin étant jusqu'à 4 % sur la base du volume du réseau cristallin de la matière active positive telle que mesurée lorsque la batterie secondaire à électrolytes non aqueux est dans un état de fin de décharge,
**en ce que** le matériau d'électrode négative est celui qui subit une hausse du volume du réseau cristallin lors de la capture de l'ion lithium accompagnant la charge de la batterie secondaire à électrolytes non aqueux, le degré de la hausse du volume du réseau cristallin étant jusqu'à 6 % sur la base du volume du réseau cristallin du matériau d'électrode négative telle que mesurée lorsque la batterie secondaire à électrolytes non aqueux est dans un état de fin de décharge,

**en ce que** la valeur de la hausse du volume pour le matériau d'électrode négative est égale ou supérieure à la valeur de la baisse du volume pour la matière active positive dans une gamme ordinaire de charge/décharge pour la batterie secondaire à électrolytes non aqueux, et

**en ce que** la différence entre la valeur de la hausse du volume pour le matériau d'électrode négative et la valeur de la baisse du volume pour la matière active positive dans une gamme ordinaire de charge/décharge pour la batterie secondaire à électrolytes non aqueux est comprise entre 0 % et moins de 3 %.

FIG. 1

# FIG. 2

## FIG. 3

10μm

## FIG. 4

10μm

# FIG. 5

10μm

# FIG. 6

## FIG. 7

# FIG. 8

RELATIONSHIP BETWEEN CALCINING TEMPERATURE AND EACH OF TOTAL PORE VOLUME (SPECIFIC SURFACE AREA) AND CHARGE/DISCHARGE CYCLE PERFORMANCE

FIG. 9

# FIG. 10

RELATIONSHIP BETWEEN PEAK-INTENSITY RATIO AT 18° and 44°
IN X-RAY DIFFRACTOMETRY AND DISCHARGE CAPACITY

# FIG. 11

# FIG. 12

RELATIONSHIP BETWEEN HALF WIDTH AT 18° IN X-RAY
DIFFRACTOMETRY AND DISCHARGE CAPACITY

# FIG. 13

RELATIONSHIP BETWEEN HALF WIDTH AT 18° IN X-RAY
DIFFRACTOMETRY AND NUMBER OF CYCLES

NUMBER OF CYCLES

E1-1

E1-2

E1-3

E1-4

E1-5

E1-6

E1-7

BATTERIES PRODUCED THROUGH MIXING/CALCINING
BY RELATED-ART METHOD

◆ $LiMn_{0.5}Ni_{0.5}O_2$

◇ $LiMn_{0.5}Ni_{0.5}O_2$ MIXING/CALCINING

HALF WIDTH

# FIG. 14

RELATIONSHIP BETWEEN HALF WIDTH AT 44° IN X-RAY
DIFFRACTOMETRY AND DISCHARGE CAPACITY

# FIG. 15

RELATIONSHIP BETWEEN HALF WIDTH AT 44° IN X-RAY DIFFRACTOMETRY AND NUMBER OF CYCLES

RELATIONSHIP BETWEEN CHARGE AMOUNT AND LATTICE SPACING

a-AXIS, COMPOSITE OXIDE A1
a-AXIS, COMPOSITE OXIDE C1
c-AXIS, COMPOSITE OXIDE A1
c-AXIS, COMPOSITE OXIDE C1

a-AXIS LATTICE SPACING (nm)

c-AXIS LATTICE SPACING (nm)

CHARGE AMOUNT (Li EXTRACTION AMOUNT) (mAh/g)

BEFORE CHARGE

AFTER CHARGE

FIG. 16

EP 2 144 314 B1

RELATIONSHIP BETWEEN CHARGE AMOUNT AND LATTICE SPACING

FIG. 17

EP 2 144 314 B1

# FIG. 18

# FIG. 19

# FIG. 20

CHANGES IN POSITIVE-ELECTRODE
CRYSTAL LATTICE VOLUME (EXAMPLE)

# FIG. 21

FLUCTUATIONS IN NEGATIVE-ELECTRODE
CRYSTAL LATTICE VOLUME (EXAMPLE 6-1)

# FIG. 22

FLUCTUATIONS IN NEGATIVE-ELECTRODE
CRYSTAL LATTICE VOLUME (EXAMPLE 6-2)

# FIG. 23

FLUCTUATIONS IN NEGATIVE-ELECTRODE CRYSTAL LATTICE VOLUME (EXAMPLE 6-3)

CHANGES IN POSITIVE-ELECTRODE CRYSTAL LATTICE
VOLUME (COMPARATIVE EXAMPLE 6-1)

FIG. 24

EP 2 144 314 B1

# FIG. 25

CHARGE/DISCHARGE CYCLE CHARACTERISTICS

# FIG. 26

CHANGES IN INTERNAL RESISTANCE

# FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9231973 A
- US 5626635 A
- JP 3008793 B
- JP 3047693 B
- JP 3064655 B
- JP 2000058068 A
- JP 2000277151 A
- JP 10255846 A
- US 60040090 B
- JP 2000260480 A
- JP 2000260479 A

- JP 2000268878 A
- JP 2000353525 A
- JP 8037007 A
- JP 2000223157 A
- JP 2000294242 A
- JP 2000149942 A
- JP 10125319 A
- JP 11317224 A
- JP 2000003706 A
- JP 11312519 A
- JP 11307093 A

**Non-patent literature cited in the description**

- **OHZUKU, O. ; UEDA, A. ; NAGAYAMA, M.** Electrochemistry and Structural Chemistry of LiNiO2 (R3/m) for 4 Volt Secondary Lithium Batteries. *J. Electrochem. Soc.,* 1993, vol. 140 (7), 1862-1870

- **CROGUENNEC L ; DENIARD P ; BREC R ; BIENSAN P ; BROUSSELY M.** Electrochemical behavior of orthorhombic LiMnO2 : influence of the grain size and cationic disorder. *Solid State Ionics,* 1996, vol. 89 (1/2), 127-137